# EUROPEAN PATENT APPLICATION

(11) **EP 4 414 874 A1**
(43) Date of publication of application: **14.08.2024**
(21) Application number: 23199257.9
(22) Date of filing: 23.09.2023
(51) Int. Cl.: G06F 21/55, H04L 9/40

(54) **METHOD, PRODUCT, AND SYSTEM FOR NETWORK SECURITY MANAGEMENT USING A REASONING AND INFERENCE ENGINE**

(30) Priority: 10.02.2023 US 202318108383; 30.03.2023 US 202318128549
(71) Applicant: Vectra AI, Inc., San Jose, California 95128 (US)
(72) Inventor: Beauchesne, Nicolas, Honolulu, 96815 (US); Kazerounian, Sohrob, Brookline, 02446 (US); Finlayson IV, William Stow, Cherry Hill, 08003 (US); Lynn, Karl Matthew, San Jose, 95113 (US)
(74) Representative: Herre, Peter

(57) **Abstract**

Disclosed herein is an approach that includes providing a system for managing and expanding knowledge in a knowledge base. In some embodiments, the system comprises an expert system which performs a number of functions including data ingestion, application of a data retention policy, monitoring of a network system including deployments of detection signatures on the network system, response and alert management, posturing, and relevant automation. In some embodiments, the expert system interconnects with a war gaming engine to identify attack vectors to protected resources. In some embodiments, a collection of functions or modules is provided in place of the expert system - e.g., traditional programing techniques are used to provide functions or modules to perform similar processes using one or more function calls between the provided functions or modules.

## Description

### RELATED APPLICATIONS

The present application claims priority from U.S. Patent Application Serial No. 18/108,383 titled "METHOD, PRODUCT, AND SYSTEM FOR SOLVING ARBITRARY CONSTRAINT SATISFACTION PROBLEMS", filed February 10th, 2023, and from U.S. Patent Application Serial No. 18/128,549, titled METHOD, PRODUCT, AND SYSTEM FOR NETWORK SECURITY MANAGEMENT USING A REASONING AND INFERENCE ENGINE", filed March 30th, 2023, which is a continuation-in-part of U.S. Patent Application Serial No. 18/108,383 titled "METHOD, PRODUCT, AND SYSTEM FOR SOLVING ARBITRARY CONSTRAINT SATISFACTION PROBLEMS", filed February 10th 2023, which is a continuation-in-part of related to co-pending U.S. Patent Application Serial No. 17/711,811 titled "METHOD, PRODUCT, AND SYSTEM FOR NETWORK SECURITY MANAGEMENT USING SOFTWARE REPRESENTATION THAT EMBODIES NETWORK CONFIGURATION AND POLICY DATA", filed April 1st 2022, U.S. Patent Application Serial No. 17/711,850 titled "METHOD, PRODUCT, AND SYSTEM FOR GENERATING A SOFTWARE REPRESENTATION THAT EMBODIES NETWORK CONFIGURATION AND POLICY DATA OF A COMPUTER NETWORK FOR USE IN SECURITY MANAGEMENT", filed April 1st 2022, U.S. Patent Application Serial No. 17/711,868 titled "METHOD, PRODUCT, AND SYSTEM FOR ANALYZING A COMPUTER NETWORK TO IDENTIFY ATTACK PATHS USING A SOFTWARE REPRESENTATION THAT EMBODIES NETWORK CONFIGURATION AND POLICY DATA FOR SECURITY MANAGEMENT", filed April 1st 2022, U.S. Patent Application Serial No. 17/711,884 titled "METHOD, PRODUCT, AND SYSTEM FOR ANALYZING ATTACK PATHS IN COMPUTER NETWORK GENERATED USING A SOFTWARE REPRESENTATION THAT EMBODIES NETWORK CONFIGURATION AND POLICY DATA FOR SECURITY MANAGEMENT", filed April 1st 2022, and U.S. Patent Application Serial No. 17/711,903 titled "METHOD, PRODUCT, AND SYSTEM FOR GENERATING DETECTION SIGNATURES BASED ON ATTACK PATHS IN A COMPUTER NETWORK IDENTIFIED USING A SOFTWARE REPRESENTATION THAT EMBODIES NETWORK CONFIGURATION AND POLICY DATA FOR SECURITY MANAGEMENT USING DETECTION SIGNATURE TEMPLATES", filed April 1st 2022, which are hereby incorporated by reference in their entirety.

### BACKGROUND

Generally, mathematical and computational problems can either be solved through the application of general methods to a given problem class, or by using specific and even novel algorithms developed with a particular problem in mind. Examples of general problem solvers include methods like linear programming (which are used to maximize or minimize linear functions subject to constraints), or SAT Solvers (which are used to determine whether or not a formula in Boolean logic can be satisfied).

On the other hand, many types of problems are not readily formulated in a manner that allows for the use of a general solver - e.g., find the longest list of words such that no two words contain the same letter in the same position using a given dictionary of words.

General problem solvers, such as SMT (satisfiability modulo theory) solvers which extend SAT solvers beyond just Boolean logic, formulas involving real numbers, integers, lists, strings, etc., require the specification of a theory (formal axioms for the class in question) in order to be applicable.

One area of application that is of particular relevance is in the network security field. There, the vast majority of systems that exist today for monitoring network environments and generating alerts in response to instances of perceived cybersecurity attacks tend to operate by means of activity monitoring and subsequent pattern matching to identify anomalies and malicious signatures. These detection and response system have also benefited from recent advances in machine learning (e.g., deep learning) which yielded impressive results across domains as widely varying as speech and language, computer vision, and control. Machine learning models have also enabled advancements in many fields including network security. However, existing approaches to maintain network security using machine learning fail to account for the wealth of information represented by system data such as network configurations and network policies.

In contrast, machine learning used for maintaining network security attempts to model what is normal solely based on observing traffic on a network. Similarly, engineers try to represent what is normal by specifying what is abnormal (e.g., by creating signatures that capture or represent previously observed abnormal behavior).

However, the network configuration and network policy data can expressly describe what can be done within a network - e.g., by describing relationships between entities. This presents a wealth of information that might be leveraged to maintain network security. Unfortunately, current approaches fail to utilize the information provided the network configuration and network policy data.

Additionally, present approaches to network security are highly time intensive for administrators and rely heavily on the skill of the administrator to determine the best solution to address identified and potential issues.

Therefore, what is needed is an improved approach for providing network security.

### SUMMARY

The invention concerns a method, product, and system for network security management using a reasoning and inference engine. The invention is defined by the independent claims. The dependent claims concern optional features of some embodiments.

In some embodiments, the approach includes providing an expert system for managing and expanding knowledge in a knowledge base. The expert system may perform any number of functions including data ingestion, application of a data retention policy, monitoring of a network system including deployments of detection signatures on the network system, response and alert management, posturing, and relevant automation. In some embodiments, the expert system interconnects with a war gaming engine similar to the security management system discussed herein for collection of knowledge regarding a network system (e.g., a logical representation of the network system based on at least a network configuration or network policy data and possible vectors for attacks on the network system). In some embodiments, a collection of functions or modules is provided in place of the expert system.

In some embodiments, the approach includes use of a class of tools, known as fuzzers, developed for the purposes of automated software testing. The approach provided herein makes use of fuzzers as a means of finding solutions to arbitrary problems which have been restructured as computer programs. More specifically, a given problem is structured into computer code for a computer program such that input to the computer program represents a candidate solution to be tested. The input is provided to the computer program and the computer program is designed to crash if and only if the input corresponds to a solution to the original constraint satisfaction problem. By providing multiple different inputs, a solution space can be analyzed to identify any solution, or which there may be many or none, to the original constraint satisfaction problem in a programmatic manner.

Malicious external or internal actors generally gain a foothold within a network by stealing credentials from various hosts already authorized to access that network. For example, a network might include many different user accounts used from one or more hosts that are interconnected using one or more switches and connected directly or indirectly to one or more network resources. Such accounts are commonly managed using a network policy and a network system configuration. At a high level, the network policy represents the rights of groups to interact with, or access, various network resources to perform various actions such as creating, reading, updating, and deleting. For example, a human resources group might be allowed to access a server that includes information that is not otherwise accessible outside of the HR department. Each group might also be granted access to one or more other resources, (e.g., a printer/scanner in the HR department, an HR email address, etc.). In this way each group can be associated with a set of actions that members of the group are allowed to perform on different resources. Additionally, a network system configuration might comprise a collection of characteristics regarding various entities. Example entities can include computing devices, users, domains, group policy objects (GPOs), key vaults, subscriptions, tenants, resource groups, applications, virtual machines (VMs), groups, or organizational units (OUs), which may be represented in a network system configuration. In some embodiments, the network system configuration information specifies rights of and between respective groups and a network policy specifies which entities are members of each group.

In some embodiments, the network itself is an arrangement of electronically connected devices (either wired, wireless, or some combination thereof). For example, one or more switches and/or wireless receiver/transmitter devices are provided to connect the hosts and the network resources, a security management system, and storage. In some embodiments, the security management system is external to the network and may provide security management services to multiple networks.

In some embodiments, the security management system can ingest the network policy and the network configuration in order to form detection signatures using an approach that translates the network policy and network system configuration into a software representation (source code representation or executable compiled from the source code representation). Generation of the software representation will be discussed further below. Briefly the software representation comprises a collection of functions that represent different states of the network where actions taken or leveraged properties are reflected in the calling of a respective function for the corresponding state or property. This software representation can be used to actively determine possible, likely, or critical attack paths - e.g., by stimulating the software representation using a fuzzer to explore paths (a sequence of transitions between states) to reach states of interest (states frequently encountered) or high value states corresponding to identified entities. States of interest or high value states can be associated with one or more crash statements that may be executed subject to one or more conditions. In this way, not only can simply reaching a state be identified, but also or alternatively reaching a state using a path (sequence of state-to-state transitions) that may be indicative of abnormal or malicious behavior (e.g., privilege execution attacks). Additionally, global parameters may also be used to condition the execution of a crash statement (e.g., an external entity accessing a resource internal to the network when a global parameter indicates that a firewall is down). In contrast, current cyber-security products that make use of environment configuration information are generally limited to simple lookup tables and graphs. However, lookups and graph structures ultimately fail to capture the full logic of computing environment configurations such as when a potentially malicious activity is only possible when a global parameter has a particular value. For example, a network configuration of an active directory might be represented as a graph, with users, groups, and machines as vertices, and relationships between them as edges. However, conditions related to those edges or vertices are not readily representable in a graph structure - e.g., a graph cannot represent both an edge that is dependent on a precondition being met and at the same time an edge that is dependent on the precondition not being met, such as when an edge corresponding to membership in a group exists only after a deactivated user account has been re-activated. In contrast, representation of the network configuration as a computer program allows for the encapsulation of the data (e.g., usernames, groups, event names, etc.), as well as the logic and rules that define the space of actions in the environment. In essence, this converts the environment in an abstract sense into a state machine, with the ability to operate on arbitrary configurations, and where the state of the environment can be updated in response to the time-varying inputs or data in that environment. Furthermore, because the configuration of the network is represented in software, tools and techniques that are applied to software can be applied to test, verify, and search the configuration space of the network. Furthermore, in some embodiments, changes can be made to how the configuration is translated into a program in order to yield more optimal or different representations. Further details regarding the security management system will be discuss herein.

As discussed herein, a state may correspond to either a single entity or multiple entities (which may or may not be traditional computing resources such as data stores or rights management systems) that can potentially be compromised in an environment. That is, a state may correspond to any entity, whether logical, physical, or ephemeral, which represents something that can be used as a waypoint by an attacker in service of reaching a target in the environment, where the target may also be an entity. For example, a state may correspond to either a single entity or multiple entities that can potentially be compromised in an environment. The different states can be reached by transitioning from one state to another (e.g., by an attacker using one or more actions or properties to pivot from one state to another). Generally, sensitive states can be identified as high value states, which correspond to entities that if access or controlled by a malicious actor may reflect an elevated threat to another entity within an organization or correspond to a particular entity that has been identified for protection from attackers. These actions may be representable as a collection of one or more state-to-state transitions for which a corresponding detection signature can be generated that converts a candidate trigger (one or more transitions from one state to another and potentially one or more global parameters) into a detection signature using a signature template. In some embodiments, a detection signature comprises one or more atomic rules that can be deployed onto one or multiple detection engines which process incoming streams of events and allows for the detection engine to emit a detection signature when a matching event or sequence of events are found. In some embodiments, the detection signatures are generated using one or more signature templates that provides a framework for converting a corresponding transition from one state to another into a signature that detects those transitions.

In some embodiments, the network includes various mechanisms for capturing information regarding communications over the network including unique host identifiers, sources of communications, destinations for communications, the amount of data sent, the amount of data received, and the port(s) used for communication. The capture of this information might be accomplished using multiple distributed sensing modules (taps) located at different locations (e.g., switch(es), host(s), and/or at network resources). This information can be processes to identify relevant information including a source, a destination, a requested service, a corresponding protocol, whether a communication is a request or a response, the time of the communication, or any other relevant information. Usually, the information is retrieved from captured network packets at one or more network devices (e.g., switches, host(s), and/or network resources). In some embodiments, states or state transitions can be detected by analyzing at least the communications over the network. In some embodiments, one or more agents on one or more computing devices might operate to capture various events (e.g., windows system events, syslog, sys call trace, authentication log, network traffic, etc.) for analysis against the detection signatures. In some embodiments, the detection signature is generated based on the software representation and can be distributed to one or more locations. For example, various detection signatures might be distributed to respective hosts for local monitoring (e.g., of logs, application/system calls, system events, windows system events, windows system events, syslogs, sys call traces, authentication logs, network traffic, etc.). In this way different signatures can be distributed to corresponding devices within the network. In some embodiments, multiple different detection signatures can be generated to detect the same behavior in different ways or at different locations.

In some embodiments, the security management system includes storage, a configuration to software representation generator, a fuzzer processing instance, a deployment manager, and a detection signature detection controller, which could be provided together or separately or in any permutation thereof.

The configuration to software representation generator processes the corresponding network policy and network system configuration to generate a software representation of the network system that can be compiled and executed using inputs from a fuzzer. For example, the configuration to software representation generator ingests the network configuration and network policy data, distills causal relationships from the network configuration and network policy, and projects the causal relationship into an intermediate representation layer, which is to say that the relevant information is processed to determine interrelationships that exist between identified entities. Details of this process will be discussed further below.

When representing an environment configuration as software, tools from the theory of computation, programming language theory, software quality assurance, etc., become potentially applicable to the configuration newly represented as software. In some embodiments, a fuzzer processing instance can be used to generate data (e.g., vectors) that can be input into the software representation to determine respective paths that correspond to respective actions or properties leveraged that might be taken by users of the network system. Fuzzers are tools that mutate inputs to a computer program, in order to test its resiliency to errors. Commonly, fuzzers are used to test if variations in an input can result in a crash in the program. By identifying relevant states in the software representation (e.g., as high value states) a mutation engine such as a fuzzer can use seeds and other inputs to explore a software representation in the form of an executable. For instance, any state corresponding to an entity, and possibly one or more conditions (path based or based on global parameters), that is to be protected can be identified by a crash statement which may or may not be encapsulated within a conditional statement. These crash statements are then triggered when a fuzzer provides one or a sequence of inputs to the software representation that causes that crash statement to be executed. In response to the execution of a crash statement a crash report is captured which may comprise a full memory dump which may be processed to build a back trace. The back trace itself may comprise, or allow the determination of, all global variables (and whether those global variables changed during the execution) of the software representation as stimulated by the fuzzer along with the function calls and sequencing of those function calls. The seeds used by the fuzzer can be random, user-supplied, or previously generated by a fuzzer such as when a previous sequence or set of inputs that resulted in a novel or new code path being reached in the software representation is used as a seed for additional exploration. The seeds themselves can be represented as an input vector, either in full or in part, that gets parsed and consumed as a set of state-transition-state inputs and or one or more values for global parameters.

In some embodiments, the mutation process can be directed by encouraging candidate solutions that reach previously un-reached states of a program. In some embodiments, the fuzzer is repurposed to rapidly generate crash reports by treating the configuration-as-program (software representation) as a constraint satisfaction problem. For instance, if the software representation is based on data collected by ingesting an Active Directory configuration from an organization's computer network, the fuzzer can be used to determine whether or not an attack path exists whereby an attacker, starting at a particular host in the network with an initially compromised user-credential, can ultimately escalate their privileges to domain administrator. Identity snowball attacks such as these frequently allow attackers to iteratively elevate their privilege, until they ultimately reach their target. One way to represent the configuration as a program in order to answer this question is to structure the program to create a function for each entity (e.g., host, user, or service) in the system, where each of these functions can then make a call to other functions if the called function corresponds to an entity (e.g., host, user, or service) that can be compromised from the calling function. The question of whether or not an attack path exists between some starting entity to a high value state (e.g., a domain administrator), then becomes a question of whether or not a function representing the high value state (e.g., corresponding to a domain administrator), can be reached from the starting function representing the initial entity (e.g., host, user, or service) which may be determinable using a fuzzer.

Generally, fuzzers operate using one or more algorithms to determine what values to generate to stimulate a piece of software. For instance, a fuzzer might use random generation, a mutation engine, a concolic execution process, or a symbolic execution process to generate seeds and stimulate the software representation. Thus, fuzzers can be used to detect a sequence of state changes that could be used to reach a protected entity. For example, the software representation might include one or more crash statements that are triggered when a state representing a protected resource is reached and optionally subject to one or more additional conditions being met - e.g., credentials from a user account are used from a host to access the protected entity where that host is not previously associated with an account that has privileges to access the protected entity. When a crash occurs, debug tools can be used to capture the path that was taken to reach the protected resource by processing a memory dump in a corresponding crash report. This path information can be captured in a crash report at in storage which may also include summary data such as the number of times each crash statement is executed and the number of unique paths identified that triggered the respective crash statements. In some embodiments, the process identifies a portion of a stimulus applied to the software representation that resulted in a crash as a seed (e.g., a vector) for future fuzzing. For instance, if a new region not previously encountered is discovered, the path to that new region might be captured as a seed. This allows the fuzzer to focus the exploration on that region. Operation of fuzzers with regard to the software representation will be discussed further below.

The deployment manager processes the crash reports to determine what information identified in the crash reports should be associated with a corresponding detection signature(s). Essentially, the deployment manager can analyze the crash reports to develop rankings of some or all of the crash report data as represented by one or more state transitions which may be identified in a set of candidate triggers (e.g., list) to determine whether a detection signature should be generated for the corresponding state-to-state (STS) transition. Detection signatures for selected candidate triggers are created using signature creation templates. Further details will be discussed below. Briefly, each crash report generated as a result of a crash might be analyzed to identify one or more state-transition-state tuples representing state-to-state transitions where a first state is a state the attacker could be in, the second state is the state the attacker can transition to, and where the transition is represented by an action or property that can be used by an attacker to transition from the first to the second state (e.g., a specific user uses and remote desktop protocol access rights to connect to a specific server).

The operation of the configuration executable translator, the fuzzer processing instance, and the deployment manager can be managed by a security detection controller. For example, the security detection controller might initiate the process performed by the configuration to software representation generator (e.g., to generate an initial software representation or to update an existing software representation to reflect changes in the network), control the execution of the fuzzer processing instance, and control the generation of detection signatures by the deployment manager. In some embodiments, the security detection controller receives detection events from one or more deployed detection signatures and generates one or more alerts in response.

Some embodiment include a workload distributor and multiple fuzzer processing instances (e.g., multiple fuzzers as discussed above in regard to fuzzer). In particular, the workload distributor can instantiate multiple fuzzers processing instances that can each generate inputs for use in stimulating the software representation. For example, multiple fuzzer processing instances might be created to generate random inputs, to generate inputs based on one or more seeds with a mutation engine, use a symbolic approach to generate inputs, or a concolic execution process to generate inputs. Each fuzzer instance may be located on the same or on different underlying hardware. For example, a single fuzzer may be instantiated on each of a set of computing devices. Alternatively, different numbers of fuzzers may be located on different computing devices based on available resources (e.g., percentage values representing consumption of resources on available computing devices or based on other values such as the number of idle cores or virtual machines available. In some embodiments, the workload distributor issues one or more seeds to different fuzzer processing instances.

In some embodiments, the storage comprises a share directory where multiple fuzzer processing instances can collectively share data such as the seeds and generate a single repository of crash reports. In some embodiments, the workload distributor issues one or more seeds to different fuzzer processing instances from the shared data.

In some embodiments, a process comprises interrelated steps to generate and analyze network information, manage the creation of detection signatures, monitoring those detection signatures for activation, and processing detection events from detection signatures. Some embodiments may also include one or more of monitoring the network for policy or configuration changes, monitoring detection signatures for retirement, and analyzing the software representation to create event responsive detection signatures.

The process generally starts, when a software representation of the network is generated. This process will be discussed further below. Briefly, the approach identifies entities (e.g., resource that may be protectable) and generates functions that represent each entity as one or more states where transitions between states may occur based on one or more access rights or properties. Each function may be populated with a selection statement that corresponds to respective function calls, where the selection of a function call from within the selection statement is determined based on a corresponding access right, property input, or combination thereof, into the selection statement (e.g., a fuzzer might provide an input to the software representation that corresponds to one of the selection statements to cause a state-to-state transition).

In some embodiments, the network is monitored to detect policy or configuration changes. In the event that such a change occurs the process at can be used to regenerate the software representation. This is important, especially when a user's privileges have been revoked (e.g., a high-level employee leaves the company) because the network security management activities should reflect that revocation. In some embodiments, a detection of a change to the network policy or network configuration data may cause a complete regeneration of the software representation. In some embodiments, the change may be identified and the corresponding function or functions may be identified for removal from or modification of the software representation. In the event that the change in the network policy or configuration will result in the generation of a new function or modification of an existing function, one or more seeds can be identified in order to limit the subsequent processing of the software representation using a fuzzer to the changed functions (e.g., for crash report generation and or management of detection signatures for deployment). In some embodiments, changes to the software representation can be at least partially captured within the software representation in order to maintain and restore associations between collected information and current information. For example, if a change causes a particular state-to-state (STS) transition to no longer be possible (e.g., an access right is revoked) the corresponding transition might be commented out by the configuration to software representation generator. Similarly, a change that causes the restoration of a previously removed (commented out) STS transition might be implemented by uncommenting the previous commented section. Additionally, in some embodiments, whenever a modification results in the creation of a previously unidentified STS transition, that transition is added to the software representation and selectable using an input not previously associated with a different transition. In this way, changes to the network configuration data and network policy data do not cause a reshuffling of the approach that leverages use of commenting out no longer existing portions can be used to maintain consistency within the software representation to maintain the applicability of the previously generated crash reports, seeds, trigger candidates and any associated learning or rules to remain applicable. In some embodiments, crash reports generated for a previous iteration of the software representation can be replayed to validate whether that crash report corresponds to a currently valid path (potential attack path).

In some embodiments, the software representation is analyzed using one or more fuzzers to create crash reports. This process will be discussed further below. Briefly, entities are identified for protection. Corresponding functions and conditions are then identified for the entities identified for protection. Crash statements are then inserted into the identified functions. In some embodiments, execution of the crash statements is conditioned on one or more global parameters. Thus, when the process reaches that function corresponding to a protected entity and any corresponding conditions are met, a crash statement is executed. This causes the system to dump the memory state which can be collect in a crash report or processed to create a back trace for storage in a crash report of the activity that resulted in that crash (see Crash Reports).

In some embodiments, the crash reports are analyzed to determine what detection signatures if any should be generated to detect behavior corresponding to at least a subset of the crash reports. Briefly, processing of the crash reports may include any of removing loops from within a sequence of state-to-state (STS) transitions where the relevant state and parameters are the same at the start and finish, application of one or more rules, removal of STS transitions that do not have a matching detection signature template, expanding one or more groups of users/machines to their members, removing STS transitions that may correlate only to a known threat or known risk that a user does not want to detect (e.g., an Active Directory server syncing with another Active Directory server). After the initial processing, one or more rules are then applied to select for different STS transitions or sequences of STS transitions. For example, Application of the rules might be used to control a process to analyze the identified chains of events and select specific STS transitions (or sequences thereof) that are the most prevalent (e.g., using a ranking process based on the number of crash reports within which each STS transition or sequence thereof is identified). In some embodiments, once a particular state-to-state (STS) sequence is covered by a threshold number (e.g., 3) of detection signatures, that STS sequence is removed from further analysis for sequence generation (e.g., removed from a global list of STS sequences to be processed). In some embodiments, the STS sequence selection is stopped when a maximum number (threshold) of STS sequences or corresponding number of detection signature are identified, when each STS sequence (or corresponding entity) is covered by a threshold number of detection signatures, or some combination thereof. In some embodiments, STS transitions are ranked based on one or more metrics and a number of detection signatures are then generated using corresponding detection signature templates. These detection signatures may, for instance, specify the set of events that are most frequently identified as leading to a critical state in the environment as reflected in the crash reports. In some embodiments, the detection signatures identify singular actions, a sequence of actions, or repetition of the same action. Further details on the selection of candidate triggers for signature creation is discussed below. Once generated the detection signatures can be deployed at one or more appropriate locations within the network. In some embodiments, a single detection signature is generated for a corresponding behavior. In contrast, in other embodiments, multiple detection signatures are grouped together to detect a corresponding behavior. In some embodiments, activity may be detected using multiple different detection signatures that are aggregated together (e.g., logically linking detection signatures my making the activation of one detection signature dependent on the prior activation of another detection signature). In some embodiments, detection signatures may even be paired in a database such that when one signature is detected a verification can be performed as to whether the pair of that signature is also detected. Such mechanisms can be used to validate whether the corresponding detection signatures are operating correctly.

In some embodiments, detection signatures are monitored for retirement. There are various reasons that a detection signature is to be retired including when those signatures time or age out, and when they correspond to a trigger or resource that no longer exists in the software representation or network. Additional details are discussed below.

In some embodiments, detection signatures that have been activated are processed. Additional details will be provided herein. However, generally, the signatures are processed to determine if any alert should be generated (e.g., to an administrator), whether any automated action is to be taken (and potentially taking that automated action), and to determine whether additional resources should be directed towards entities potentially at risk by the behavior. Additionally, due to the atomic nature of the detection signatures it becomes possible to create a distributed ingestion engine, which runs on multiple machines or servers. For instance, signatures can be run on individual computers themselves (when the detection signature pertains to, for example, windows event log data, log-on events, windows system events, syslog, sys call trace, authentication log, network traffic, etc.), or alternatively can be run on sensors (e.g., a computing device that is solely dedicated to capturing and processing data to provide to the monitoring system) either on a customer network or in the cloud. The common format of the detection signatures allows for the ingestion function to be distributed across any number of machines or environments, where when a detection signature is activated and generates a detection event, a related log entry can be created and a unique identifier for the detection signature can be returned to an aggregation engine for further processing. For example, when a detection signature is activated, the approach at 207 may implement a process to deploy additional detection signatures logically between the triggered detection signal and one or more protected resources as determined using the software representation. In this way, when a potential threat is identified resources can be tailored to detect further intrusion or progress by a malicious actor towards compromising that resource. Further discussion is provided below .

In some embodiments, generating a software representation starts where data is ingested into the system in a form that is processible by the system and includes information pertaining to interrelationships between entities. For example, the network system configuration and network policy might be read into memory for processing by the configuration to software representation generator. In some embodiments, this process includes identification of the entities, the global parameters, and the transitions.

In some embodiments, the entities and interrelationships are represented. For example, the network system configuration and network policy might be parsed to generate a plurality of separate objects (State-Transition-State tuples) that represent interrelationships between entities. For example, lists generated might be used to generate a list of state-transition-state tuples that specify which STS transitions are possible - e.g., a relational database table might be generated that includes three or more columns where one column comprises the source state, another column comprises the destination state, a third column comprises a transition or property, and one or more other columns represent global parameter values that must be satisfied for the transition to occur. In some embodiments, the State-transition-state tuples might be represented in a set of commas separated values (e.g., a csv file). In some embodiments, the ingested data is converted into two sets of data, first a set of entities represented by that data (e.g., a list or table), and a set of relationships between those entities (e.g., a collection of three values, two of which are entities and one of which is a relationship between those entities). In some embodiments, each entity might comprise a computing device, user, domain, group policy object (GPO), key vault, subscription, tenant, resource group, application, virtual machine (VM), group, or organizational unit (OU), or any other entity which may be represented in a network system configuration. The relationships between entities might comprise access rights or properties that one entity can use to interact with another entity that may be identified based on the network system configuration and the network policy (e.g., "AddMember", "Admin", "AdminTo", "All", "CanRDP", "CanPSRemote", "Contains", "Delegate", "Execute", "ExecuteDCOM", "GetChanges", "GetChangesAll", "HasSession", "Link", "Member", "Owns", "RemoteControl", "ResetPassword", "SQLAdmin", "Write", etc.). To illustrate, "Contain" is a property that indicates the inheritance of a configuration, whereas "AdminTo" indicates an access right, while both "Contain" and "AdminTo" allow control over a target entity.

Once the entities and interrelationships are generated, they can be converted into a collection of interrelated functions, where each function contains a collection of function calls that are selectable based on a transition or property identified. The selection of respective functions call is to be based on inputs representing usage of an action or property corresponding to a transition to simulate an interaction. In some embodiments, the selection is based on one or more global parameters. In some embodiments, the set of function calls are embedded within switch statements where different functions are called to simulate different behaviors - e.g., identifying a corresponding from state and a corresponding to state that is reachable based on the corresponding transition or property.

In some embodiments, the process for generating a software representation includes calls to other states based on the relationships between entities. For example an approach to generate functions as discussed above where a function that is initially reachable as a starting point may not include a transition or property identification in the function call (e.g., SOURCE_STATE or SOURCE_STATE_Entry) and a function that is reachable from another function different from the root function is identified by SOURCE_STATE_TRANSITION/PROPERTY where that Entry identifies the transition or property used to reach that SOURCE_STATE_TRANSITION/PROPERTY.

The process starts at where a root function is generated. The root function essentially comprises a blank or default state that generically corresponds to all the entities in the network and where certain states may be identified as starting states that can be reached from the root function. However, the root function does not itself correspond to an entity to be protected.

In some embodiments, the entities reachable from the root function are identified (e.g., those that can correspond to starting states). For example, states corresponding to entities such as user accounts may be reachable from the root function because the first thing that a user, host, or service does is attempt to gain access to desired resources (e.g., using a user account to access an email server). In some embodiments, function calls are inserted into the root function where each function call corresponds to a state, a set of conditions, and is independently selectable (e.g., using a switch statement similar to those discussed above). In some embodiments, each function name for each function call is added to a list of functions to be processed.

In some embodiments, the function generation process for the remainder of functions is essentially equivalent. First, a function is selected for processing (e.g., from a list of functions to be processed that identifies the function name). The function call specified in the list of functions is used to generate a shell for the function. The corresponding state for that function (e.g., identified from the function call) and the states reachable from that function are identified at 315. For example, the functions reachable, and the corresponding transition or property utilized to reach a respective function, is identified from a list or other data structure that indicates the STS transitions (e.g., embodied in a plurality of State-transition-state tuples in a table).

In some embodiments, the functions that are reachable from the selected function are represented as one or more function calls selectable based on an input to a switch statement in the selected function. Each such function call is compliant with a specification that forms the function call (e.g., SOURCE_STATE_TRANSITION/PROPERTY). In the present example, each function call identifies a source state which is the state of the called function. Thus, each function represents a source state and possible destination states that can be reached from any particular source state where the destination states are identified in the function call as a source state. Logically, this is because each function is both a destination and a source. However, because the function call is intended to identify the state that is being transitioned to this is included in the function name and not the calling function. In some embodiments, each function call is processed to determine whether that function call is already on a list of processed or to be processed functions - and added to said list when not already processed or in the list.

In some embodiments, the functions may be interrelated such that one function might be reaching from multiple different paths which may or may not including one or more loops (e.g., sequence of STS transitions that reaches a particular state more than once).

In some embodiments, each entity reachable from the root might correspond to one or more conditions that must be met to reach said entity which may be represented in the select statement. In some embodiments a single state, or function, is used to represent each entity. In some embodiments, an earlier reached entity can be reached from a later reached entity. Such processing may result in different states (corresponding to different entities) being reachable from a current state subject to some modified conditions which may be reflected in an additional function call dependent on one or more different conditions. For example, a first user function is selected. That first user function might correspond to a user that is a member of one or more groups with corresponding group policies. These group policies that the user is a member of correspond to a set of function calls are then generated within a selection statement. For example, these group memberships might be usable to reach another host or service represented as a different function, and that host or service might also include additional rights or credentials which might be usable to reach the same or a different user function, possibly after modification of a relevant property (e.g., a change of rights) or to a user with a different set of rights - which might be representative of an elevation of or change of privilege (either malicious or otherwise). Similarly, some accounts might also be associated with other accounts - e.g., one user account might be usable to control another user account, or one group might be defined by membership in another group. In this way, multiple interrelationships can be mapped to these functions. Thus, the network system configuration and the network policy are be translated to generate a software representation that can be compiled and executed. In some embodiment, various global parameter can be generated to represent network wide configuration information, such as a firewall state. Furthermore, the switch statements can include conditional statement that depend on a global or local parameter.

In some embodiments, analyzing the software representation of the network to create crash reports starts when respective entities in the network are identified for protection. The entities might be identified based on a set of default entities types or rules (e.g., files servers, active directories, tokens services, or other authentication services), and are identifiable by parsing the network system configuration and the network policy. Additionally, a user might identify any entity that they desire to protect. In some embodiments, different resources (e.g., a server or account) that might be protected could be identified by a user. In some embodiments, a user may also be able to attribute a level of sensitivity of a resource. For example, a server holding crypto material, financial documents, or event specific user mailbox might be identified as being highly sensitive by a user.

Once the entities are identified for protection, crash statements are inserted in the corresponding functions. In some embodiments, execution of the crash statements is subject to one or more conditions. These conditions can be encoded within the software generated itself with the engine verifying whether it is possible to have multiples conditions that are all satisfied at the same time and a crash is achieved only when all conditions are satisfied. As discussed herein, the crash statements can be used to cause the capture of a crash report which may be processed to determine sequences of behavior that might result in the compromise of a resource.

In some embodiments, a state F might be associated with a crash statement. There are multiple ways in which a crash statement might be included. A first is to include a function that will always cause a crash once the function is reached. Additionally or alternatively, a crash may be conditioned on one or more inputs and included as part of a state representation that allows other STS transitions without crashing.

In some embodiments, a CRASHER function is a function that raises a SIGABRT. A crash statement may be inserted in any function and its executed may be dependent on any combination of current state, a called state, a global parameter, a previously called state, or any combination thereof. In some embodiments, a different function or signal might be raised. For example, any interprocess signal can be used to identify the "crash" and used to collect relevant information. In some embodiments, SIGABRT is used because it can be used to cause the creation of a process dump used for generation of the crash report. However, any other relevant technique may be used for this function.

Once the modified version of the software representation that includes one or more crash statements is created, it can be compiled to allow for execution thereof using one or more fuzzers to generate inputs. As discussed herein the functions can be passed one or more inputs in a function call, or receive one or more inputs from a data structure (e.g., inputs can be provided by passing a pointer to a called function or inputs can be provided by reading an input provided in an input stream. Regardless of how the input is made available to the function, the inputs are generated by one or more fuzzers and are used to evaluate each respective switch statement as appropriate when the modified version of the software representation is compiled to allow for execution thereof.

Fuzzers are tools that mutate inputs to a computer program, in order to test the programs resiliency - e.g., fuzzers generate various inputs in an attempt to crash a program. The mutation process can be directed, for example, by encouraging candidate solutions that reach previously un-reached states of program. In some embodiments, the use of the fuzzer on the software representation treats network security as a constraint satisfaction problem. For instance, the software representation can be used to determine whether or not an attack path exists whereby an attacker, starting at a particular host in the network (e.g., with an initially compromised user-credential), can ultimately escalate their privileges to a protected resource (e.g., a domain administrator). This question can largely be answered by determining whether or not an attack path exists between some starting state (e.g., a first function) and the protected entity as represented by a state having a corresponding crash statement (e.g., a high value state). Furthermore, by translating the configuration and its constraints into a program, application of a fuzzer enables querying and finding solutions to questions for which the program was structured. There is no requirement that a formal axiomatic system first describe the domain to which the solver is being applied.

In some embodiments, the process executes the software representation using a fuzzer to generate input for the software representation. In certain circumstance, the input from the fuzzer will not result in any functions being called. However, some inputs may result in one or more function calls which may eventually result in the software representing reaching and executing a crash statement. Upon execution of the crash statement a memory dump is generated and used to create a crash report - e.g., by directly storing the memory dump in the crash report or by processing the memory dump to determine the sequence of state transitions that occurred to reach the crash statement. In some embodiments, multiple fuzzers instances operate in parallel on the software representation - e.g., use copies of an executable form of the software representation.

In some embodiments, a determination is made as to whether a termination condition has been met for the fuzzer. The conditions might comprise any of a number of seeds identified, a number of executions since a seed was identified, a number of crashes captured, a ratio of based on a number of entities to be protected, a number of iterations since a new input or sequence of input has been identified in a crash report, a percentage of the software representation explored, a determination of a threshold convergence level (e.g., as reflected by a number of iterations since a new crash or sequence is encountered), or any combination thereof.

In some embodiments, the conditions for termination can be tied to the selection of a different fuzzing technique. According to some embodiments, the inputs to the software representation solely determine the code path executed (e.g., by means of conditions such as in if statements). The fuzzer then mutates this input, and generates alternative inputs that execute differing code paths. Such an organization allows for the input to be deterministically replayed so that the states previously visited can be revisited using a seed. Furthermore, by structuring the input such that it uniquely encodes a path through the code (where such paths represent candidate solutions), the fuzzer can be parallelized over arbitrary numbers of cores, processors, graphics processing units, and solvers, etc. Additionally, because the input defines the code path, sharing of partial solutions, or otherwise interesting seeds, can be done by sharing the input itself. No coordination or organization is needed between any of the parallel instantiations. In fact, the set of solvers operating in parallel need not even be of the same type. For instance, the fuzzers might comprise any of a randomized data generator, a mutation engine, concolic execution unit, or a symbolic execution unit. However, each approach has different resource requirements with the random approach being the least resource intensive and the symbolic execution approach being the most resource intensive. Thus, the process might initially operate using a randomized data generation approach. After a condition is met that approach might be switched to a mutation engine followed by concolic execution, and/or symbolic execution as determined based on the then current conditions. Finally, in some embodiments, the approach might include previously generated partial and/or complete solutions found during a previous iteration - e.g., such as when a configuration change occurs, where previous solutions that do not result in a crash may no longer be relevant and may indicate that the corresponding resource has been removed from the network. However, if it is determined that a fuzzer termination condition has been met, the process ends.

In some embodiments, new seeds are capture when a new state is discovered as a result of the stimulus from the fuzzer. The seeds may be stored in seeds which may be accessible by multiple fuzzer instances. As will be discussed further below, the seeds can be used by the fuzzers to guide the fuzzers to explore regions of the software representation that are logically beyond the seed.

In some embodiments, fuzzer processing of the software representation of the network is performed to create crash reports. The process starts when a set of current fuzzer metrics are identified. For example, the fuzzer metrics might comprise any of the following: a number of iterations, a software representation coverage percentage, number of crashes reached, an average number of routes to each crash identified, a number of iterations since last crash, trend data for any of the above, a number of execution cycles since a new path or crash has been found, or some combination thereof.

In some embodiments, a fuzzer algorithm is selected from a set of available fuzzer algorithms. For example, the fuzzer algorithms could comprise random, mutation, concolic, or symbolic fuzzing approaches as discussed herein. Generally, each algorithm will require differing amounts of resources for respective iterations. Because of this, each fuzzer algorithm may be more ideal given one set of conditions vs another fuzzer algorithm. For instance, a random algorithm likely has the lowest resource requirements. Thus, an initial selection of a random algorithm may provider the greatest amount of discovery of the configuration space for the least amount of processing resource. However, the productivity of a purely random approach tends to drop off after a period of time. At which point another algorithm might be selected such as a mutation algorithm where when new regions are discovered the mutation engine can use a seed to focus exploration on those regions. A symbolic approach might be used prior to the concolic approach where a range of possible inputs are used to identify a valid subset thereon - e.g., a symbolic approach might keep different values and their relationship in a pool of all possible values to achieve a specific state which may be executed using a parallel processing approach and seed sharing. A concolic approach might be used to inject a known value to reach a specific know state in the software representation and then additional variation is then applied for further exploration from the known state - e.g., a concolic approach might be used to identify seeds to use in the same or other fuzzers. In some embodiments, multiple fuzzers are distributed across a plurality of different processing resources (e.g., separate cores, central processing units, graphics processing units, memory, and storage), where each fuzzer may be operating using the same or different fuzzer algorithms.

Once the approach is identified the process continues when the fuzzer output is generated using the selected fuzzer algorithm(s). In some embodiments or algorithms, a seed may be applied. In some embodiments, the seed comprises a vector that represents one or more input values that can be input into a software representation. The seed or an input vector might further comprise a first portion corresponding to global parameters and a second portion corresponding to actions or properties that might be used to cause one or more state transitions on the entities in the network. These global parameters may correspond to one or more conditional statements which may render different entities reachable (e.g., if a firewall is off then additional entities/functions might be reachable). In some embodiments, this sequence and any corresponding global parameters are input into the compiled software representation. The compiled software then executes by performing a plurality of evaluations to determine which functions to call based on the input values. In some embodiments, the output of the compiled software representation is solely dependent on the input from the fuzzer.

In some embodiments, the execution of the software representation is monitored. In some embodiments, a single input is provided to the software representation where that single input may cause a crash. If a crash is caused it is capture as discussed above. Additionally, if a state change is identified that corresponds to a state not previously discovered, the sequence of inputs that lead to that state change may be captured in the form of a seed which may later be provided. Additionally, when multiple fuzzers are supported, the approach may maintain seeds in a shared storage structure (e.g., storage embodied as a shared directory). In some embodiments, the fuzzer may generate an input separately where a single input is provided, followed by an additional input in an input stream when no crash is detected. Thus, the approach can present as a loop where, an input is provided, then another, and another, and so on until either an iteration limit is reached or a crash occurs. In some embodiments, the fuzzer generates a single input (e.g., a vector) which may correspond to any number of sequential operations, and where one area of variation generated by the fuzzer is the number of sequential operations to which the fuzzer output corresponds.

In some embodiments, fuzzer metrics are collected and updated. This may include updating any of the fuzzer metrics discussed herein. Additionally, the fuzzer metrics may be used as discussed above to determine whether the fuzzer algorithm may advantageously be changed by returning the process.

In some embodiments, a first portion of an approach for managing detection signature deployment comprises a process for determining whether a detection signature can be generates for the corresponding candidate trigger.

In some embodiments, the process states at where one or more entities are identified for monitoring. In some embodiments, this merely comprises all entities identified. However, in other embodiments, the entities comprise a subset of the entities identified. For example, a user might decide to initially roll out protection only for Active Directories. Thus, the user could select or otherwise identify any active directories for monitoring. In addition, this approach can be useful for focusing detection resources where they are perceived to be more useful. For example, if a potential breach is identified as being in progress (e.g., because an actor has completed a subset of the steps that would enable that attacker to reach a protected entity) the current state reached by the attacker, or a sequence of actions used or necessary to reach that state could be captured as a seed. That state or seed could then be used to analyze the software representation to determine resources that are reachable from that state including a minimum distance required (distance here being a number of STS transitions corresponding to function calls). Those identified resources might then be analyzed to create a set of detection signatures that provide further protection. This could also be combined with further exploration of the software representation using one or more fuzzers as discussed above. In some embodiments, instead of using a seed-based approach, the software representation can be configured to have a starting state that is at the corresponding state (e.g., the state corresponding to a potential breach that is in progress) and that has the same global and local parameter values.

In some embodiments, once the entities to be protected are identified corresponding crash reports are identified and processed into one or more candidate triggers. For example, a single crash report might comprise any number global or local parameters (and possibly changes thereto) corresponding to one or more function calls in the software representation. Any combination of the global parameters, local parameters, or state-to-state transitions can be selected as a candidate trigger, whether comprising a single state-to-state transition or multiple state-to-state transitions. For example, a sequence corresponding to three state-to-state transitions (e.g., from a1 to a2, a2 to a3, and a3 to a4 in that order) could be used to generate a number of candidate triggers by capturing the individual transitions or by capturing a sequence of transitions (e.g., any of {a1 to a2 to a3 to a4}, {a1 to a2 to a3 1, {a1 to a2 and a3 to a4}, f a2 to a3 to a4}, {a1 to a2}, {a2 to a3}, or {a3 to a4}). In some embodiment, each STS transition might be associated with one or more global parameters which must be matched (to satisfy a condition) to make any particular STS transition possible. In some embodiments, a threshold number of STS transitions might be required for each trigger candidate (e.g., 3). In particular, in some circumstances, as the number of STS transitions increases the likelihood that detection of corresponding activity is malicious also increases. Thus, in some embodiments, a threshold number of STS transitions might be required for each candidate trigger (e.g., threshold number of STS transitions in a sequence).

In some embodiments, the candidate triggers identified are then processed using an inner and outer loop. In some embodiments, a first or next corresponding candidate trigger is selected. Once selected, the candidate trigger is analyzed to determine whether the candidate trigger corresponds to a transition that can be detected in the environment. In some embodiments, this comprises determining whether a detection signature template exists that can detect the corresponding transition for the entities represented by the candidate trigger. If the candidate trigger can be implemented as a detection signature as determined based on the existence of a matching detection signature template, then the process continues to add the candidate trigger to a list of implementable candidate triggers. In some embodiments, if only a portion of a candidate trigger is determined not to be implementable, the candidate trigger is only added to the list of implementable candidate triggers if a threshold number of STS transitions determined to have corresponding detection signature templates. In some embodiments, one or more STS transitions are whitelisted to avoid further use. In the event that a white list is implemented, the white list is used to identify matching candidate triggers where those matching candidate triggers are excluded from the list of implementable candidate triggers. In some embodiments, detection signature templates that are unreliable or otherwise difficult to implement (e.g., the require consumption of too much resources, require access to a device that is not accessible, or then provide inconsistent detection) are removed from the set of detection signature templates used to determine whether a particular candidate trigger is implementable. Finally, if there are additional candidate triggers to be analyzed, the process returns to the beginning of the loop. Otherwise, the flow proceeds to a trigger selection process.

In some embodiments, all candidate triggers that can be used to generate a detection signature are generated and deployed. However, in some embodiments, the number of detection signatures deployed at any one time may be limited to manage resource consumption of the security processes and latency of the time to process network events to determine whether they trip a detection signature. Some embodiments, include an approach to rank the candidate triggers to allow for selection of a limited number of candidate triggers and thus the generation of a limited number of detection signatures.

In some embodiments, the approach starts when the candidate triggers previously identified (e.g., as discussed above) are evaluated. Candidate trigger evaluation may be performed in any number of ways. For example, candidate triggers may be evaluated based on any metrics such as a number of protected entities (determined based on corresponding states) that are reachable from the last state of the candidate trigger, a logical distance to a protected entity (e.g., minimum number of STS transitions to reach a state corresponding to the protected entity), a number of other candidate triggers or corresponding crash reports that share the same candidate trigger, minimal coverage level of an entity identified for protection, minimal depth of STS transitions per trigger (e.g., minimum number of states traversed to minimum number of STS transitions), prevalence of occurrences in the environment, deployment difficulty (e.g., where a trigger might be difficult to deploy due to encryption of relevant information or data obfuscation), or any combination thereof. In some embodiments, actual or inferred counts or frequencies might be generated (e.g., based on historical triggering data). This can be used to avoid the selection of a candidate trigger that would correspond to a detection signature that would be constantly tripped.

The candidate triggers may be processed on an entity-by-entity basis, or as a whole, or some combination thereof. The process starts when a number of best ranked candidates are selected. In the case of processing the resources as a whole, a number of the best ranked candidate triggers are selected. However, while processing the candidate triggers as a whole allows for leveraging of trigger candidate STS transition overlap it does not guarantee that each protected entity is associated with a minimum number of detection signatures or candidate triggers. When the individual entities are processed separately, the best ranked candidate triggers are selected for each respective entity (e.g., candidate triggers that were identified from a crash report corresponding to the respective entity). For example, the candidate triggers may be processed first by selecting the best candidate triggers for each respective entity (e.g., the best 25 as ranked based on the number of crash reports including the corresponding sequence of STS transitions). In some embodiments, a selected candidate trigger for one entity might overlap with some or all of the selected candidate triggers for another entity - e.g., due to one or more shared routes to the entities as represented by the software embodiment of the network. In some embodiments, once each individual entity has a minimum set of candidate triggers selected, a second pass can be performed to select the best overall candidate triggers. Overall candidate triggers may and likely will overlap with at least some of the candidate triggers selected for other entities.

In some embodiments, the best overall candidate triggers might be selected first followed by selection of candidate triggers for respective entities. In some embodiments, the candidate triggers selected can be selected only once. For example, the overall best candidate triggers are selected (e.g., number selected = x * the number of entities to be protected), and then candidate triggers selected for respective entities are selected that do not overlap with the overall best candidate triggers. In some embodiments, an enforcement mechanism is provided to force candidate triggers selected for one entity not to overlap with candidate triggers selected for other entities. In some embodiments, a relative importance (e.g., weight) might be applied to each entity to be protected and used to determine a number of candidate triggers or detection signatures to be allocated. For example, a maximum number of candidate triggers or detection signatures might be identified from which a portion is allocated to protection of each entity that is proportional to each entity's relative importance. In some embodiments, the relative importance is inversely proportional to the number of STS transitions, or sequences thereof, selected for generation of detection signatures.

Once candidate triggers are selected, they can be converted to one or more deployment signatures. This process is discussed further below. Briefly the candidate triggers are mapped to their corresponding actions or properties which are then used to select one or more detection signature templates that can be tailored to detect the indicated activity when deployed at a corresponding location - e.g., within a host in the network. Finally, the generated detection signatures are deployed at corresponding locations.

In some embodiments, a second portion of an approach for managing detection signature deployment ranks candidate triggers based on one or more metrics, selects a number of best ranked candidate triggers, generates deployments signatures, and deploys the generated deployment signatures. However, in contrast to the above approach, the approach implements a looping process that ranks at least a subset of the candidate triggers based on what candidate triggers have already been selected until a maximum number of candidate triggers are reached. For example, candidate triggers may be ranked based on at least a number of protected entities, or paths there to, that might be compromised using a state-to-state transition (e.g., a state-to-state transition or sequence thereof that may be used to compromise a protected entity).

In some embodiments, monitoring the network using detection signatures includes generating detection signatures that detect a single state-to-state transitions or to detect a group or sequence of state-to-state transitions. In some embodiments, detection events from one or more detection signatures may be aggregated to determine whether to trigger a responsive event (e.g., alert or automated action).

In some embodiments, for each candidate trigger a processing flow is initiated. In some embodiments, the candidate triggers are processed sequentially using a single processor. In some embodiments, multiple different processors can process different candidate triggers in parallel. This allows the processing burden to be distributed and the time to complete the signature generation process to be decreased.

In some embodiments, a selected candidate trigger is processed by first determining one or more transitions or properties used to cause one or more state-to-state (STS) transitions in the selected candidate trigger (e.g., the STS transitions in the candidate trigger can be identified). For example, for each STS transition any of a protocol, feature, service, source, destination, property, transition is identified. In some embodiment, each transition may be associated to one or more detection signature templates.

In some embodiments, the process searches the detection signature templates to identify one or more templates that correspond to the candidate trigger. Generally, a signature template is cookie cutter security product signature where a number of fields are to be populated with information corresponding to the STS transition(s) represented by the candidate triggers. For example, a first field might comprise the transition, a source type (e.g., user, machine, or GPO) and possibly a source identifier, destination type (e.g., a user, group, or machine) and possibly a destination identifier. The template itself, once populated, represents a signature to be deployed in one or more security products. For example, a first template might correspond to a first way to detect the corresponding action or use of a property to cause a state change and a second template might correspond to a second way to detect the corresponding action or use of a property to cause a state change. For instance, if a candidate trigger is defined as user: "bob" -> RDP -> server: "Finance" at least three different detection signatures might be generated. A first detection signature that operates on network traffic - a detection signature that identifies an RDP (remote desktop protocol) communication for user "bob" where the destination server is "Finance". A second detection signature that operates on authentication log data that identifies the source as "Finance" and the user is "bob". A third detection signature that is implemented at an endpoint detection and response (EDR) agent where the user context is "bob" and a TCP flow to "finance" is identified. In some embodiments, the candidate trigger corresponds to a group or sequence of actions, where multiple templates may be combined in a single detection signature or where separate processing logic may be implemented to determine whether an action is necessary to address a one or a combination of detection events from a set of deployed detection signatures.

Once the corresponding detection signature or detection signatures are found, the detection signatures are duplicated and populated with the corresponding information. For example, the source and target state information are input (e.g., this might comprise a source IP address and a destination IP address, a characteristic such as group membership or another identifier). In some embodiments, the detection signature template is also processed to include one or more conditions to be met to determine whether the detection signature should be triggered. In this way, detection signatures are generated that are ready to be deployed.

A discussion of example detection signatures and templates follows according to some embodiments. Generally, a detection signature template is written by one skilled in the art to detect a potentially relevant event indicative of the corresponding transition or property begin detected. Such detection signatures templates may be maintained in a library of detection signature templates which may be further cataloged and classified.

In some embodiments, each detection signature template will include an identifier ("ID"), a specification of the corresponding property or transition being used, information that directly specifies or can be used to determine a type for the detection signature template, and a pattern to be matched. In some embodiments, the "ID" value is unique to each template and can be used to log triggering events (e.g., each log entry is identified by the "ID" and the corresponding pattern match). In some embodiments, an instance identifier (e.g., Instance_ID) is be provided either, in addition to the existing ID, appended to the detection signature template (e.g., more specifically to the existing ID EXISTING_ID-APPENDED_ID), or as a replacement ID (e.g., the Instance_ID replaces the detection signature template ID). In some embodiments, the type of the detection signature template might be specified within the detection signature template (e.g., In a "Type" parameter), in a dataset associated with the detection signature template (e.g., in a relational database table entry that associates the detection signature template ID with a corresponding type identification), or determinable based on information within the detection signature template (e.g., based on a data source). In some embodiments, the type corresponds to a deployment location classification (e.g., on a network, at a source, at a destination or endpoint, at an authentication service).

As discussed herein, detection signature templates can be maintained for different transitions or properties. A non-exhaustive list of transitions/properties might comprise any of the following: "AddMember", "Admin", "AdminTo", "All", "CanRDP", "CanPSRemote", "Contains", "Delegate", "Execute", "ExecuteDCOM", "GetChanges", "GetChangesAll", "HasSession", "Link", "Member", "Owns", "RemoteControl", "ResetPassword", "SQLAdmin", or "Write". In some embodiments, detection signature templates might be divided into different types as discussed above based on at least the type of information they are used to process (e.g., network detection signatures, authentication detection signatures, source detection signatures, endpoint detection signatures). In some embodiments, a single transition or property might be associated with multiple different detection signature templates (e.g., detection signature templates of different types or detection signature templates that are of the same type but detect the transition or property in a different way). Using our example of account "bob" using RDP to access a target server, a detection signature instance might be generated from respective detection signature templates to detect the RDP activity in different ways. For instance, a first detection signature that operates on network traffic - a detection signature that identifies an RDP (remote desktop protocol) communication for user "bob" where the destination server is the "Target server". A second detection signature that operates on authentication log data that identifies the source as "Target server" and the user is "bob". A third detection signature that is implemented at an endpoint detection and response (EDR) agent where the user context is "bob" and a TCP flow to "Target server" is identified. A fourth detection signature that operates at the source using windows host eventing.

In some embodiments, a detection signature template includes a protocol field that specifies a corresponding protocol over which the access right or property can be utilized. In some embodiments, the protocols may include traditional communication protocols and other security or monitoring protocols. For example, the protocol might be any of a communication session detected from a packet on a network, a windows event, or any other any source or destination events that have a specified protocol for management (e.g., logging, notification, etc.).

In some embodiments, the detection signature template includes a pattern that provides a set of additional information that must be matched in order to cause the activation of the detection signature. For instance, the pattern might specify one or a set of protocols, one or more entities that utilize that protocol (e.g., a source or destination). In some embodiments, the pattern corresponds to specific entities (e.g., hosts or accounts) or information corresponding to those entities (e.g., IP address). In some embodiments, one or more entities might be represented by group membership or multiple entities (e.g., in a list or sequence). For example, a list or reference to a list (e.g., based on a group identifier) could be provided in a populated detection signature template and used to cause the output of a corresponding alert when corresponding preconditions are met (e.g., the type of transition or property is identified at a corresponding location). In some embodiments, a single detection signature template might include multiple different patterns, which when detected in combination or separately may be used to trigger a corresponding alert (e.g., host pattern, network pattern, authentication pattern, or EDR pattern).

In some embodiments, processing activated detection signatures using the software representation starts when a triggering event is detected (e.g., an event generated when a detection signature identifies information matching the detection signature). For example, a network packet is processed and determined to match a detection signature, which causes the generation of a notification that the detection signature was triggered. In response, a triggering identifier is determined. For example, the triggering identifier might be determined based on an identifier passed from the detection signature template to the detection signature instance, and passed to the process via a triggering event. In some embodiments, the detection signature instance includes an instance identifier (which may comprise a concatenation of the identifier from the template and an additional template) which can be used to determine the specific conditions met. In some embodiments, the specific conditions that satisfied the detection signature are provided as part of the triggering event.

In some embodiments, a log entry is generated for the triggering identifier in an aggregation data structure. For example, a log might be organized as a set of sequential data where each entry is placed at the beginning or end of the log to maintain a sequencing relationship between log entries. In some embodiments, the log entries might comprise a tabular representation for a corresponding time period. Each log entry identifies the detection signature corresponding to each triggering event, any relevant values, and a time of occurrence.

In some embodiments, a determination is made as to whether the triggering identifier is a member of a group or pattern of triggering occurrences. For instance, a sequence of state-to-state transitions might be captured using multiple detection signatures that individually detect one state-to-state transition of a sequence of state-to-state transitions. In some embodiments, the group or pattern membership might correspond to multiple patterns in a group - e.g., where a first pattern proceeds a second pattern or where the first and second patterns are both indicative of a risk of compromise to the same resource.

In some embodiments, the corresponding alert levels are determined. In some instances, no alert is generated (e.g., only the logging activity is performed). In other embodiments, one or more alerts are generated. For instance, the alert level is determined solely based on the single triggering event without consideration of aggregated events or repeated occurrences of the same or related occurrences. In some embodiments, an alert level is determined based on repeated activity represented by the same triggering event. For instance, three occurrences of the same activity may correspond to consistent bad behavior and thus a corresponding alert might be generated based on the number of the occurrences. In some embodiments, an alert level is determined based on group or pattern activity. For example, a pattern may be detected or partially detected corresponding to the triggering event e.g., the triggering event comprises a subset of a pattern or is part of a group. In some embodiments, each alert level is determined independently (e.g., based on a sequence of detection signature instance identifiers).

However, any alerts that are determined are processed to determine which if any should be issued (e.g., at the determined level). In some embodiments, all alerts are issued. In some embodiments, only the highest-level alert is generated (e.g., an alert generated based on a repeated activity has a higher level than an alert generated based on a singular action, and an alert generated based on group membership or a pattern of activity has the highest alert level). In some embodiments the alerts may be combined into a single alert to be provided together. The alerts may be transmitted using any combination of email, text message, recorded audio message, or prompt on a user interface. In some embodiments, automated actions are performed. For instance, password resets, shutdown, or lock out of accounts or resources.

In some embodiments, a seed corresponding to a triggering event is identified. In some embodiments this may be combined with or comprise the determination of the triggering identifier. That seed then might be associated with authorization of additional detection signatures for threat detection response. For instance, a number of additional detection signatures responsive to the triggering event are authorized for generation. In some embodiments, an entry point or a set of global parameter values are identified for use in place of a seed.

In some embodiments, the software representation is analyzed to generate crash reports that correspond to attack paths from a state identified by a seed using any of the approaches disclosed herein. For example, the seed might be used as an input to the fuzzer process to initiate additional exploration of the configuration as represented by the software. Alternatively or additionally, any protected entities reachable after the seed can be identified and additional candidate signatures for those resources can be generated. Finally, the generation and deployment of threat responsive detection signatures generated based on candidate triggers that were identified is managed using any of the techniques disclosed herein.

Some embodiments, include monitoring triggers for retirement. Computer networks are highly dynamic environments and as a result security tools should be capable of adjusting to changing conditions, which as described herein may include retirement of detection signatures for various reasons. Generally, the approach disclosed herein creates detection signatures that represent possible actions on a network or sequences thereof. These actions while are possible due to the various policies parameters of the computing network. These actions may be leveraged by an attacker to gain access to one or more protected entities (e.g., computing resources or services on a network). As a result, indiscriminate creation of detection signatures will likely generate noise that will make it difficult to identify malicious activity. Some embodiments, provide various tools to manage detection signatures and to minimize noise in event reporting.

The process starts when a retirement processing trigger is received. This trigger might be generated in response to an identification of a change in the configuration of the network, a periodic signal, a timer, a minimum or maximum threshold number of triggering events, an occurrence of an event of identified for responsive processing, or any combination thereof..

For example, a process is executed that determines whether any detection signature solely corresponds to a non-existing entity or triggers (e.g., no relevant resource is currently associated with the detection signature). This might be determined by processing the detection signature to verify that the detection signature corresponds to a matching STS Transition as represented by the crash reports or candidate triggers. In some embodiments, the matching STS transition is identified by processing the software representation in a source code format (e.g., to determine whether all references to a corresponding function call have been removed or commented out) or as an executable (e.g., but determining whether the STS transition can be triggered using one or more inputs). In some embodiments, a mapping structure is maintained that maps each detection signature to one or more corresponding crash reports which can be used to traverse the software representation to determine whether the corresponding functions and transitions still exist. Similarly, the same techniques can be used to identify detection signatures that no longer correspond to an entity that is identified for protection.

In some embodiments, a detection signature might age out or time out. For example, a detection signature might be generated having a specified age limit. Once that age limit is reached (e.g., based on a corresponding expiration of a time period), that detection signature is automatically removed. In some embodiments, a detection signature might time out. In some embodiments, time out occurs when a detection signature is not triggered within a given time period (e.g., as determined using a duration and by processing a log to determine whether that signature has been triggered within the given time frame).

In some embodiments, detection signatures that corresponding to an apparently no longer active intrusion even may be identified. For example, event responsive detection signatures can be identified using a list, a plurality of database entries, or within each respective detection signature. Such signatures can be identified for removed by a user or based on one or more rules corresponding to the event responsive detection signatures. For instance, one rule might specify that if no event responsive detection signature or a particular event responsive detection signature is triggered within a given time frame, one or all of those detection signatures might be identified for recall.

In some embodiments, signatures that are overly active are identified (e.g., signatures that are frequently triggered by presumably non-malicious behavior). It is likely that much of the traffic in a computer network corresponds to activities that have a low likelihood of being malicious. For example, most employees will regularly access company email systems, and internal communication tools (e.g., Slack). As a result, detection signatures that are frequently triggered may have little value. Such triggers may be identified for recall to conserve processing resources associated with the detection signatures. Additionally, a user might also manage the detection signatures to remove or whitelist activities that are so common as to be essentially meaningless. Such white lists may be propagated back to the candidate trigger selection processes to avoid reintroduction of corresponding signatures. Additionally, another approach to avoid deploying overly active detection signatures is to specify increasingly larger minimum sequence lengths for use in the candidate trigger selection process.

In some embodiments, the candidate triggers corresponding to currently used detection signatures are identified and re-ranked to allow for selection of detection signatures corresponding to a number of lower ranked candidate triggers. Finally, any detection signatures identified for retirement are processed and recalls are issued for those signatures.

In some embodiments, the approaches provided herein can be used to provide a solution to a problem as a program. For instance, in contrast to the normal use of a fuzzer, the approach provided herein intentionally introduces 'errors' into code, so that the fuzzers ability to find unexpected behavior can be used to solve problems. For example, if we have the problem of choosing 3 numbers (represented by variables x, y, z) such that x + y = z.

Normally, a fuzzer will repeatedly generate inputs which are used to execute the program, by way of an entry function used by the fuzzer, which in turn calls the program that represents the problem to be solved. The program then parses the first three values into variables x, y and z. Note that while the pseudocode above does not reflect it, the input can be parsed from their bit values into any format depending on the problem in question, including integers, floats, strings, arrays, etc. Next, the program tests whether or not the conditions for a solution of the problem have been met (i.e., does x + y = z), and if the conditions have been met the program will crash. In this way, the fuzzer can produce inputs to test the program indefinitely, or until one or more solutions to the problem have been found as indicated by a crash.

In some embodiments, the fuzzer will make random guesses at what the input should be, proceeding until it generates crashes. This can potentially lead to a large number of iterations. In some embodiments, the fuzzer will mutate inputs in a way that increases the chances of reaching novel parts of the code (e.g., lines of code, branch points, paths, etc.) using coverage-guided fuzzing. Generally, finding novel code paths in a software representation makes it more likely to encounter unexpected or unintended behaviors - or in the present example a result that meets the indicated condition(s). In some embodiments, the fuzzer uses a genetic or evolutionary algorithm which has an objective function that rewards finding previously undiscovered points in the code. In some embodiments, code is structured such that novel branch points are reached for ever improving solutions.

One example coverage guided fuzzing might be as follows where there are a number of methods to make use of coverage guided fuzzing. In some embodiments, our process does so by structuring code such that more and more branch points (or, more generally, any code constructs that are considered as increasing coverage by the fuzzer) are reached as the inputs being tested move increasingly closer to a solution. Extending the example discussed above, one approach includes adding branch points to the programmatic representation that get counted as increasing coverage. For example, a series of conditionals testing how close the inputs are to solving the problem.

The function from the previous example is restructured to introduce conditionals that test the magnitude of the difference between x+y, and z (i.e., abs(x+y - z)). Here, if the fuzzer attempts an input where x+y is more than 100 away from z, the program cannot proceed past the first if statement. In contrast, if the inputs that are less than 100 away from z, execution can proceed past the first condition, and can now test whether or not the selected inputs x+y are within 10 of z. By introducing these conditions, the fuzzer is "encouraged" to find inputs that are more likely to enable it to reach additional coverage points. Because these coverage points were designed to only be reachable when the inputs are converging to a solution, the inputs being generated by the fuzzer will be directed towards solving the problem.

A procedure for generalized constraint satisfaction problems, e.g., any given constraint satisfaction problem (CSP), the N variables under consideration may be defined as X={x1, x2, ..., xn}, where each variable can be restricted to a particular domain defined by D={d1, d2, ..., dn}, such that each variable xi can only take on values in the non-empty domain di. The M constraints under consideration are defined as C= { c 1, c2, ..., cm}. The CSP is solved for a given setting of variables X bound by domains D, if all constraints in C are satisfied. Furthermore, the "goodness" of a solution to a CSP can be measure by an optimization function F=f(X,D,C), which is any arbitrary function of variables, domain bounds, and constraints (X,D,C).

In some embodiments, converting a CSP problem into a computer program to be solved by a fuzzer requires a program that includes: a method by which the program can accept an input from an external source (where in this case inputs are determined by a given fuzzer); maps the parsed inputs to the variables X={x1, x2, ..., xn}; and is designed such that if (and only if) all constraints C={c1, c2, ..., cm} have been realized the program will "crash" (e.g., execute a crash statement). These two constraints on the program structure allow a fuzzer to test a variety of inputs until a solution is found.

A wide variety of considerations can make the fuzzing process more or less efficient in finding solutions to a given problem. For example, efficiency may be improved by changing how inputs are mapped to variables in the software program representation of a CSP, and how the conditions that indicate problem satisfaction are laid out in that program.

For example, the parsing strategy, and entry points to the program can greatly reduce the need for the fuzzer to search over irrelevant and arbitrary input domains. For instance, if the CSP in question requires exactly N input variables to be set in order for a solution to exist, one approach to restrict the search space is to first parse out the input bit vector into variables in X, and if there are less than or more than N variables after parsing, simply exit the process. Such an approach may allow the fuzzer to recognize that the use of fewer than N variables, or the addition of any additional variables resulting in a greater number than N, will not produce any additional coverage. Additionally, such an approach is likely to limit the search space explored by a fuzzer because a coverage guided metric will not improve for anything other than the N parsed variables. Furthermore, given domain restrictions D={d1, d2, ..., dn} on variables X={x1, x2, ..., xn}, the program can be constructed to exit if any parsed variable xi has been selected outside that variable's domain di.

As for the second consideration, dealing with how the conditions of satisfaction are structured given constraints C and the general optimization function F. For instance, when a partial solution can be measured to be closer or further from a desired solution, a number of problem-dependent solutions exist for using coverage guided fuzzing as a generic solver. As an example, consider a CSP wherein input variables must be selected for an algorithm such as a decision tree, to be used on a particular classification problem, with an optimization function F defined on how well the selected decision tree variables performs on a held-out test set of data. One possible structure of the problem might be to nest various levels of performance before crashing.

Such an arrangement could piggy-back on the coverage guided fuzzing metric used to guide input selection, such that the fuzzer would be encouraged to select inputs that get used by the decision tree, so as to provide performance improvements allowing the decision tree to achieve results at each subsequent branch point of ½ the remaining distance to a perfect classification system. Depending on the landscape of the problem type, loss function, and desired outcomes, variations on such a structure can result in the desired solution.

Some CSPs are not readily structural as a multi-level graph because some problems may not be readily solvable in a linear manner. For instance, in some CSP problems are heavily dependent on a collection of resources (representable as parameters or global parameters) such that the possible actions are highly dependent on current parameters or global parameters. Such CSP could be thought of as a start type arrangement, where edges of the stars represent connections and those connections can be conditionally used based on the current set of values (parameters or global parameters).

For example, in some cloud environments what is possible is defined largely by what credentials are available to an attacker where credentials instead of resources determine what resources are available to a particular entity. As such, each resource may be on the same logical plane, in that any resource may be reachable from any location provided the necessary credentials have been collected. For instance, an attacker might have access to credentials that allow an attacker to create, but not run, a lambda function. However, once an attacker has collected the credential(s) that allow that attacker to run that lambda function might then be able to use that lambda function to execute downstream exploits. In this example, the attacker's progression is not linear with respect to a graph of entities. Instead, the attacker essentially explores the network to collect credentials with the goal of reaching a high value target. In the context of providing the problem as a software representation, such credentials might comprise parameters or global parameters (also call global variables herein) and the environment where after one or more credentials are acquired, another path might open up which may enable the attacker to acquire more credentials or access to a high value target or otherwise protected resource. From there, exploration may continue until a high-value target is reached. In some embodiments, a directed acyclic graph (DAG) of a graph based environment, can be represented such that a visit to any node in the graph, requires having first acquired the credentials granted by first visiting a predecessor node (i.e., a node which has a directed edge to the new node in question).

In some embodiments, a security reasoning and interface system is provided. For example, an example arrangement of an architecture for a security reasoning and inference system using an embodiment of network configuration and policy data may be provided - e.g., an approach that leverage at least some aspects of the security management system and provides alternative approaches to some of the aspects discussed. In a preferred embodiment, the security reasoning and inference system is provided as an expert system. However, other approaches may be used to perform the indicated functions such as a collection of functions or modules.

The security reasoning and inference system includes multiple subsets including a monitoring engine, a deployment engine, a response and alert engine a user interface, and a knowledge base. In some embodiments, the security reasoning and inference system may also include any of a data ingest module, a posture engine, an automation engine, or retention engine.

As will be discussed herein, the knowledge base includes any data utilized by the security reasoning and inference system. This may include any or all of the data representing the network policy, the software representation of the network system, the crash reports, seeds, candidate trigger list, and signature creation templates. Additionally, other subsets of data will be discussed as relevant which may also be maintained in the knowledge base. Generally, the knowledge base is used to collect information which can be processed to generate facts, maintain rules, and state information relevant to the functioning of the security reasoning and inference system and a network system which is being protected by the security reasoning and inference system. Specific sets of data are discussed as relevant herein.

As provided herein, functions of the security management system have been divided, and in some cases replaced, into different parts. For example, the data ingest module processes the network configuration and the network policy to generate information used by the war gaming engine.

The war gaming engine processes the information from the data ingest module. In this way, the war gaming engine can analyze a network system to identify possible attack paths which are stored in the knowledge base in the previously discussed candidate trigger list.

The functions of the deployment manager are replaced in regard to this discussion by the monitoring engine, the deployment engine, the response and alert engine, and in some embodiments, the retention engine, and the automation engine.

The monitoring engine can process known information to determine which state-to-state transitions should be monitored for deployment. The deployment engine processes the determined state-to-state transitions to generate and deploy detection signatures on a monitored network. For instance, the deployed detection signatures are placed on resources within the network to enable monitoring therein of the activity to be detected by respective detection signatures. The response and alert engine provides processing in response to detection signature activation events (e.g., detection events).. The automation engine may be used to implement any of the automated actions discussed herein.

The posture engine can be used to mine the knowledge base to generate insights about a protected networking environment. Insights can include any of, which protected entities are the most at risk, remediation action that could be taken to reduce an attack surface of a network (e.g., actions that would reduce a number of entities from which a protected entity can be reached), or flag changes that increase the attack surface. In some embodiments, the posture engine can compare actions against known activity to determine whether a feature (allowed by an attribute) is actually used by the corresponding entity and recommend remediation actions based on a combination of lack of use and corresponding risk. In some embodiments, the posture engine also analyzes the knowledge base to determine and recommend where to deploy honey pots/tokens.

In some embodiments, the user station includes or provides access to the security reasoning and inference system to allow for control of the processes of security reasoning and inference system at least with regard to a portion or the whole of the subsets therein. For instance, the security reasoning and inference system might be located on the user station, on a remote device accessed by the user station, or distributed across multiple devices. The user station causes the execution of one or more functions of a security reasoning and inference system. The user station comprises any type of computing station that is useable to operate or interface the security reasoning and inference system. Examples of such user stations include workstations, personal computers, or remote computing terminals. In some embodiments, the user station comprises a display device, such as a display monitor, for displaying a user interface to any users at the user station. The user station also comprises one or more input devices for the user to provide operational control over the user station, such as a mouse or keyboard to manipulate a pointing object in a graphical user interface from which a user input might be received.

In some embodiments, various commands are provided to allow a user or administrator to interact or query the security reasoning and inference system. For example, commands could comprise any of the following: list domain dataset, show signature template(s), show STS transition(s), show detection signature(s), show active detection(s), start fuzzer(s), show ongoing detection(s), mark detection noisy, deploy heartbeat detection, mark missing heartbeat as loss of data, load/save state. Additionally, each command could be associated with one or more filters or input parameters.

Generally, posture analysis applies rules to the current state of a monitored system to determine whether any changes should be made to one or more permissions therein in order to improve security and to comply with one or more security guidelines.

The retention policy comprises a collection of rules and or processes to remove old information from the knowledge base. This information may comprise old detections, detection signatures that have timed out or any other data that is to be removed.

The security reasoning and inference system includes an application programming interface (API), a data ingest module, and a logical representation of a network system. Generally, upon configuration of the security reasoning and inference system to monitor a network system, the process will use an API to retrieve the network policy and the network system configuration of a network system. The policy is then processed at a data ingest module.

In some embodiments an expert system might perform the functions of the data ingest module. In some embodiments, the expert system is manually defined by a set of logic. For instance, the logic that the expert system is to apply is manually created. The application of the manually created representation to knowledge/facts in the expert system is then automated by the manually created logic. In this way, pieces of knowledge can be applied separately or together to process a known world of knowledge and make determinations as to any actions that may be appropriate. In some embodiments, the data ingest module retrieves or processes data retrieved from a system to be monitored. For instance, the data is converted into a representation as a set of facts. In order to maintain or generate the list in a format that usable by the expert system, one approach represent each entity as an object which may be a source or destination depending on the circumstances, each state-to-state transition by its source, destination, and action, and each attack path (candidate trigger) as a set of state-to-state transitions.

To illustrate, each known entity is represented using a populated instance of a template of a corresponding type (e.g., active directory object template) by any combination of one or more of the following: a slot ID, an object ID, an object type, name, domain, value (e.g., high/low/default entity value), a status (e.g., enabled or disabled), password status (e.g., required or not required), a last logon. Among the set of entities, each entity might be usable to reach any number of other entities.

For example, each action or sequence of actions might allow various connections or acquisitions of credentials, and each connection or acquisition of credentials might make it possible to reach new entities where the process may be repeated. Such sequences represent possible attack paths of which there may be any number of permutations identified as discussed herein. In some embodiments, each state-to-state transition may comprise or be part of an attack path. To provide for the construction of relevant knowledge thereof a template (attack path template) may be provided for creation of the attack path instances comprising any combination of one or more of the following: a slot ID, a coverage status (e.g., allowed-symbols, available, unavailable, selected, deployed). Similarly, while each attack path may comprise one or more STS transitions with corresponding parameters, each STS transition may be represented using an associated instance of an STS transition template (e.g., entity action template) which may comprise any combination of one or more the following: a slot ID, a coverage status (e.g., allowed-symbols, available, unavailable, deployed), an action type (e.g., AddKeyCredentialLink, AddMember, Admin, AdminTo, All, AllExtendedRights, AZContains, AZContributor, AZGlobalAdmin, AZOwns, AZUserAccessAdministrator, AZVMContributor, CanPSRemote, CanRDP, Contains, Delegate, Execute, ExecuteDCOM, ForceChangePassword, Generic All, GenericWrite, GetChanges, GetChangesAll, GpLink, HasSession, HasSIDHistory, Kerberoastable, Link, Member, MemberOf, Owns, RemoteControl, ResetPassword, SQLAdmin, TrustedBy, Write, WriteDacl, WriteOwner), a slot source, a slot destination (which may be the same as a source in some embodiments), or any combination of one or more credential acquisitions.

In some embodiments, an arrangement of an architecture for a war gaming engine is associated with the security reasoning and inference system. In some embodiments, the war gaming engine is included within the security management system. In other embodiments, the war gaming system is accessed via one or more API calls to exchange data and control operation thereof.

In one embodiment, the war gaming engine may execute a process to convert a logical representation of a system into a software representation which, in one embodiment, is then stimulated using a fuzzer to generate crash reports which can be subsequently analyzed to generate a set of candidate triggers. In some embodiments, the war gaming engine may convert the logic representation of the system into a graph or other embodiments as may be known which may be analyzed to generate a set of candidate triggers. While the approaches discussed herein are preferably implemented using one or more fuzzers, other approaches are possible as are known though the fuzzer may provide a more detailed representation of a system.

The war gaming engine as includes or has access to the knowledge base and storage for seeds, a software representation of a respective network system, and corresponding crash reports. The war gaming engine includes a configuration to software representation generator, a software representation of a network system, a fuzzer processing instance, seeds, crash reports, and an attack path extractor. In some embodiments, an attack path may be represented as a number of steps, as a step with a specific collection of attributes (e.g., which may correspond to rights acquired in a previous action known or unknown). For example, a singular step where an actor has or acquires a given set of rights may be represented as an attack path.

When a crash occurs, debug tools can be used to capture the path that was taken to reach the protected resource by processing a memory dump in a corresponding crash report. This path information can be captured in a candidate trigger list which may also include summary data such as the number of times each crash statement is executed and the number of unique paths identified that triggered the respective crash statements. In some embodiments, the process identifies a portion of a stimulus applied to the software representation that resulted in a crash as a seed (e.g., a vector) for future fuzzing. For instance, if a new region not previously encountered is discovered, the path to that new region might be captured as a seed. This allows the fuzzer to focus the exploration on that region. Operation of fuzzers with regard to the software representation will be discussed further below.

The attack path extractor processes the crash reports to identify one or more state transitions which may be represented in a set of candidate triggers (e.g., a list). Generally, each crash report generated as a result of a crash might be analyzed to identify one or more state-transition-state tuples representing state-to-state transitions where a first state is a state the attacker could be in, the second state is the state the attacker can transition to, and where the transition is represented by an action or property that can be used by an attacker to transition from the first to the second state (e.g., a specific user uses remote desktop protocol access rights to connect to a specific server). In some embodiments, each unique state-to-state transition is identified by a corresponding unique identifier. In some embodiments, a state-to-state transition corresponds to the acquisition of rights such that the starting state has a first set of rights and the ending state has a second set of rights that differs from the first set of rights.

In some embodiments, the crash reports may be maintained outside of the knowledge base, with the knowledge base instead capturing the candidate trigger list but not the crash reports.

In some embodiments, the monitoring and deployment engines and access data maintained in the knowledge base such as the candidate trigger list, the signature creations templates, the signature catalog, the logical representation of a network system the default entities and the user identified entities. Additionally, as previously discussed the security reasoning and inference system may be accessed via a user state by user using a user input on a user interface provided by the security reasoning and inference system. Generally, the monitoring engine accesses the candidate trigger list, and the signature creation templates to identify state-to-state transitions that can be found in the candidate trigger list and selects a subset that are detectable by a detection signatures - e.g., signatures with creation templates). Once a state-to-state transition has been selected for deployment, the deployment engine retrieves and processes needed information to generate an instance of the signature creation template which may be stored in the signature catalog and deployed on a system under test.

Generally, the monitoring engine determines which state-to-state transitions will be associated with detection signatures deployed on a monitored system and determining when there is sufficient coverage of an attack space.

The flow starts at where each state-to-state transition is processed to determine if a corresponding detection signature can be deployed as discussed herein. At, a first or next state-to-state transition of the identified state-to-state transitions is selected. Subsequently, at a count of candidate triggers that include the selected state-to-state transition is generated and associated with the selected state-to-state transition.

In some embodiments, one or more state-to-state transitions having the highest count (e.g., 3 highest) are marked for deployment. In some embodiments, a field is provided in the state-to-state transitions to indicated a processing status such as having, or not having, a corresponding signature creation template, being selected for deployment, or being deployed. In some embodiments, a separate data structure (e.g., table or list) is maintained to associate a state-to-state transition (e.g., via an identifier) with a state value.

In some embodiments, an evaluation is performed to determine whether there are any new state-to-state transitions marked for deployment. In the event that there are no new state-to-state transitions marked for deployment the process will return, possibly after a wait period to repeat the evaluation. In the event that the determination is yes, the process may select a first/next candidate trigger that is not already marked as deployed. In some embodiments, a field is provided in the candidate trigger to indicated a processing status such as having, or not having, any corresponding detection signatures marked as deployed or being deployed. In some embodiments, a separate data structure (e.g., table or list) is maintained to associate a candidate trigger (e.g., via an identifier) with a state value.

A determination is made as to whether the candidate trigger should be considered deployed. For example, a candidate trigger may be marked as deployed when a threshold number (e.g., 3) of unique actions are monitored by detection signatures, when all state-to-state transitions in the candidate trigger are monitored, or when it is not possible to create any new detection signatures for monitoring the possible attack path represented by the candidate trigger. If the candidate trigger coverage does not meet the threshold, the process returns. However, the if the candidate trigger coverage meets the threshold, the process marks the candidate trigger as deployed and then returns until there are no more candidate triggers to process. As there is likely a one to many relationship between respective state-to-state transitions and candidate triggers, this process may be initiated repeatedly.

Returning to the expert system example, each state-to-state transition may or may not correspond to a signature creation template. Generally, the signature creation templates are provided by experts with knowledge of the technology space and can be used to deploy a detection signature as discussed herein on a monitored system. With regard to the expert system, each STS transition may or may not correspond to one or more signature creation templates which can be used to generate a deployable signature. The expert system can apply the then known set of signature creation templates to identify which STS transitions can be detected in a deployed network environment. Thus, one type of knowledge might comprise a coverage status for each STS transition which indicates whether a corresponding signature can be deployed. The expert system can process each STS transition against a collection of knowledge (e.g., the signature templates) to determine if a detection signature can be deployed. For instance, the action type of each the STS transitions is compared to an action type of the known signature detection instances and if a match is identified the corresponding STS transition is updated to reflect the knowledge learned by the process (e.g., a coverage status is changes to "available"). In this way each STS transition is processed to add knowledge for the expert system. Similarly, another process may process the attach paths and update corresponding attack paths to reflect the knowledge learned by the process based on the underlying STS transitions (e.g., a coverage status is changes to "available"). In addition to the action, the signature creation template might identify a detection engine (e.g., snort, sentinel, clips, recall), a rule, a source, and a destination.)

In some embodiments, after STS transitions and attack paths that can be deployed are identified, the expert system can analyze the attack paths to determine which detection signatures to deployed. There are various approaches that could be used to determine for which attack paths to deploy detection signatures. For instance, in the case of a networking system that is largely attacked by hopping from computing to computer while gathering access rights, the detection may be optimally focused on detection of sequences of actions. In contrast in systems where the access rights and systems are not strictly linked such as in some cloud based network systems it may be more efficient to detect actions that bring an attacker logically closer (e.g., in the number of steps needed to acquire access rights to a protected resource). In some embodiments, both approaches may be applied.

In both approaches, each STS transition corresponds to different sources and destinations, different access rights (e.g., the acquisition of credentials), or a combination of both. In one embodiment, an expert system might apply logic to determine commonality of each STS transition (e.g., in how many unique attack paths is a given STS transition found) by processing each STS transition that is known to have coverage available. In one embodiment, each STS transition is processed to determine how close it is to a protected target. For instance, each STS transition with coverage available is analyzed against each attack path and assigned a count value representing the smallest number representing the smallest difference identified. Alternatively, in some embodiments and value is used such that a threshold difference is required and the nearer to the target the higher the value where the highest value is retained (e.g., STS transitions greater than a threshold distance away, X transitions, are ignored and such that the value increases with the nearness, then if a transition is Y STS transitions away the max value Z = X - (Y-1) when Y is greater than X). In some embodiments, each identified STS transition is added to a list of STS transitions (e.g., by appending an ID to a vector in the STS transition).

In some embodiments, the count discussed above can be used to identify a particular state-to-state transition to mark for deployment. For example, for each state-to-state transition with coverage available we look for the state-to-state transition with a count of or equal to the highest attack count, and mark that state-to-state transition for deployment.

In some embodiments, logic can be applied to determine whether coverage has been deployed for a respective attack path. For example, logic might be applied to the known attack paths to determine whether sufficient coverage has been identified for respective attack paths - e.g., by applying a threshold or some other conditions to determine sufficient coverage as discussed herein. For instance, in each attack path might be required to have a minimum number of STS transitions covered, a minimum distance of coverage (e.g., all STS transitions possible that are 1, 2, and 3 steps away). Once sufficient coverage has been provided for an attack path, that path is marked to indicate that fact (e.g., coverage deployed).

In some embodiments, a state-to-state transition might be removed from use or white listed. In such cases this might result in attack paths lacking coverage where they previously had that coverage. One approach to implementing a white list is to specifically identify STS transitions to be white listed, or to provide one or more rules for processing STS transitions to determine which should be white listed and marking corresponding STS transitions as white listed.

Generally, the deployment engine selects respective state-to-state transitions marked for deployments, generates a corresponding detection signature, and deploys that detection signature on a corresponding monitored network.

In some embodiments, the process starts where a first or next state-to-state transition marked for deployment is selected for processing. Subsequently, the source and destination information is retrieved. This may also include retrieval of one or more corresponding signature create templates. The signature creation templates, source information, and destination information, are used to populate one or more instances of detections signatures as discussed elsewhere herein. That populated instance of the detection signature, or multiple detection signatures are then deployed on the monitored system (see discussion included elsewhere herein). Finally, the selected state-to-state transition is marked as deployed.

Returning to the expert system, for each STS transition marked for deployment the process generates one or more detection signatures to be placed on the network system. Processing for detection signature generation largely comprises a collection of fetching, matching, and replacing operations. For example, one approach starts by identifying and retrieving a state-to-state transition with the corresponding status - e.g., "coverage deployed". Subsequently, based on the retrieved state-to-state transition, the process will identify a matching signature template (e.g., based on the corresponding action) the corresponding source and destination entity information, and perform a search and replace operation to populate the values identified in a signature template. The process may apply a set of ruled to perform applicable binding operations by identify strings to be replaced with corresponding values from the STS transition.

In some embodiments, a state-to-state transition may correspond to multiple matching signature templates. In some embodiments, a particular state-to-state transition might be detected in multiple different ways. In order to address this, a count may be used to determine a maximum number of signatures for detecting the same action - e.g., such as a count used to determine the number of signatures templates generated and used as an offset to select a next signature template for generating a deployable signature that detects the same action in a different way. In some embodiments, each such signature returns an event having the same eventid even though they are detected using different detection signatures. In some embodiments, each signature template might correspond to a different event to be detected and thus may correspond to a different detection signature template. For instance, detection events from a windows operating system may differ from detection events for packet processing on a network as is known. In some embodiments each populated instance of a detection signature template is marked as or for deployment on the network.

Returning to the expert system example, detections of activity meeting detection signature definitions may be monitored by the expert system. For example, each attack path could be represented by the STS transitions that are being monitored either alone as a single STS transition (possibly including one or more parameters representing information such as the necessary credentials) or as a sequence of STS transitions. Such a dataset can improve the speed in which detection signature triggering events are processed by reducing the known universe of STS transitions to only those that are being monitored. Additionally, where relevant the sequence of transitions can be used to compare detection events to determine whether the indicated sequence occurred. For instance, ongoing detections events can be represented by a vector or list (e.g., a list of entries of the detection signature event IDs that have occurred in a given time period). In some embodiments, detection events may decay and be removed from the list of ongoing detections. For example, a process may use a threshold amount of time to identify old detection events that should be decayed. Additionally, or alternatively, the oldest detection events may be removed when the number of detection events is greater than a maximum number of detection events (e.g., based on a number of entities in a system).

In some embodiments, an expert system has different responses based on a number of monitored state-to-state transitions in a sequence that occur or a distance from a protected entity. For example, a detection might be deemed critical when a threshold number of state-to-state transitions in a monitored attack path are detected or when the distance to a protected target is less than or equal to a threshold. Similarly different detection severity might be associated with different lengths of detected attack paths or different distances to a protected target. In some embodiments, the detections could be dependent on an order of appearance or time of detection where the first detection must occur before the next, and so forth.

Generally, the posture engine processes a set of posturing rules against a logical representation of a network system in order to determine whether a posturing adjustment should be made, and attempts to implement any identified changes.

The knowledge base includes a collection of posturing rules which defined recommended posture, when posture should be changed, and in what way posture should be changed. The posture engine will apply the posturing rules provided at to the logical representation of the network system to determine if a posture adjustment is advisable. In some embodiments, a posture adjustment is provided as a recommendation to a user or administrator. However, some or all posture adjustments may be implemented automatically. For example, a posture adjustment might indicate that a particular user account should be disabled because it has been unused for a threshold period of time. In such an event the posture engine may issue a configuration command as a posture adjustment to the network system to disable the indicated account. Subsequently, a posture adjustment success or failure message might be received from the network system. If such a message indicates failure a recommendation and report might be provided to a user/administrator. However, if the message indicates success, the posture engine may modify the logical representation of the network system or provide a notification or trigger to a managing module (e.g., the data ingest module) to update the corresponding logical representation of the network system. In some embodiments, the posturing rules may depend on which entities are protected.

Returning to the expert system example, the posturing rules might be applied to cause automatic posture adjustments or recommendations for a network system. Such an arrangement can be used to mitigate risk. Additionally, because of the arrangement of the expert system, such changes can cascade through the various logic provided therein and create an automatic response to those changes as reflected in the monitoring of the network system.

In some embodiments, an example flow for the posture engine starts where a collection of posturing rules are identified. For example, a collection of posturing rules are identified that corresponds to the monitored system. Such rule may be provided by the security reasoning and inference system, by the network system, users or administrators corresponding to either system, or some combination thereof.

First, a first/next posturing rule is selected. For example, a reference and an ordered list is used to individually selected a first or next rule. The selected posturing rule is then processed against the corresponding logical representation of the network system. Information regarding any set of conditions that satisfy the rule are then output. In some embodiments, each individual instance of satisfaction of the posturing rule is output. In some embodiments, each individual instance is bundled into a collection of individual instances that satisfy the posturing rule and a single determination is made as to whether the posturing rule corresponds to an adjustment to be made automatically or whether no automatic adjustment is to be made. Once the posturing rule has been processed against the logical representation of the network system, the process returns which selects a next posturing rule while there are posturing rules that have not yet been processed against the corresponding logical representation of the network system. If no automatic policy adjustment is to be made, the process proceeds where a posture adjustment recommendation is generated for a user or administrator.

An illustrative example might comprise the following: a rule that specifies that any user account that has not been used in 90 days should be disabled is processed against the logical representation of the network system to identify each user account in turn, and process each account by querying an authorization system (e.g., Microsoft Active Directory, or a Kubernetes installation at the monitored system) to determine a time of the last login which is then compared to the corresponding threshold (here 90 days). Any such accounts that have not been access within the indicated time frame are then identified for automatic posture adjustment (e.g., selected to be disabled).

Subsequently, one or more commands are generated to effectuate any changes in posture and transmitted to the monitored system. Continuing the illustration above, this might comprise generate one or more commands to individually, or as a group, disable one or more accounts at the monitored system. Such messages may not always be successful. Thus, the process may wait for a success or failure message. In the event that the posture adjustment fails, the process proceeds where a posture adjustment recommendation and failure message is generated (e.g., a message that indicates the recommended posture change, the corresponding entities - e.g., user account(s), and an indication that an automatic posture adjustment failed). In the event that a posture adjustment is successful, the process will proceed where a configuration change message is generated that indicates the recommended posture change, the corresponding entities - e.g., user account(s), and that automatic posture adjustment was successful.

In some embodiments, after any successful automatic posture adjustment is made to a corresponding element, the logical representation of the corresponding monitored system (e.g., data ingest module) is updated to reflect that change such as in response to a configuration change message that specifies the details of the change.

Generally, expert systems are designed to emulate the ability of people to solve complex problems. Expert systems comprise a collection of logic (e.g., if-then rules) to a knowledge base to determine new facts where those rules can independently be applied to facts represented in the knowledge base with relative independence from other logic that makes up at least part of the expert system. Commonly, some of the rules can be used to determine new facts, and those new facts might be relevant to other rules. In this way, an expert system can process relevant information to determine relevant facts.

As one or ordinary skill in the art would understand, expert systems are highly modifiable. Simply adding new rules allows the knowledge system to be used for different functions. Thus, new or modified state-to-state transitions, templates, posturing rules, responses, alerts, automatic actions, retentions policies, commands, and monitoring activities can be included in the system. While the appropriate terminology and syntax is required this expert system approach does not require complex and time consuming database management activities.

Further details of aspects, objects, and advantages of some embodiments are described below in the detailed description, drawings, and claims. Both the foregoing general description and the following detailed description are exemplary and explanatory and are not intended to be limiting as to the scope of the embodiments.

### BRIEF DESCRIPTION OF THE DRAWINGS

The drawings illustrate the design and utility of some embodiments of the present invention. It should be noted that the figures are not drawn to scale and that elements of similar structures or functions are represented by like reference numerals throughout the figures. A more detailed description of the present inventions briefly described above will be rendered by reference to specific embodiments thereof, which are illustrated in the accompanying drawings. These drawings depict only typical embodiments of the invention and are not therefore to be considered limiting of its scope, the invention will be described and explained with additional specificity and detail using the accompanying drawings.
FIGs. 1A-1C illustrate an example arrangement of an architecture for network security management using a software representation that embodies network configuration and policy data according to some embodiments of the invention.
FIG. 2 illustrates a process flow according to some embodiments of the invention.
FIGs. 3A-3B illustrate an expanded view for generating a software representation of a network according to some embodiments of the invention.
FIGs. 4A-4B illustrate an expanded view for analyzing the software representation of the network to create crash reports according to some embodiments of the invention.
FIGs. 5A-5B2 illustrate an expanded view for managing detection signature deployment according to some embodiments of the invention.
Fig. 6 illustrates an expanded view for monitoring the network using detection signatures according to some embodiments of the invention.
Fig. 7 illustrates an expanded view for processing activated detection signatures according to some embodiments of the invention.
Fig. 8 illustrates an expanded view for analyzing the software representation to create event responsive detection signatures according to some embodiments of the invention.
Fig. 9 illustrates an expanded view for monitoring detection triggers for retirement according to some embodiments of the invention.
Fig. 10 is a block diagram of an illustrative computing system suitable for implementing some embodiments of the present invention.
FIG. 11 illustrates an example arrangement of an architecture for a security reasoning and inference system using an embodiment of network configuration and policy data according to some embodiments of the invention.
FIG. 12 illustrates a process flow according to some embodiments of the invention.
FIG. 13 illustrates an arrangement for ingesting a network system configuration and a network policy according to some embodiments. As provided herein the ingestion process is automated.
FIGs. 14A-14B illustrate an example arrangement of an architecture for a war gaming engine associated with the security reasoning and inference system according to some embodiments of the invention.
FIG. 15A illustrates an example arrangement for the security and reasoning inference system with a focus on the monitoring engine and the deployment engine and the associated information according to some embodiments.
FIG. 15B illustrates an example flow for the monitoring engine according to some embodiments.
FIG. 15C illustrates an example flow for the deployment engine according to some embodiments.
FIG. 16 illustrates an example arrangement for the security and reasoning inference system with a focus on the response and alert engine, the automation engine, and associated information according to some embodiments.
FIG. 17A illustrates an example arrangement for the security and reasoning inference system with a focus on the posture engine and associated information according to some embodiments.
FIG. 17B illustrates an example flow for the posture engine according to some embodiments.

### DETAILED DESCRIPTION

Various embodiments of the invention are directed to a method, product, and system for network security management using a reasoning and inference engine.

Provided herein is a method for solving general constraint satisfaction problems. The method makes use of a class of tools, known as fuzzers, developed for the purposes of automated software testing. Fuzzers (broadly speaking) test a piece of software for unexpected behavior by creating a steady stream of novel inputs, while monitoring the response of the software to those inputs. Because unexpected behaviors in software can often indicate potentially exploitable security flaws, fuzzing is most commonly used for security testing. A prototypical use-case of a fuzzer would be (for example) testing the security of a PDF viewer. The fuzzer would either generate novel input PDFs, or modify a set of existing PDFs, in order to try to find ones that could cause the viewer to crash. To illustrate, general constrain satisfaction problems might include path finding over graphs, decentralized finance trading (i.e., finding a sequence of trades resulting in profit), protein folding, etc.

In some embodiments, as provided herein fuzzers are used as a means of finding solutions to arbitrary problems which have been properly restructured as computer programs. More specifically, a given problem is structured into code such that input to the program represents a candidate solution to be tested, with the program itself designed to crash if and only if a solution is found to the original constraint satisfaction problem (i.e., the candidate solution generated by the fuzzer, solves the constraints of the problem and leads to the intentionally placed crash statement; in pseudocode, this can simply be represented as "IF solution THEN crash;"). The fuzzer repeatedly generates new inputs which are read by the program and tested against the problem constraints, until an input is generated that corresponds to a solution of the problem. In some embodiments, such an arrangement can be used for representing arbitrary problems, such that a fuzzer can be used to solve it.

Traditionally, fuzzers are used to find unexpected behavior against a fixed piece of code. The approach provided herein flips this process by modifying and structuring a problem as code in order to find solution states which makes it possible to utilize advances in the domain of programming language theory and application testing to improve methods for solving arbitrary constraint problems.

As discussed herein, another advantage of using fuzzers comes from the fact that analysis can be parallelized allowing the fuzzers to take advantage of potentially unbounded computational resources. Generally, when attempting to parallelize an algorithm, a lot of effort has to be made in order to understand how to represent the algorithm, the inputs, etc. in order to manual determine an approach to solve said problem in a parallel manner. In contrast, the problem can be represented in a relatively simple manner and essentially without consideration parallelization because even without providing an approach to solve a problem in a parallel manner, multiple fuzzers can coordinate between cores to generate hypothesized solutions and perform analysis thereof.

Another advantage of the approach provided herein is that when a problem changes (e.g., due to changes in the underlying system in which the problem is to be solved) solutions previously identified using fuzzers can be used as potential solutions to the changed system. For example, if a graph of relationships at time T is different from that graph at time T+1, input seeds that previously provided solutions can be used as input seeds to determine whether they also provide a solution at time T+1. As such, solutions from previous states of a problem can be used as "good enough" guesses for testing initial potential solutions at the newly structured problem.

Additionally, numerous advances have been made in the domain of fuzzing that improve the speed and efficiency of finding relevant inputs as provided herein. In some embodiments, the approach provided is able to represent problems as code in a manner that makes use of a number of the advances in fuzzing and programming language theory. These include making use of coverage-guided fuzzing, scalability through parallelization, and the use of seed inputs in order to adapt to dynamic problems. These are described in the following sections at least in the context of the network security domain.

In the following description, numerous specific details are set forth to provide a more thorough description of the specific examples described herein. It should be apparent, however, to one skilled in the art, that one or more other examples and/or variations of these examples may be practiced without all the specific details given below. In other instances, well known features have not been described in detail so as not to obscure the description of the examples herein. For ease of illustration, the same number labels are used in different diagrams to refer to the same items.

Generally, a malicious actor might attempt to gain access to a network to obtain data that the network operator(s) do not intend to be provided to the malicious actor. For instance, a malicious actor may attempt to gain access to the internal network through a firewall. Normally, malicious actors use any of several methods to gain access to a network. For example, a malicious actor can gain access by social methods (e.g. tricking, bribing, phishing, infiltrating, dumpster diving, physically stealing, etc.), brute force methods to identify (generally weak) passwords, physical access to a machine (e.g. a machine left unattended in a public area), or other technical methods that focus on leveraging vulnerabilities at the software or hardware level (e.g. backdoors, buffer overflow attacks, email worm, root kits, session hijacking, and trojan horse programs). Regardless of the method used, the initial goal is to gain a foothold within the network that can be accessed by the malicious actor to the network.

As used herein, the network may comprise any combination of computing devices within one or more network environments including network communication apparatus and any computing devices logically or physically connected thereto. At least some aspects of the network are described by one or more of network configuration or policy data which describes conditions for interactions (e.g., access rights) between, and in some instances within, or otherwise associated with computing devices. For example, the computing devices may be arranged in any combination of local computing devices (e.g., within a local domain, computing cluster, or cloud), remote computing devices (e.g., within a separate/remote domain, computing cluster, cloud, or otherwise located at a different physical location), and may include personal computing devices which are associated with one or more access rights as described in one or more network configuration data sets or network policy data sets. However, for ease of understand, the description provided herein refers to any of these arrangements as network configuration and policy data. For example, a local network and a cloud network may be interconnected to provide access to computing resources for employees and contractors to perform relevant duties where any of the local network, the cloud network, and devices used by employees and contractors may be located in any number of network domains and may be associated with any number of network configuration and policy data sets.

A malicious actor may operate externally to a network (e.g., through a firewall), or may have direct access to an internal network and thus avoids the challenge of overcoming the protections of a firewall. For instance, a malicious actor might be an employee undertaking a course of action adverse to their employer (operator/owner of the network) - e.g., corporate espionage, trade secret theft, accessing restricted materials, etc. In some embodiments, the malicious actor has no actual malice and is instead merely an individual engaging in abnormal, risky, reckless, or otherwise undesirable activity that may pose a risk to network resources (a network resource as used herein corresponds to an entity having one or more relationships as defined in the network configuration and network policy data). For example, an administrator using a publicly accessible kiosk to stage documents for transfer to a nearby device.

Whether an external or an internal actor, the malicious actor might also gain access to other hosts to use those hosts to relay data from other network resources to which they do not have direct access such as by stealing credentials from various hosts that may have authorization to access sensitive resources (identified entities as discussed further below). Detecting this activity early can allow for protection of sensitive resources before they are actually breached.

By ingesting and analyzing the configuration information of an environment (e.g., network configuration and policy data), the approach can focus only (or primarily) on those portions of the network environment that are most likely to result in catastrophic failure or compromise. Such a procedure can work at multiple scales (e.g., binary instrumentation logs, system event logs, network configuration, cloud configuration, etc.), but does so in the most general sense by ingesting network configuration data (the network configuration and network policy data), distilling causal relationships, where the collected information can be projected into a composite transition space. The network configuration data contains objects or entity identifiers - e.g., identification of the entities on the network such as accounts, servers, hosts, group identifiers. The network policy data specifies which objects or entities are members of which groups and the rights allocated to each group. In some embodiments, the network configuration data and network policy data are provided together in a dataset specifying the entities and access rights within a network. In some embodiments, the network configuration data and the network policy data may each include any or all aspects of the other. In some embodiments, the network configuration data or the network policy data specifies access rights allocated to individual entities. The causal relationships can be distilled from the definitions given for the environment as represented by the configuration information. In some embodiments, the configuration information comprises a projection into the composite transition space from multiple sources (e.g., Active Directory and Windows Host Eventing) and allows the system to contextualize credential theft and reuse and to track documents originating outside the organization.

Generally, the composite transition space allows the determination of one or more states or transitions between states which could lead to a critical state - e.g., one corresponding to a potential compromise of protected resource. For example, a protected resource (entity) might comprise a human resources database which is represented as an entity in the network configuration and network policy data and which is identified for protection. The interaction with this protected resource might be recognized as a high value state, where reaching that state or reaching that state with some number of conditions being met should be reported as abnormal or potentially malicious. For example, an unknown host device or a host device not associated with an account that is allowed to access the resource (as determined based on the network configuration and/or the network policy data) might be identified as a critical state within the transition state. As will be discussed further below, these states or transitions between states, in any relevant combination, can be identified as candidate triggers for detection signatures that identify a corresponding activity in a computing environment. In some embodiments, the set of candidate triggers are processed to identify the most commonly occurring subset. In some embodiments, the detection signatures are generated using signature templates and generate detection events when the corresponding conditions are met. Thus, threat actor activity in the system can be detected using the detection signatures by monitoring for matching conditions or actions. In some embodiments, detection signatures are used to detect sequences of actions where the likelihood that a particular behavior is malicious increases with the number of actions taken to reach a particular resource.

In some embodiments, the approach comprises identifying network configuration data and network policy data for a computer network, generating a software representation of the computer network based on the network configuration data and network policy data, analyzing the software representation to identify possible attack paths in the computer network, and monitoring the computer network using detection signatures that detect traversal of at least a subset of one or more attack paths.

In some embodiments, the network configuration data specifies access rights allocated to respective groups and the network policy data specifies comprises a set of access rights for group members to access network resources, the software representation comprises a source code representation or an executable compiled from the source code representation and represents a plurality of states and transitions between states, the software representation comprises a source code representation or an executable compiled from the source code representation and encapsulates a bitmap representing a plurality of states and transitions between states, or some combination thereof.

In some embodiments, the approach includes analyzing the software representation to identify possible attack paths in the computer network comprises stimulating the software representation using a plurality of inputs to identify sets of one or more state changes that reach a target state from a starting state, where an attack path comprises one state change or a sequence of state changes.

In some embodiments, a detection signature comprises one or more atomic rules that can be deployed on the computing network to detect an occurrence that satisfies the one or more atomic rules or monitoring the computer network using detection signatures that detect traversal of at least a subset of one or more attack paths comprises processing a triggering event received in response to a detection signature detecting an occurrence that satisfies one or more atomic rules by applying a second set of rules to the triggering event to determine whether to generate an alert.

In some embodiments, the approach includes an expert system that manages a knowledge base and which performs various functions to manage network security. For example, in some embodiments, the approach includes providing an expert system for managing and expanding knowledge in a knowledge base. The expert system may perform any number of functions including data ingestion, application of a data retention policy, monitoring of a network system including deployments of detection signatures on the network system, response and alert management, posturing, and relevant automation. In some embodiments, the expert system interconnects with a war gaming engine similar to the security management system discussed herein for collection of knowledge regarding a network system (e.g., a logical representation of the network system based on at least a network configuration or network policy data and possible vectors for attacks on the network system).

In some embodiments, a collection of functions or modules is provided in place of the expert system. For instance, each set of logic provided in the expert system is collected and provided in a form of a function or module with one or more other modules to perform similar processes using one or more function calls to trigger processing when a corresponding event occurs that may result in different outcomes (e.g., when a configuration, detection signature, posture change, etc. occurs).

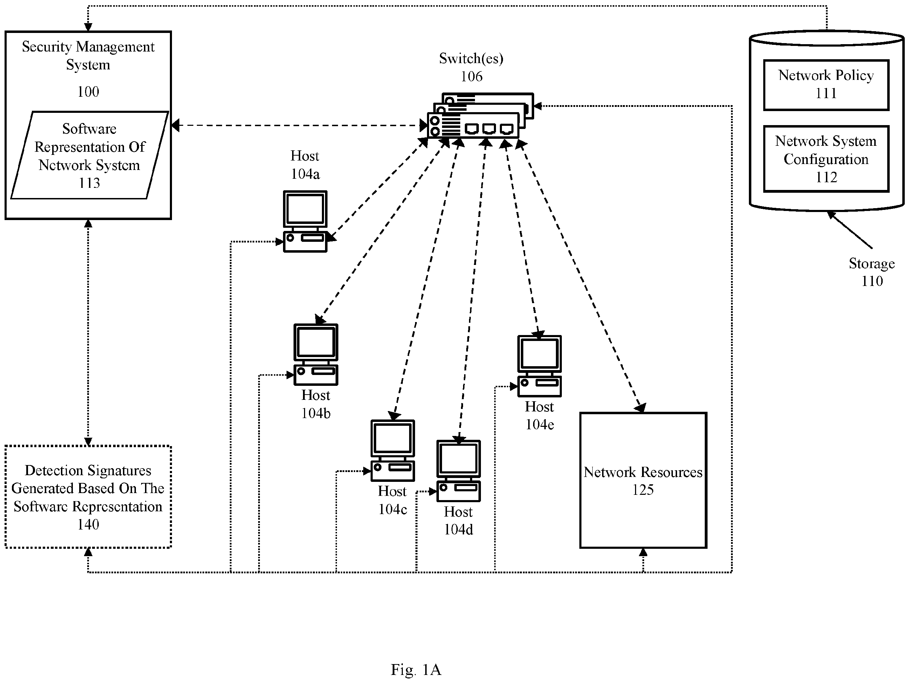

FIGs. 1A-1C illustrates an example arrangement of an architecture for network security management using a software representation that embodies network configuration and policy data according to some embodiments of the invention.

FIG. 1A illustrates an example arrangement of an architecture for network security management using the software representation that embodies network configuration and policy data according to some embodiments of the invention. In particular, Fig. 1A focuses on the overall relationship between elements of the network and the associated security management system.

Malicious external or internal actors generally gain a foothold within a network by stealing credentials from various hosts already authorized to access that network. For example, a network might include many different user accounts used from one or more hosts (see e.g., hosts 104a-e) that are interconnected using one or more switches (see switches 106) and connected directly or indirectly to one or more network resources (see e.g., 125). Such accounts are commonly managed using a network policy (see 111) and a network system configuration (see 112). At a high level, the network policy represents the rights of groups to interact with, or access, various network resources to perform various actions such as creating, reading, updating, and deleting. For example, a human resources group might be allowed to access a server that includes information that is not otherwise accessible outside of the HR department. Each group might also be granted access to one or more other resources, (e.g., a printer/scanner in the HR department, an HR email address, etc.). In this way each group can be associated with a set of actions that members of the group are allowed to perform on different resources. Additionally, a network system configuration 112 might comprise a collection of characteristics regarding various entities. Example entities can include computing devices, users, domains, group policy objects (GPOs), key vaults, subscriptions, tenants, resource groups, applications, virtual machines (VMs), groups, or organizational units (OUs), which may be represented in a network system configuration 112. In some embodiments, the network system configuration information specifies rights of and between respective groups and a network policy specifies which entities are members of each group.

In some embodiments, the network itself is an arrangement of electronically connected devices (either wired, wireless, or some combination thereof). For example, one or more switches 106 and/or wireless receiver/transmitter devices are provided to connect the hosts (e.g., hosts 104a-e) and the network resources (e.g., 125), a security management system 100, and storage 110. In some embodiments, the security management system 100 is external to the network and may provide security management services to multiple networks.

In some embodiments, the security management system can ingest the network policy 111 and the network configuration 112 in order to form detection signatures 140 using an approach that translates the network policy 111 and network system configuration 112 into a software representation (source code representation or executable compiled from the source code representation). Generation of the software representation will be discussed further below. Briefly the software representation comprises a collection of functions that represent different states of the network where actions taken or leveraged properties are reflected in the calling of a respective function for the corresponding state or property. This software representation can be used to actively determine possible, likely, or critical attack paths - e.g., by stimulating the software representation using a fuzzer to explore paths (a sequence of transitions between states) to reach states of interest (states frequently encountered) or high value states corresponding to identified entities. States of interest or high value states can be associated with one or more crash statements that may be executed subject to one or more conditions. In this way, not only can simply reaching a state be identified, but also or alternatively reaching a state using a path (sequence of state-to-state transitions) that may be indicative of abnormal or malicious behavior (e.g., privilege execution attacks). Additionally, global parameters may also be used to condition the execution of a crash statement (e.g., an external entity accessing a resource internal to the network when a global parameter indicates that a firewall is down). In contrast, current cyber-security products that make use of environment configuration information are generally limited to simple lookup tables and graphs. However, lookups and graph structures ultimately fail to capture the full logic of computing environment configurations such as when a potentially malicious activity is only possible when a global parameter has a particular value. For example, a network configuration of an active directory might be represented as a graph, with users, groups, and machines as vertices, and relationships between them as edges. However, conditions related to those edges or vertices are not readily representable in a graph structure - e.g., a graph cannot represent both an edge that is dependent on a precondition being met and at the same time an edge that is dependent on the precondition not being met, such as when an edge corresponding to membership in a group exists only after a deactivated user account has been re-activated. In contrast, representation of the network configuration as a computer program allows for the encapsulation of the data (e.g., usernames, groups, event names, etc.), as well as the logic and rules that define the space of actions in the environment. In essence, this converts the environment in an abstract sense into a state machine, with the ability to operate on arbitrary configurations, and where the state of the environment can be updated in response to the time-varying inputs or data in that environment. Furthermore, because the configuration of the network is represented in software, tools and techniques that are applied to software can be applied to test, verify, and search the configuration space of the network. Furthermore, in some embodiments, changes can be made to how the configuration is translated into a program in order to yield more optimal or different representations. Further details regarding the security management system will be discuss herein.

As discussed herein, a state may correspond to either a single entity or multiple entities (which may or may not be traditional computing resources such as data stores or rights management systems) that can potentially be compromised in an environment. That is, a state may correspond to any entity, whether logical, physical, or ephemeral, which represents something that can be used as a waypoint by an attacker in service of reaching a target in the environment, where the target may also be an entity. For example, a state may correspond to either a single entity or multiple entities that can potentially be compromised in an environment. The different states can be reached by transitioning from one state to another (e.g., by an attacker using one or more actions or properties to pivot from one state to another). Generally, sensitive states can be identified as high value states, which correspond to entities that if access or controlled by a malicious actor may reflect an elevated threat to another entity within an organization or correspond to a particular entity that has been identified for protection from attackers. These actions may be representable as a collection of one or more state-to-state transitions for which a corresponding detection signature can be generated that converts a candidate trigger (one or more transitions from one state to another and potentially one or more global parameters) into a detection signature using a signature template. In some embodiments, a detection signature comprises one or more atomic rules that can be deployed onto one or multiple detection engines which process incoming streams of events and allows for the detection engine to emit a detection signature when a matching event or sequence of events are found. In some embodiments, the detection signatures are generated using one or more signature templates that provides a framework for converting a corresponding transition from one state to another into a signature that detects those transitions.

In some embodiments, the network includes various mechanisms for capturing information regarding communications over the network including unique host identifiers, sources of communications, destinations for communications, the amount of data sent, the amount of data received, and the port(s) used for communication. The capture of this information might be accomplished using multiple distributed sensing modules (taps) located at different locations (e.g., switch(es) 106, host(s) 104a-e, and/or at network resources 125). This information can be processes to identify relevant information including a source, a destination, a requested service, a corresponding protocol, whether a communication is a request or a response, the time of the communication, or any other relevant information. Usually, the information is retrieved from captured network packets at one or more network devices (e.g., switches 106, host(s) 104a-e, and/or network resources 125). In some embodiments, states or state transitions can be detected by analyzing at least the communications over the network. In some embodiments, one or more agents on one or more computing devices might operate to capture various events (e.g., windows system events, syslog, sys call trace, authentication log, network traffic, etc.) for analysis against the detection signatures. In some embodiments, the detection signature is generated based on the software representation 140 and can be distributed to one or more locations. For example, various detection signatures might be distributed to respective hosts for local monitoring (e.g., of logs, application/system calls, system events, windows system events, windows system events, syslogs, sys call traces, authentication logs, network traffic, etc.). In this way different signatures can be distributed to corresponding devices within the network. In some embodiments, multiple different detection signatures can be generated to detect the same behavior in different ways or at different locations.

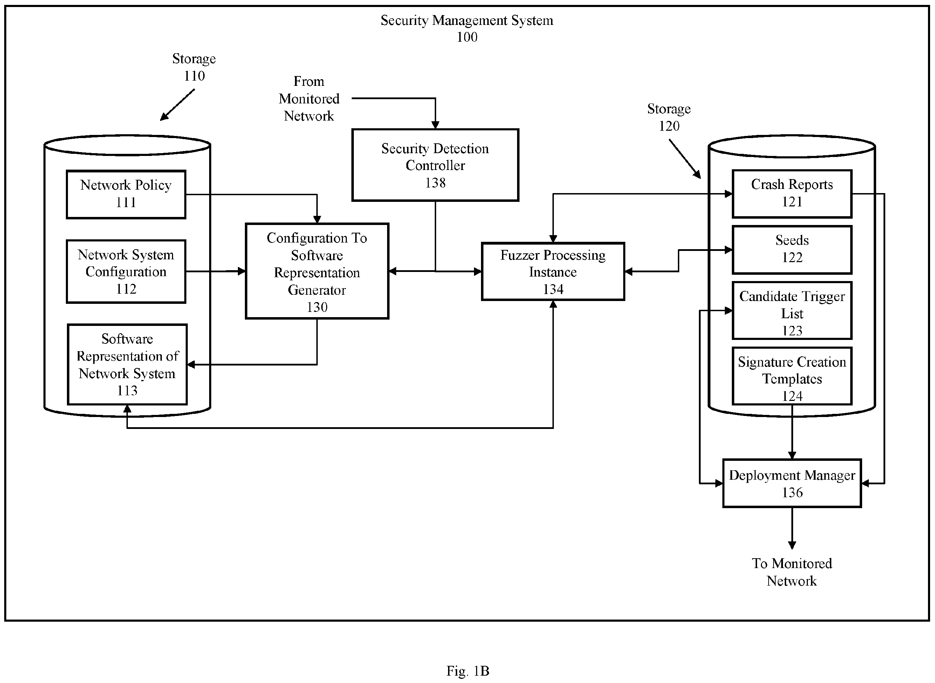

FIG. 1B illustrates an example arrangement of at least a portion of an architecture for network security management using the software representation that focuses on the security management system 100 according to some embodiments of the invention.

The security management system 100 as illustrated includes storage (see 110 and 120), a configuration to software representation generator 130, a fuzzer processing instance 134, a deployment manager 136, and a detection signature detection controller 138, which could be provided together or separately or in any permutation thereof.

The configuration to software representation generator processes the corresponding network policy 111 and network system configuration 112 to generate a software representation of the network system that can be compiled and executed using inputs from a fuzzer. For example, the configuration to software representation generator ingests the network configuration and network policy data, distills causal relationships from the network configuration and network policy, and projects the causal relationship into an intermediate representation layer, which is to say that the relevant information is processed to determine interrelationships that exist between identified entities. Details of this process will be discussed further below.

When representing an environment configuration as software, tools from the theory of computation, programming language theory, software quality assurance, etc., become potentially applicable to the configuration newly represented as software. Here, a fuzzer processing instance 134 can be used to generate data (e.g., vectors) that can be input into the software representation to determine respective paths that correspond to respective actions or properties leveraged that might be taken by users of the network system. Fuzzers are tools that mutate inputs to a computer program, in order to test its resiliency to errors. Commonly, fuzzers are used to test if variations in an input can result in a crash in the program. By identifying relevant states in the software representation (e.g., as high value states) a mutation engine such as a fuzzer can use seeds and other inputs to explore a software representation in the form of an executable. For instance, any state corresponding to an entity, and possibly one or more conditions (path based or based on global parameters), that is to be protected can be identified by a crash statement which may or may not be encapsulated within a conditional statement. These crash statements are then triggered when a fuzzer provides one or a sequence of inputs to the software representation that causes that crash statement to be executed. In response to the execution of a crash statement a crash report is captured which may comprise a full memory dump which may be processed to build a back trace. The back trace itself may comprise, or allow the determination of, all global variables (and whether those global variables changed during the execution) of the software representation as stimulated by the fuzzer along with the function calls and sequencing of those function calls. The seeds used by the fuzzer can be random, user-supplied, or previously generated by a fuzzer such as when a previous sequence or set of inputs that resulted in a novel or new code path being reached in the software representation is used as a seed for additional exploration. The seeds themselves can be represented as an input vector, either in full or in part, that gets parsed and consumed as a set of state-transition-state inputs and or one or more values for global parameters.

In some embodiments, the mutation process can be directed by encouraging candidate solutions that reach previously un-reached states of a program. Here, the fuzzer is repurposed to rapidly generate crash reports by treating the configuration-as-program (software representation) as a constraint satisfaction problem. For instance, if the software representation is based on data collected by ingesting an Active Directory configuration from an organization's computer network, the fuzzer can be used to determine whether or not an attack path exists whereby an attacker, starting at a particular host in the network with an initially compromised user-credential, can ultimately escalate their privileges to domain administrator. Identity snowball attacks such as these frequently allow attackers to iteratively elevate their privilege, until they ultimately reach their target. One way to represent the configuration as a program in order to answer this question is to structure the program to create a function for each entity (e.g., host, user, or service) in the system, where each of these functions can then make a call to other functions if the called function corresponds to an entity (e.g., host, user, or service) that can be compromised from the calling function. The question of whether or not an attack path exists between some starting entity to a high value state (e.g., a domain administrator), then becomes a question of whether or not a function representing the high value state (e.g., corresponding to a domain administrator), can be reached from the starting function representing the initial entity (e.g., host, user, or service) which may be determinable using a fuzzer.

Generally, fuzzers operate using one or more algorithms to determine what values to generate to stimulate a piece of software. For instance, a fuzzer might use random generation, a mutation engine, a concolic execution process, or a symbolic execution process to generate seeds and stimulate the software representation. Thus, fuzzers can be used to detect a sequence of state changes that could be used to reach a protected entity. For example, the software representation might include one or more crash statements that are triggered when a state representing a protected resource is reached and optionally subject to one or more additional conditions being met - e.g., credentials from a user account are used from a host to access the protected entity where that host is not previously associated with an account that has privileges to access the protected entity. When a crash occurs, debug tools can be used to capture the path that was taken to reach the protected resource by processing a memory dump in a corresponding crash report. This path information can be captured in a crash report at 121 in storage 120 which may also include summary data such as the number of times each crash statement is executed and the number of unique paths identified that triggered the respective crash statements. In some embodiments, the process identifies a portion of a stimulus applied to the software representation that resulted in a crash as a seed (e.g., a vector) for future fuzzing. For instance, if a new region not previously encountered is discovered, the path to that new region might be captured as a seed. This allows the fuzzer to focus the exploration on that region. Operation of fuzzers with regard to the software representation will be discussed further below.

The deployment manager 136 processes the crash reports to determine what information identified in the crash reports should be associated with a corresponding detection signature(s). Essentially, the deployment manager can analyze the crash reports to develop rankings of some or all of the crash report data as represented by one or more state transitions which may be identified in a set of candidate triggers (e.g., list) to determine whether a detection signature should be generated for the corresponding state-to-state (STS) transition. Detection signatures for selected candidate triggers are created using signature creation templates (see 124). Further details will be discussed below. Briefly, each crash report generated as a result of a crash might be analyzed to identify one or more state-transition-state tuples representing state-to-state transitions where a first state is a state the attacker could be in, the second state is the state the attacker can transition to, and where the transition is represented by an action or property that can be used by an attacker to transition from the first to the second state (e.g., a specific user uses and remote desktop protocol access rights to connect to a specific server).

The operation of the configuration executable translator 130, the fuzzer processing instance 134, and the deployment manager 136 can be managed by a security detection controller 138. For example, the security detection controller might initiate the process performed by the configuration to software representation generator 130 (e.g., to generate an initial software representation or to update an existing software representation to reflect changes in the network), control the execution of the fuzzer processing instance 134, and control the generation of detection signatures by the deployment manager 136. In some embodiments, the security detection controller 138 receives detection events from one or more deployed detection signatures and generates one or more alerts in response.

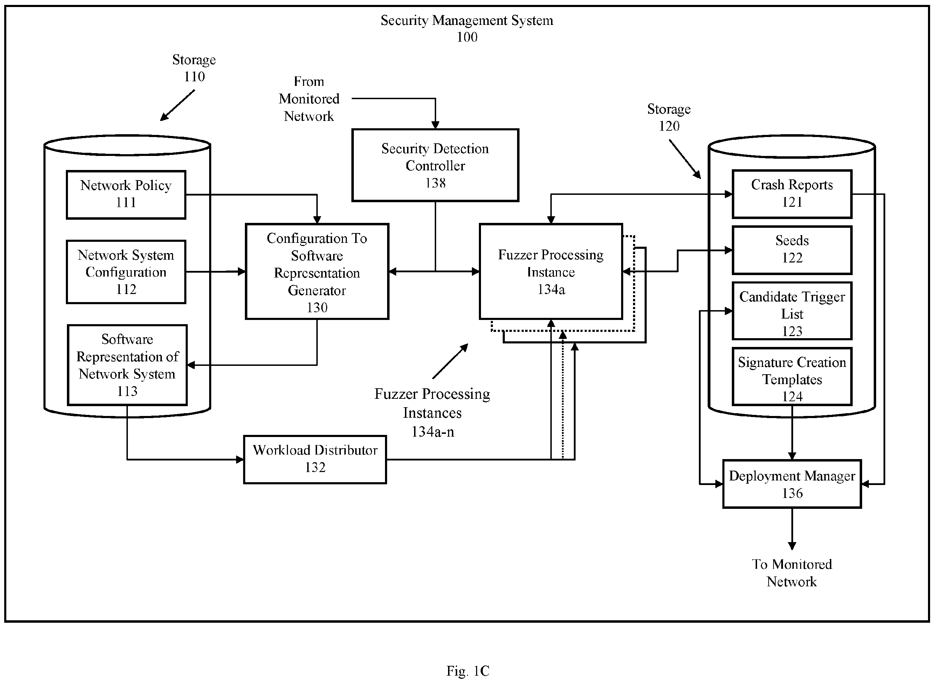

FIG. 1C illustrates an example arrangement of an architecture for network security management that focuses on the security management system 100 according to some embodiments of the invention. FIG. 1C is largely the same as FIG. 1B and thus the description of elements having the same identifier to those illustrated in FIG. 1B also apply to FIG. 1C.

However, FIG. 1C in contrast to FIG. 1B includes a workload distributor 132 and multiple fuzzer processing instances 134a-n (e.g., multiple fuzzers as discussed above in regard to fuzzer 134). In particular, the workload distributor can instantiate multiple fuzzers processing instances (see 134a-n) that can each generate inputs for use in stimulating the software representation. For example, multiple fuzzer processing instances might be created to generate random inputs, to generate inputs based on one or more seeds with a mutation engine, use a symbolic approach to generate inputs, or a concolic execution process to generate inputs. Each fuzzer instance may be located on the same or on different underlying hardware. For example, a single fuzzer may be instantiated on each of a set of computing devices. Alternatively, different numbers of fuzzers may be located on different computing devices based on available resources (e.g., percentage values representing consumption of resources on available computing devices or based on other values such as the number of idle cores or virtual machines available. In some embodiments, the workload distributor issues one or more seeds to different fuzzer processing instances.

In some embodiments, the storage 120 comprises a share directory where multiple fuzzer processing instances 134a-n can collectively share data such as the seeds 122 and generate a single repository of crash reports. In some embodiments, the workload distributor issues one or more seeds to different fuzzer processing instances from the shared data.

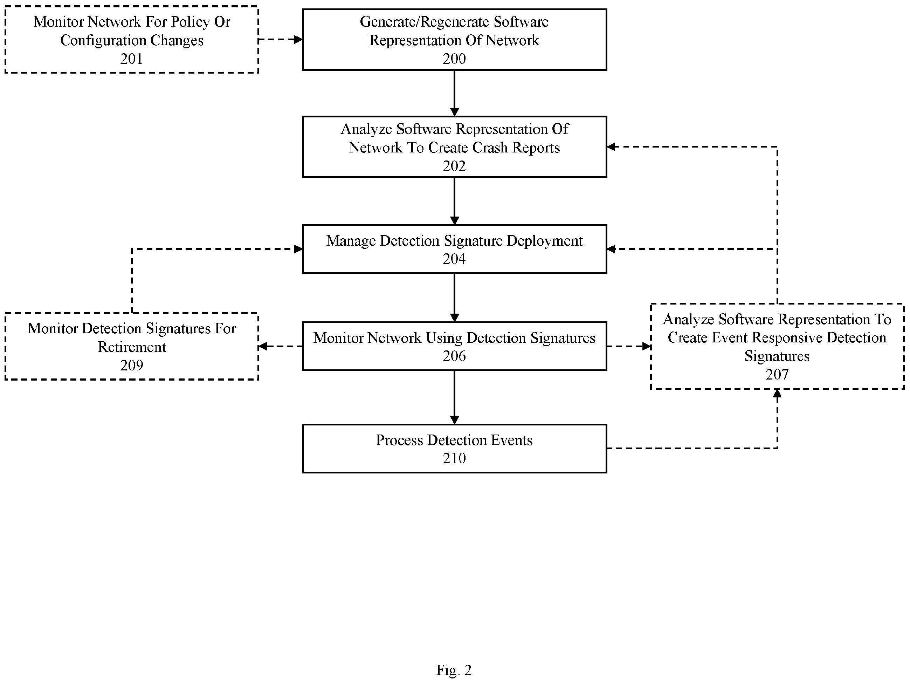

FIG. 2 illustrates a process flow according to some embodiments of the invention. Generally, the flow comprises interrelated steps to generate and analyze network information, manage the creation of detection signatures, monitoring those detection signatures for activation, and processing detection events from detection signatures. Some embodiments may also include one or more of monitoring the network for policy or configuration changes, monitoring detection signatures for retirement, and analyzing the software representation to create event responsive detection signatures.

The process generally starts at 200, where a software representation of the network is generated. This process will be discussed further below. Briefly, the approach identifies entities (e.g., resource that may be protectable) and generates functions that represent each entity as one or more states where transitions between states may occur based on one or more access rights or properties. Each function may be populated with a selection statement that corresponds to respective function calls, where the selection of a function call from within the selection statement is determined based on a corresponding access right, property input, or combination thereof, into the selection statement (e.g., a fuzzer might provide an input to the software representation that corresponds to one of the selection statements to cause a state-to-state transition).

In some embodiments, the network is monitored to detect policy or configuration changes at 201. In the event that such a change occurs the process at 200 can be used to regenerate the software representation. This is important, especially when a user's privileges have been revoked (e.g., a high-level employee leaves the company) because the network security management activities should reflect that revocation. In some embodiments, a detection of a change to the network policy or network configuration data may cause a complete regeneration of the software representation. In some embodiments, the change may be identified and the corresponding function or functions may be identified for removal from or modification of the software representation. In the event that the change in the network policy or configuration will result in the generation of a new function or modification of an existing function, one or more seeds can be identified in order to limit the subsequent processing of the software representation using a fuzzer to the changed functions (e.g., for crash report generation and or management of detection signatures for deployment). In some embodiments, changes to the software representation can be at least partially captured within the software representation in order to maintain and restore associations between collected information and current information. For example, if a change causes a particular state-to-state (STS) transition to no longer be possible (e.g., an access right is revoked) the corresponding transition might be commented out by the configuration to software representation generator 130. Similarly, a change that causes the restoration of a previously removed (commented out) STS transition might be implemented by uncommenting the previous commented section. Additionally, in some embodiments, whenever a modification results in the creation of a previously unidentified STS transition, that transition is added to the software representation and selectable using an input not previously associated with a different transition. In this way, changes to the network configuration data and network policy data do not cause a reshuffling of the approach that leverages use of commenting out no longer existing portions can be used to maintain consistency within the software representation to maintain the applicability of the previously generated crash reports, seeds, trigger candidates and any associated learning or rules to remain applicable. In some embodiments, crash reports generated for a previous iteration of the software representation can be replayed to validate whether that crash report corresponds to a currently valid path (potential attack path).

At 202, the software representation is analyzed using one or more fuzzers to create crash reports. This process will be discussed further below. Briefly, entities are identified for protection. Corresponding functions and conditions are then identified for the entities identified for protection. Crash statements are then inserted into the identified functions. In some embodiments, execution of the crash statements is conditioned on one or more global parameters. Thus, when the process reaches that function corresponding to a protected entity and any corresponding conditions are met, a crash statement is executed. This causes the system to dump the memory state which can be collect in a crash report or processed to create a back trace for storage in a crash report of the activity that resulted in that crash (see Crash Reports 121).

At 204, the crash reports are analyzed to determine what detection signatures if any should be generated to detect behavior corresponding to at least a subset of the crash reports. Briefly, processing of the crash reports may include any of removing loops from within a sequence of state-to-state (STS) transitions where the relevant state and parameters are the same at the start and finish, application of one or more rules, removal of STS transitions that do not have a matching detection signature template, expanding one or more groups of users/machines to their members, removing STS transitions that may correlate only to a known threat or known risk that a user does not want to detect (e.g., an Active Directory server syncing with another Active Directory server). After the initial processing, one or more rules are then applied to select for different STS transitions or sequences of STS transitions. For example, Application of the rules might be used to control a process to analyze the identified chains of events and select specific STS transitions (or sequences thereof) that are the most prevalent (e.g., using a ranking process based on the number of crash reports within which each STS transition or sequence thereof is identified). In some embodiments, once a particular state-to-state (STS) sequence is covered by a threshold number (e.g., 3) of detection signatures, that STS sequence is removed from further analysis for sequence generation (e.g., removed from a global list of STS sequences to be processed). In some embodiments, the STS sequence selection is stopped when a maximum number (threshold) of STS sequences or corresponding number of detection signature are identified, when each STS sequence (or corresponding entity) is covered by a threshold number of detection signatures, or some combination thereof. In some embodiments, STS transitions are ranked based on one or more metrics and a number of detection signatures are then generated using corresponding detection signature templates. These detection signatures may, for instance, specify the set of events that are most frequently identified as leading to a critical state in the environment as reflected in the crash reports. In some embodiments, the detection signatures identify singular actions, a sequence of actions, or repetition of the same action. Further details on the selection of candidate triggers for signature creation is discussed below. Once generated the detection signatures can be deployed at one or more appropriate locations within the network at 206. In some embodiments, a single detection signature is generated for a corresponding behavior. In contrast, in other embodiments, multiple detection signatures are grouped together to detect a corresponding behavior. In some embodiments, activity may be detected using multiple different detection signatures that are aggregated together (e.g., logically linking detection signatures my making the activation of one detection signature dependent on the prior activation of another detection signature). In some embodiments, detection signatures may even be paired in a database such that when one signature is detected a verification can be performed as to whether the pair of that signature is also detected. Such mechanisms can be used to validate whether the corresponding detection signatures are operating correctly.

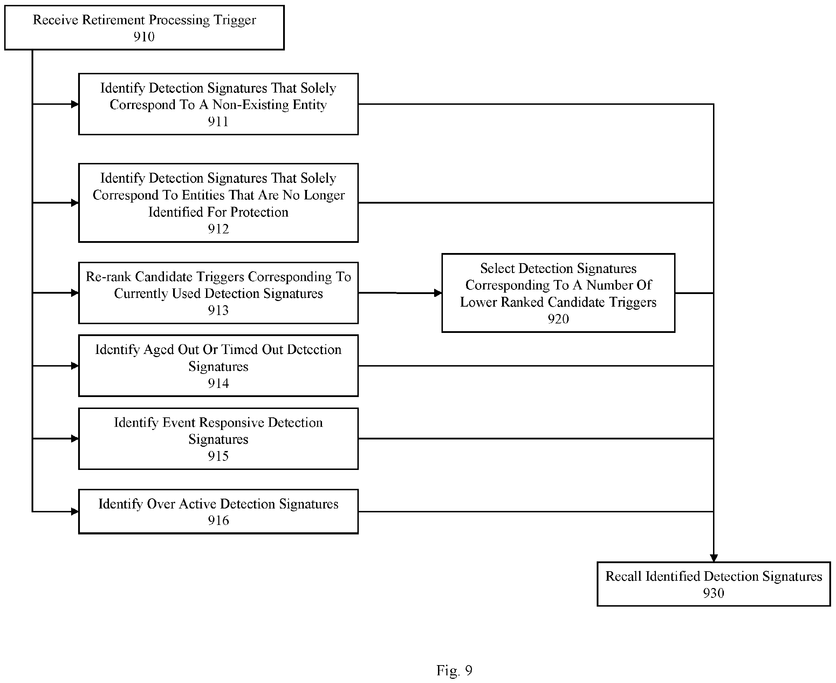

At 209, detection signatures are monitored for retirement. There are various reasons that a detection signature is to be retired including when those signatures time or age out, and when they correspond to a trigger or resource that no longer exists in the software representation or network. Additional details discussed below in regard to FIG. 9.

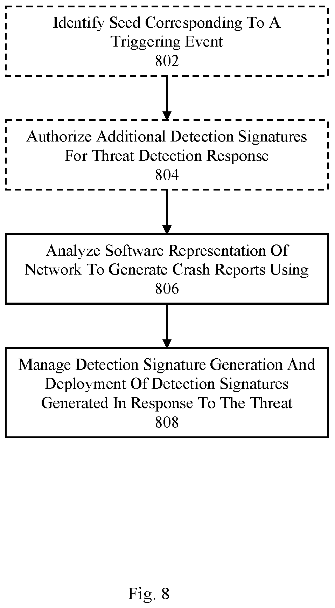

At 210 detection signatures that have been activated are processed. Additional details will be provided herein. However, generally, the signatures are processed to determine if any alert should be generated (e.g., to an administrator), whether any automated action is to be taken (and potentially taking that automated action), and to determine whether additional resources should be directed towards entities potentially at risk by the behavior. Additionally, due to the atomic nature of the detection signatures it becomes possible to create a distributed ingestion engine, which runs on multiple machines or servers. For instance, signatures can be run on individual computers themselves (when the detection signature pertains to, for example, windows event log data, log-on events, windows system events, syslog, sys call trace, authentication log, network traffic, etc.), or alternatively can be run on sensors (e.g., a computing device that is solely dedicated to capturing and processing data to provide to the monitoring system) either on a customer network or in the cloud. The common format of the detection signatures allows for the ingestion function to be distributed across any number of machines or environments, where when a detection signature is activated and generates a detection event, a related log entry can be created and a unique identifier for the detection signature can be returned to an aggregation engine for further processing. For example, when a detection signature is activated, the approach at 207 may implement a process to deploy additional detection signatures logically between the triggered detection signal and one or more protected resources as determined using the software representation. In this way, when a potential threat is identified resources can be tailored to detect further intrusion or progress by a malicious actor towards compromising that resource. Further discussion is provided below in regard to FIG. 8.

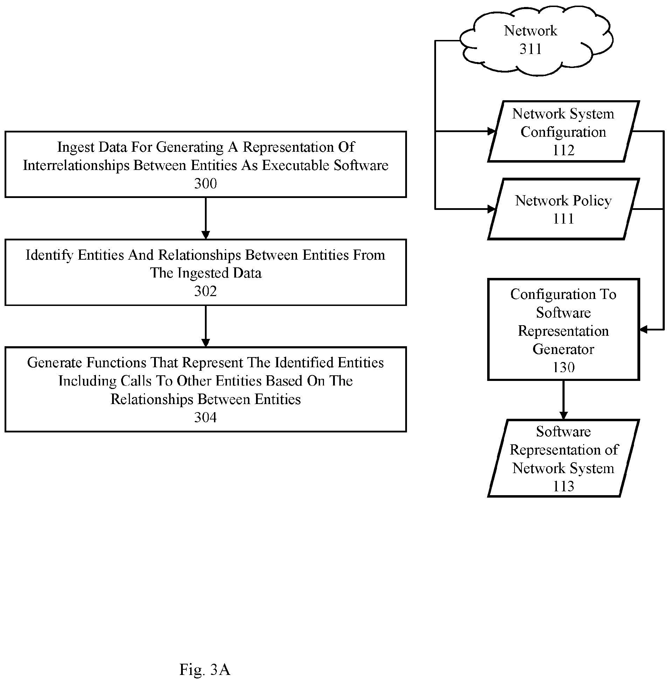

FIGs. 3A-3B illustrate an expanded view for generating a software representation of a network according to some embodiments of the invention.

FIG. 3A illustrates the process for generating a software representation of a network according to some embodiments.

The process starts at 300 where data is ingested into the system in a form that is processible by the system and includes information pertaining to interrelationships between entities. For example, the network system configuration 112 and network policy 111 might be read into memory for processing by the configuration to software representation generator 130. In some embodiments, this process includes identification of the entities, the global parameters, and the transitions.

At 302 the entities and interrelationships are represented. For example, the network system configuration 112 and network policy 111 might be parsed to generate a plurality of separate objects (State-Transition-State tuples) that represent interrelationships between entities. For example, lists generated at 300 might be used to generate a list of state-transition-state tuples that specify which STS transitions are possible - e.g., a relational database table might be generated that includes three or more columns where one column comprises the source state, another column comprises the destination state, a third column comprises a transition or property, and one or more other columns represent global parameter values that must be satisfied for the transition to occur. In some embodiments, the State-transition-state tuples might be represented in a set of commas separated values (e.g., a csv file). In some embodiments, the ingested data is converted into two sets of data, first a set of entities represented by that data (e.g., a list or table), and a set of relationships between those entities (e.g., a collection of three values, two of which are entities and one of which is a relationship between those entities). Here each entity might comprise a computing device, user, domain, group policy object (GPO), key vault, subscription, tenant, resource group, application, virtual machine (VM), group, or organizational unit (OU), or any other entity which may be represented in a network system configuration 112. The relationships between entities might comprise access rights or properties that one entity can use to interact with another entity that may be identified based on the network system configuration and the network policy (e.g., "AddMember", "Admin", "AdminTo", "All", "CanRDP", "CanPSRemote", "Contains", "Delegate", "Execute", "ExecuteDCOM", "GetChanges", "GetChangesAll", "HasSession", "Link", "Member", "Owns", "RemoteControl", "ResetPassword", "SQLAdmin", "Write", etc.). To illustrate, "Contain" is a property that indicates the inheritance of a configuration, whereas "AdminTo" indicates an access right, while both "Contain" and "AdminTo" allow control over a target entity.

Once the entities and interrelationships are generated, they can be converted into a collection of interrelated functions, where each function contains a collection of function calls that are selectable based on a transition or property identified. The selection of respective functions call is to be based on inputs representing usage of an action or property corresponding to a transition to simulate an interaction. In some embodiments, the selection is based on one or more global parameters. In some embodiments, the set of function calls are embedded within switch statements where different functions are called to simulate different behaviors - e.g., identifying a corresponding from state and a corresponding to state that is reachable based on the corresponding transition or property.

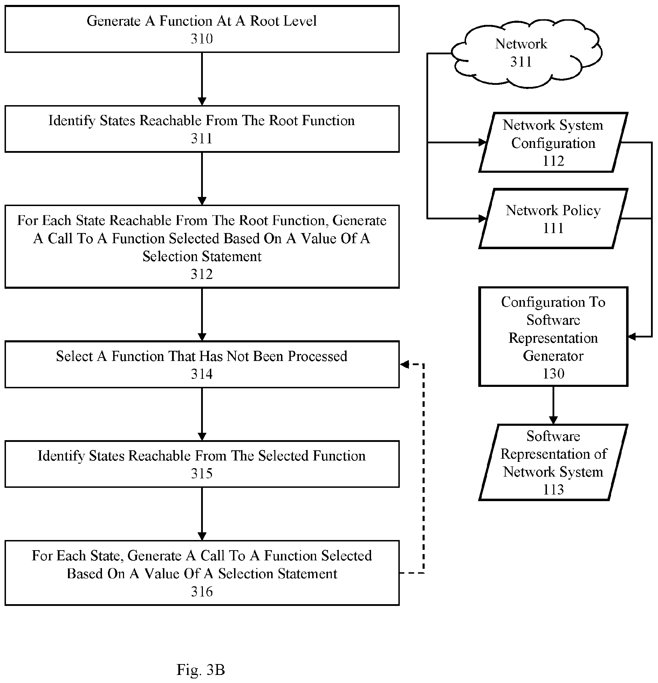

FIG. 3B illustrates the process for generating a software representation including calls to other states based on the relationships between entities according to some embodiments. The example illustrated herein is directed towards the approach to generate functions as discussed above where a function that is initially reachable as a starting point may not include a transition or property identification in the function call (e.g., SOURCE_STATE or SOURCE_STATE_Entry) and a function that is reachable from another function different from the root function is identified by SOURCE_STATE_TRANSITION/PROPERTY where that Entry identifies the transition or property used to reach that SOURCE_STATE_TRANSITION/PROPERTY.

The process starts at 310 where a root function is generated. The root function essentially comprises a blank or default state that generically corresponds to all the entities in the network and where certain states may be identified as starting states that can be reached from the root function. However, the root function does not itself correspond to an entity to be protected.

In some embodiments, at 311, the entities reachable from the root function are identified (e.g., those that can correspond to starting states). For example, states corresponding to entities such as user accounts may be reachable from the root function because the first thing that a user, host, or service does is attempt to gain access to desired resources (e.g., using a user account to access an email server). At 312, function calls are inserted into the root function where each function call corresponds to a state, a set of conditions, and is independently selectable (e.g., using a switch statement similar to those discussed above in regard to FIG. 3A). In some embodiments, each function name for each function call is added to a list of functions to be processed.

The function generation process for the remainder of functions is essentially equivalent. First, at 314, a function is selected for processing (e.g., from a list of functions to be processed that identifies the function name). The function call specified in the list of functions is used to generate a shell for the function. The corresponding state for that function (e.g., identified from the function call) and the states reachable from that function are identified at 315. For example, the functions reachable, and the corresponding transition or property utilized to reach a respective function, is identified from a list or other data structure that indicates the STS transitions (e.g., embodied in a plurality of State-transition-state tuples in a table).

At 316 the functions that are reachable from the selected function are represented as one or more function calls selectable based on an input to a switch statement in the selected function. Each such function call is compliant with a specification that forms the function call (e.g., SOURCE_STATE_TRANSITION/PROPERTY). In the present example, each function call identifies a source state which is the state of the called function. Thus, each function represents a source state and possible destination states that can be reached from any particular source state where the destination states are identified in the function call as a source state. Logically, this is because each function is both a destination and a source. However, because the function call is intended to identify the state that is being transitioned to this is included in the function name and not the calling function. In some embodiments, each function call is processed to determine whether that function call is already on a list of processed or to be processed functions - and added to said list when not already processed or in the list.

In some embodiments, the functions may be interrelated such that one function might be reaching from multiple different paths which may or may not including one or more loops (e.g., sequence of STS transitions that reaches a particular state more than once).

In some embodiments, each entity reachable from the root might correspond to one or more conditions that must be met to reach said entity which may be represented in the select statement. In some embodiments a single state, or function, is used to represent each entity. In some embodiments, an earlier reached entity can be reached from a later reached entity. Such processing may result in different states (corresponding to different entities) being reachable from a current state subject to some modified conditions which may be reflected in an additional function call dependent on one or more different conditions. For example, a first user function is selected. That first user function might correspond to a user that is a member of one or more groups with corresponding group policies. These group policies that the user is a member of correspond to a set of function calls are then generated within a selection statement at 316. For example, these group memberships might be usable to reach another host or service represented as a different function, and that host or service might also include additional rights or credentials which might be usable to reach the same or a different user function, possibly after modification of a relevant property (e.g., a change of rights) or to a user with a different set of rights - which might be representative of an elevation of or change of privilege (either malicious or otherwise). Similarly, some accounts might also be associated with other accounts - e.g., one user account might be usable to control another user account, or one group might be defined by membership in another group. In this way, multiple interrelationships can be mapped to these functions. Thus, the network system configuration 112 and the network policy 111 are be translated at 130 to generate a software representation that can be compiled and executed (see 113). In some embodiment, various global parameter can be generated to represent network wide configuration information, such as a firewall state. Furthermore, the switch statements can include conditional statement that depend on a global or local parameter.

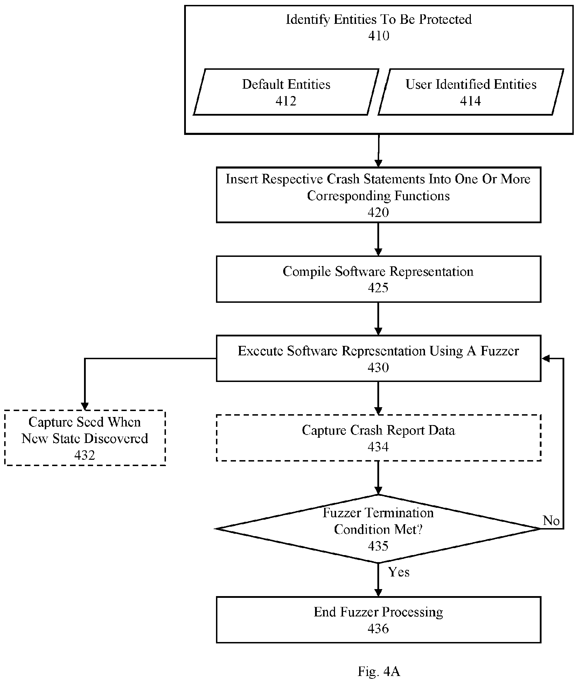

FIGs. 4A-4B illustrate an expanded view for analyzing the software representation of the network to create crash reports according to some embodiments of the invention.

At 410 respective entities in the network are identified for protection. The entities might be identified based on a set of default entities types or rules 412 (e.g., files servers, active directories, tokens services, or other authentication services), and are identifiable by parsing the network system configuration and the network policy. Additionally, a user might identify any entity that they desire to protect (see 414). In some embodiments, different resources (e.g., a server or account) that might be protected could be identified by a user. In some embodiments, a user may also be able to attribute a level of sensitivity of a resource. For example, a server holding crypto material, financial documents, or event specific user mailbox might be identified as being highly sensitive by a user.

Once the entities are identified for protection, crash statements are inserted in the corresponding functions at 420. In some embodiments, execution of the crash statements is subject to one or more conditions. These conditions can be encoded within the software generated itself with the engine verifying whether it is possible to have multiples conditions that are all satisfied at the same time and a crash is achieved only when all conditions are satisfied. As discussed herein, the crash statements can be used to cause the capture of a crash report which may be processed to determine sequences of behavior that might result in the compromise of a resource.

For example, working with the example from Table 1, a state F might be associated with a crash statement. There are multiple ways in which a crash statement might be included. The first is to include a function that will always cause a crash once the function is reached and might comprise any of the following:

```
              int F (){
                             CRASHER () ;break; // Always Crash
                     Return 0;
              }
              int F_OWN (){
                             CRASHER () ;break; // Always Crash
                     Return 0;
              }
              int F_ADMIN (){
                             CRASHER () ;break; // Always Crash
                     Return 0;
              }
```

Additionally or alternatively, a crash may be conditioned on one or more inputs and included as part of a state representation that allows other STS transitions without crashing. For example, as follows where case 3 may be conditionally selected based on an input or global parameter):

```
              int F (){
                      switch(input){
                             case 0: F_ADMIN () ;break; // Member
                             case 1: A_ ADMIN () ;break; // Member
                             case 2: C_ ADMIN () ;break; // Member
                             case 3: CRASHER () ;break; // Member
                     default: break;}
                     Return 0;
              }
```

Here, the CRASHER function is a function that raises a SIGABRT. As illustrated here, a crash statement may be inserted in any function and its executed may be dependent on any combination of current state, a called state, a global parameter, a previously called state, or any combination thereof. In some embodiments, a different function or signal might be raised. For example, any interprocess signal can be used to identify the "crash" and used to collect relevant information. Here, SIGABRT is used because it can be used to cause the creation of a process dump used for generation of the crash report. However, any other relevant technique may be used for this function.

Once the modified version of the software representation that includes one or more crash statements is created, it can be compiled to allow for execution thereof at 425 using one or more fuzzers to generate inputs. As discussed herein the functions can be passed one or more inputs in a function call, or receive one or more inputs from a data structure (e.g., inputs can be provided by passing a pointer to a called function or inputs can be provided by reading an input provided in an input stream. Regardless of how the input is made available to the function, the inputs are generated by one or more fuzzers and are used to evaluate each respective switch statement as appropriate when the modified version of the software representation is compiled to allow for execution thereof at 425.

Fuzzers are tools that mutate inputs to a computer program, in order to test the programs resiliency - e.g., fuzzers generate various inputs in an attempt to crash a program. The mutation process can be directed, for example, by encouraging candidate solutions that reach previously un-reached states of program. Here, the use of the fuzzer on the software representation (see 430) treats network security as a constraint satisfaction problem. For instance, the software representation can be used to determine whether or not an attack path exists whereby an attacker, starting at a particular host in the network (e.g., with an initially compromised user-credential), can ultimately escalate their privileges to a protected resource (e.g., a domain administrator). This question can largely be answered by determining whether or not an attack path exists between some starting state (e.g., a first function) and the protected entity as represented by a state having a corresponding crash statement (e.g., a high value state). Furthermore, by translating the configuration and its constraints into a program, application of a fuzzer enables querying and finding solutions to questions for which the program was structured. There is no requirement that a formal axiomatic system first describe the domain to which the solver is being applied.

At 430 the process executes the software representation using a fuzzer to generate input for the software representation. In certain circumstance, the input from the fuzzer will not result in any functions being called. However, some inputs may result in one or more function calls which may eventually result in the software representing reaching and executing a crash statement. Upon execution of the crash statement at 434 a memory dump is generated and used to create a crash report - e.g., by directly storing the memory dump in the crash report or by processing the memory dump to determine the sequence of state transitions that occurred to reach the crash statement. In some embodiments, multiple fuzzers instances operate in parallel on the software representation - e.g., use copies of an executable form of the software representation.

At 435 a determination is made as to whether a termination condition has been met for the fuzzer. The conditions might comprise any of a number of seeds identified, a number of executions since a seed was identified, a number of crashes captured, a ratio of based on a number of entities to be protected, a number of iterations since a new input or sequence of input has been identified in a crash report, a percentage of the software representation explored, a determination of a threshold convergence level (e.g., as reflected by a number of iterations since a new crash or sequence is encountered), or any combination thereof.

In some embodiments, the conditions for termination can be tied to the selection of a different fuzzing technique. According to some embodiments, the inputs to the software representation solely determine the code path executed (e.g., by means of conditions such as in if statements). The fuzzer then mutates this input, and generates alternative inputs that execute differing code paths. Such an organization allows for the input to be deterministically replayed so that the states previously visited can be revisited using a seed. Furthermore, by structuring the input such that it uniquely encodes a path through the code (where such paths represent candidate solutions), the fuzzer can be parallelized over arbitrary numbers of cores, processors, graphics processing units, and solvers, etc. Additionally, because the input defines the code path, sharing of partial solutions, or otherwise interesting seeds, can be done by sharing the input itself. No coordination or organization is needed between any of the parallel instantiations. In fact, the set of solvers operating in parallel need not even be of the same type. For instance, the fuzzers might comprise any of a randomized data generator, a mutation engine, concolic execution unit, or a symbolic execution unit. However, each approach has different resource requirements with the random approach being the least resource intensive and the symbolic execution approach being the most resource intensive. Thus, the process might initially operate using a randomized data generation approach. After a condition is met that approach might be switched to a mutation engine followed by concolic execution, and/or symbolic execution as determined based on the then current conditions. Finally, in some embodiments, the approach might include previously generated partial and/or complete solutions found during a previous iteration - e.g., such as when a configuration change occurs, where previous solutions that do not result in a crash may no longer be relevant and may indicate that the corresponding resource has been removed from the network. However, if at 435 it is determined that a fuzzer termination condition has been met, the process ends at 436.

In some embodiments, new seeds are capture when a new state is discovered as a result of the stimulus from the fuzzer at 432. The seeds may be stored in seeds 122 which may be accessible by multiple fuzzer instances. As will be discussed further below, the seeds can be used by the fuzzers to guide the fuzzers to explore regions of the software representation that are logically beyond the seed.

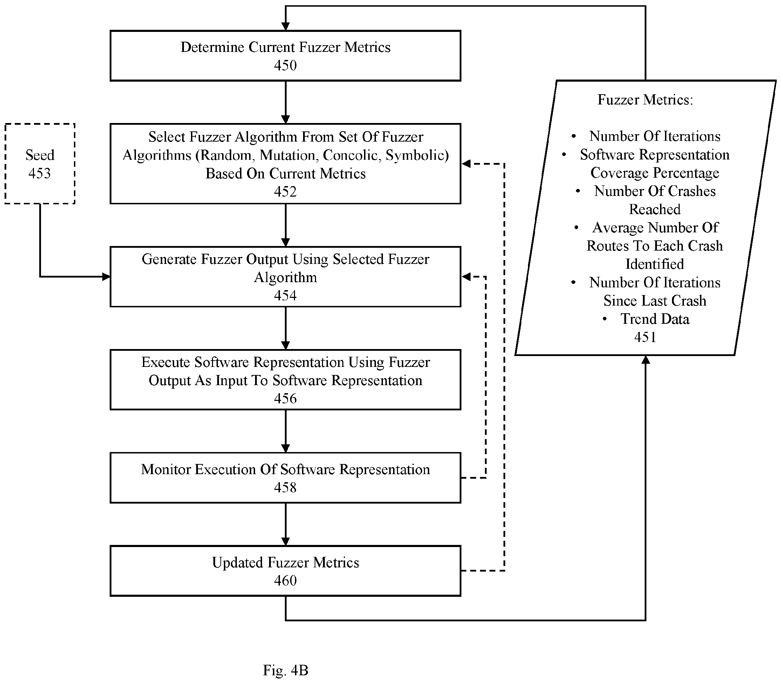

FIG. 4B illustrates an example approach for fuzzer processing of the software representation of the network to create crash reports according to some embodiments of the invention.

The approach illustrated here starts at 450 where a set of current fuzzer metrics are identified. For example, the fuzzer metrics might comprise any of the following: a number of iterations, a software representation coverage percentage, number of crashes reached, an average number of routes to each crash identified, a number of iterations since last crash, trend data for any of the above, a number of execution cycles since a new path or crash has been found, or some combination thereof as illustrated at 451.

At 452 a fuzzer algorithm is selected from a set of available fuzzer algorithms. For example, the fuzzer algorithms could comprise random, mutation, concolic, or symbolic fuzzing approaches as discussed here. Generally, each algorithm will require differing amounts of resources for respective iterations. Because of this, each fuzzer algorithm may be more ideal given one set of conditions vs another fuzzer algorithm. For instance, a random algorithm likely has the lowest resource requirements. Thus, an initial selection of a random algorithm may provide the greatest amount of discovery of the configuration space for the least amount of processing resource. However, the productivity of a purely random approach tends to drop off after a period of time. At which point another algorithm might be selected such as a mutation algorithm where when new regions are discovered the mutation engine can use a seed to focus exploration on those regions. A symbolic approach might be used prior to the concolic approach where a range of possible inputs are used to identify a valid subset thereon - e.g., a symbolic approach might keep different values and their relationship in a pool of all possible values to achieve a specific state which may be executed using a parallel processing approach and seed sharing. A concolic approach might be used to inject a known value to reach a specific know state in the software representation and then additional variation is then applied for further exploration from the known state - e.g., a concolic approach might be used to identify seeds to use in the same or other fuzzers. In some embodiments, multiple fuzzers are distributed across a plurality of different processing resources (e.g., separate cores, central processing units, graphics processing units, memory, and storage), where each fuzzer may be operating using the same or different fuzzer algorithms.

Once the approach is identified the process continues at 454 where the fuzzer output is generated using the selected fuzzer algorithm(s). In some embodiments or algorithms, a seed 453 may be applied. Here the seed comprises a vector that represents one or more input values that can be input into a software representation. The seed or an input vector as used here might further comprise a first portion corresponding to global parameters and a second portion corresponding to actions or properties that might be used to cause one or more state transitions on the entities in the network. These global parameters may correspond to one or more conditional statements which may render different entities reachable (e.g., if a firewall is off then additional entities/functions might be reachable). At 456, this sequence and any corresponding global parameters are input into the compiled software representation. The compiled software then executes by performing a plurality of evaluations to determine which functions to call based on the input values. In some embodiments, the output of the compiled software representation is solely dependent on the input from the fuzzer.

At 458 the execution of the software representation is monitored. In some embodiments, a single input is provided to the software representation where that single input may cause a crash. If a crash is caused it is capture at 434 as discussed above. Additionally, if a state change is identified that corresponds to a state not previously discovered, the sequence of inputs that lead to that state change may be captured in the form of a seed at 432 which may later be provided at 454. Additionally, when multiple fuzzers are supported, the approach may maintain seeds in a shared storage structure (e.g., storage 120 embodied as a shared directory). In some embodiments, the fuzzer may generate an input separately where a single input is provided, followed by an additional input in an input stream when no crash is detected. Thus, the approach can present as a loop where, an input is provided, then another, and another, and so on until either an iteration limit is reached or a crash occurs. Such an approach is presented here as a loop comprising 454, 456, and 458. In some embodiments, the fuzzer generates a single input (e.g., a vector) which may correspond to any number of sequential operations, and where one area of variation generated by the fuzzer is the number of sequential operations to which the fuzzer output corresponds.

At 460, fuzzer metrics are collected and updated. This may include updating any of the fuzzer metrics discussed herein such as in regard to 451. Additionally, the fuzzer metrics may be used as discussed above in regard to 435 to determine whether the fuzzer algorithm may advantageously be changed by returning the process to 452.

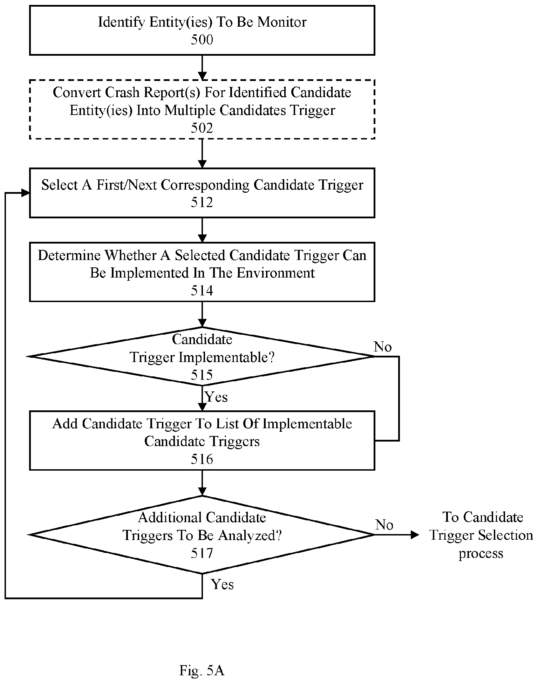

FIGs. 5A-5B2 illustrate an expanded view for managing detection signature deployment according to some embodiments of the invention .

FIG. 5A illustrates a first portion of an approach for managing detection signature deployment according to some embodiments of the invention. The illustrated approach comprises a process for determining whether a detection signature can be generates for the corresponding candidate trigger.

The process states at 500 where one or more entities are identified for monitoring. In some embodiments, this merely comprises all entities identified in 410. However, in other embodiments, the entities comprise a subset of the entities identified in 410. For example, a user might decide to initially roll out protection only for Active Directories. Thus, the user could select or otherwise identify any active directories for monitoring. In addition, this approach can be useful for focusing detection resources where they are perceived to be more useful. For example, if a potential breach is identified as being in progress (e.g., because an actor has completed a subset of the steps that would enable that attacker to reach a protected entity) the current state reached by the attacker, or a sequence of actions used or necessary to reach that state could be captured as a seed. That state or seed could then be used to analyze the software representation to determine resources that are reachable from that state including a minimum distance required (distance here being a number of STS transitions corresponding to function calls). Those identified resources might then be analyzed to create a set of detection signatures that provide further protection. This could also be combined with further exploration of the software representation using one or more fuzzers as discussed above. In some embodiments, instead of using a seed-based approach, the software representation can be configured to have a starting state that is at the corresponding state (e.g., the state corresponding to a potential breach that is in progress) and that has the same global and local parameter values.

In some embodiments, once the entities to be protected are identified corresponding crash reports are identified and processed into one or more candidate triggers at 502. For example, a single crash report might comprise any number global or local parameters (and possibly changes thereto) corresponding to one or more function calls in the software representation. Any combination of the global parameters, local parameters, or state-to-state transitions can be selected as a candidate trigger, whether comprising a single state-to-state transition or multiple state-to-state transitions. For example, a sequence corresponding to three state-to-state transitions (e.g., from a1 to a2, a2 to a3, and a3 to a4 in that order) could be used to generate a number of candidate triggers by capturing the individual transitions or by capturing a sequence of transitions (e.g., any of {a1 to a2 to a3 to a4}, {a1 to a2 to a3}, {a1 to a2 and a3 to a4},{a2 to a3 to a4}, {a1 to a2}, {a2 to a3}, or {a3 to a4}). In some embodiment, each STS transition might be associated with one or more global parameters which must be matched (to satisfy a condition) to make any particular STS transition possible. In some embodiments, a threshold number of STS transitions might be required for each trigger candidate (e.g., 3). In particular, in some circumstances, as the number of STS transitions increases the likelihood that detection of corresponding activity is malicious also increases. Thus, in some embodiments, a threshold number of STS transitions might be required for each candidate trigger (e.g., threshold number of STS transitions in a sequence).

The candidate triggers identified at 500 and/or 502 are then processed at 512, 514, 515, 516, and 517 using an inner and outer loop. At 512 a first or next corresponding candidate trigger is selected. Once selected, the candidate trigger is analyzed to determine whether the candidate trigger corresponds to a transition that can be detected in the environment. Here, this comprises determining whether a detection signature template exists that can detect the corresponding transition for the entities represented by the candidate trigger. If the candidate trigger can be implemented as a detection signature as determined based on the existence of a matching detection signature template, then at 515 the process continues to add the candidate trigger to a list of implementable candidate triggers at 516 (see also candidate trigger list 122). In some embodiments, if only a portion of a candidate trigger is determined not to be implementable, the candidate trigger is only added to the list of implementable candidate triggers if a threshold number of STS transitions determined to have corresponding detection signature templates. In some embodiments, one or more STS transitions are whitelisted to avoid further use. In the event that a white list is implemented, the white list is used to identify matching candidate triggers where those matching candidate triggers are excluded from the list of implementable candidate triggers. In some embodiments, detection signature templates that are unreliable or otherwise difficult to implement (e.g., the require consumption of too much resources, require access to a device that is not accessible, or then provide inconsistent detection) are removed from the set of detection signature templates used to determine whether a particular candidate trigger is implementable. Finally at 517 if there are additional candidate triggers to be analyzed, the process returns to 512. Otherwise, the flow proceeds to a trigger selection process.

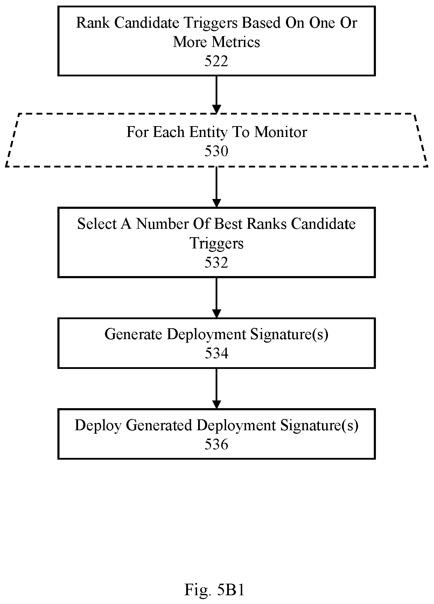

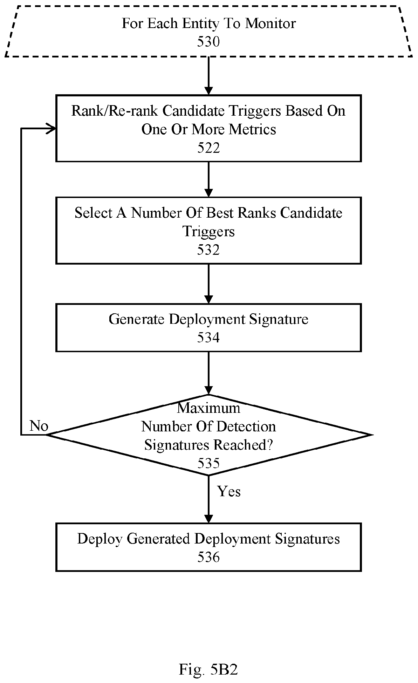

FIG. 5B1 illustrates a second portion of an approach for managing detection signature deployment according to some embodiments of the invention. In some embodiments, all candidate triggers that can be used to generate a detection signature are generated and deployed. However, in some embodiments, the number of detection signatures deployed at any one time may be limited to manage resource consumption of the security processes and latency of the time to process network events to determine whether they trip a detection signature. The present figure provides an approach to rank the candidate triggers to allow for selection of a limited number of candidate triggers and thus the generation of a limited number of detection signatures.

The approach starts at 522 where the candidate triggers previously identified (e.g., as discussed above in regard to FIG. 5A.) are evaluated. Candidate trigger evaluation may be performed in any number of ways. For example, candidate triggers may be evaluated based on any metrics such as a number of protected entities (determined based on corresponding states) that are reachable from the last state of the candidate trigger, a logical distance to a protected entity (e.g., minimum number of STS transitions to reach a state corresponding to the protected entity), a number of other candidate triggers or corresponding crash reports that share the same candidate trigger, minimal coverage level of an entity identified for protection, minimal depth of STS transitions per trigger (e.g., minimum number of states traversed to minimum number of STS transitions), prevalence of occurrences in the environment, deployment difficulty (e.g., where a trigger might be difficult to deploy due to encryption of relevant information or data obfuscation), or any combination thereof. In some embodiments, actual or inferred counts or frequencies might be generated (e.g., based on historical triggering data). This can be used to avoid the selection of a candidate trigger that would correspond to a detection signature that would be constantly tripped.

The candidate triggers may be processed on an entity-by-entity basis as indicated at 530, or as a whole, or some combination thereof. The process starts at 532 where a number of best ranked candidates are selected.

In the case of processing the resources as a whole, a number of the best ranked candidate triggers are selected. However, while processing the candidate triggers as a whole allows for leveraging of trigger candidate STS transition overlap it does not guarantee that each protected entity is associated with a minimum number of detection signatures or candidate triggers.

When the individual entities are processed separately, the best ranked candidate triggers are selected for each respective entity (e.g., candidate triggers that were identified from a crash report corresponding to the respective entity). For example, the candidate triggers may be processed first by selecting the best candidate triggers for each respective entity (e.g., the best 25 as ranked based on the number of crash reports including the corresponding sequence of STS transitions). In some embodiments, a selected candidate trigger for one entity might overlap with some or all of the selected candidate triggers for another entity - e.g., due to one or more shared routes to the entities as represented by the software embodiment of the network. In some embodiments, once each individual entity has a minimum set of candidate triggers selected, a second pass can be performed to select the best overall candidate triggers. Overall candidate triggers may and likely will overlap with at least some of the candidate triggers selected for other entities.

In some embodiments, the best overall candidate triggers might be selected first followed by selection of candidate triggers for respective entities. In some embodiments, the candidate triggers selected can be selected only once. For example, the overall best candidate triggers are selected (e.g., number selected = x * the number of entities to be protected), and then candidate triggers selected for respective entities are selected that do not overlap with the overall best candidate triggers. In some embodiments, an enforcement mechanism is provided to force candidate triggers selected for one entity not to overlap with candidate triggers selected for other entities. In some embodiments, a relative importance (e.g., weight) might be applied to each entity to be protected and used to determine a number of candidate triggers or detection signatures to be allocated. For example, a maximum number of candidate triggers or detection signatures might be identified from which a portion is allocated to protection of each entity that is proportional to each entity's relative importance. In some embodiments, the relative importance is inversely proportional to the number of STS transitions, or sequences thereof, selected for generation of detection signatures.

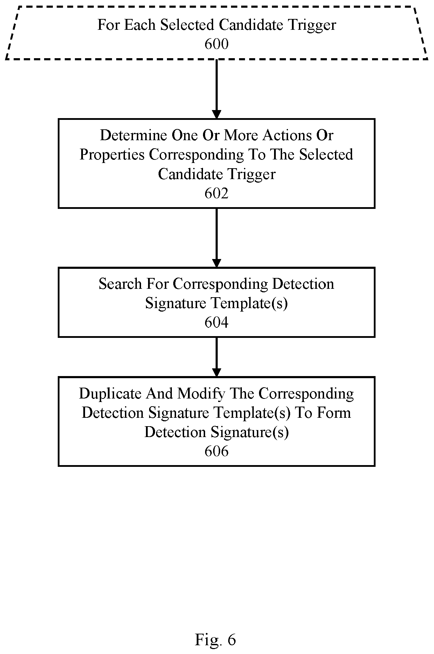

Once candidate triggers are selected, they can be converted to one or more deployment signatures at 534. This process is discussed further in regard to FIG. 6. Briefly the candidate triggers are mapped to their corresponding actions or properties which are then used to select one or more detection signature templates that can be tailored to detect the indicated activity when deployed at a corresponding location - e.g., within a host in the network. Finally at 536, the generated detection signatures are deployed at corresponding locations.

FIG. 5B2 illustrates a second portion of an approach for managing detection signature deployment according to some embodiments of the invention.

As with FIG. 5B1, FIG. 5B2 illustrates an approach that ranks candidate triggers based on one or more metrics at 522 (see description of 522 in regard to FIG. 5B1), selects a number of best ranked candidate triggers at 532 (see description of 532 in regard to FIG. 5B1), generates deployments signatures at 534 (see description of 534 in regard to FIG. 5B1), and deploys the generated deployment signatures at 536 (see description of 536 in regard to FIG. 5B1). However, in contrast to the approach illustrated in FIG. 5B1, the approach illustrated here implements a looping process that ranks at least a subset of the candidate triggers based on what candidate triggers have already been selected until a maximum number of candidate triggers are reached at 535. For example, candidate triggers may be ranked based on at least a number of protected entities, or paths there to, that might be compromised using a state-to-state transition (e.g., a state-to-state transition or sequence thereof that may be used to compromise a protected entity).

Fig. 6 illustrates an expanded view for monitoring the network using detection signatures according to some embodiments of the invention. The approach may be used to generate detection signatures that detect a single state-to-state transitions or to detect a group or sequence of state-to-state transitions. In some embodiments, detection events from one or more detection signatures may be aggregated to determine whether to trigger a responsive event (e.g., alert or automated action).

The process starts are 600, where for each candidate trigger a processing flow is initiated. In some embodiments, the candidate triggers are processed sequentially using a single processor. In some embodiments, multiple different processors can process different candidate triggers in parallel. This allows the processing burden to be distributed and the time to complete the signature generation process to be decreased.

At 602 a selected candidate trigger is processed by first determining one or more transitions or properties used to cause one or more state-to-state (STS) transitions in the selected candidate trigger (e.g., the STS transitions in the candidate trigger can be identified). For example, for each STS transition any of a protocol, feature, service, source, destination, property, transition is identified. In some embodiment, each transition may be associated to one or more detection signature templates.

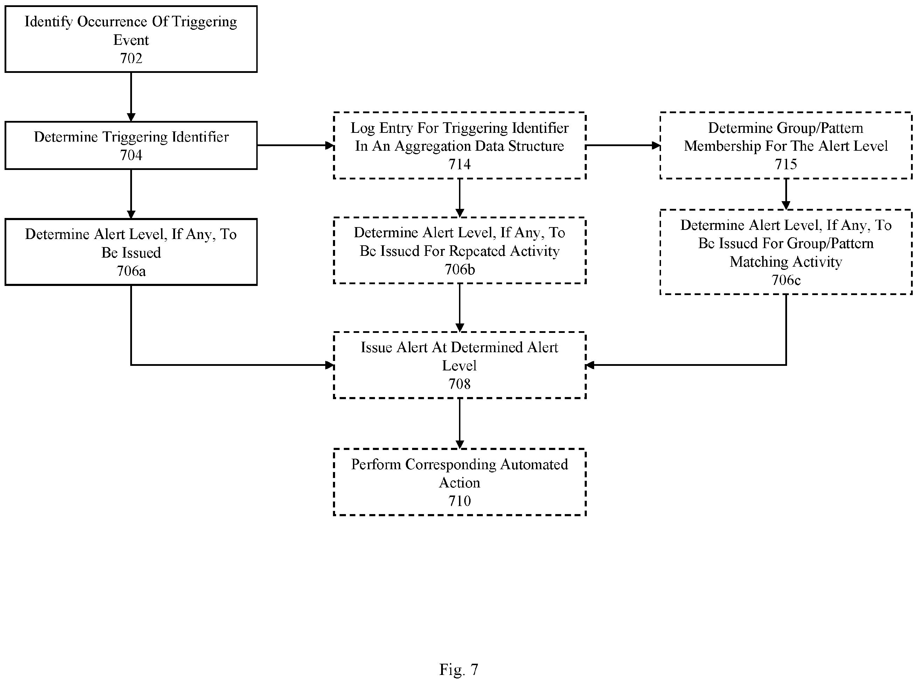

At 604 the process searches the detection signature templates to identify one or more templates that correspond to the candidate trigger. Generally, a signature template is cookie cutter security product signature where a number of fields are to be populated with information corresponding to the STS transition(s) represented by the candidate triggers. For example, a first field might comprise the transition, a source type (e.g., user, machine, or GPO) and possibly a source identifier, destination type (e.g., a user, group, or machine) and possibly a destination identifier. The template itself, once populated, represents a signature to be deployed in one or more security products. For example, a first template might correspond to a first way to detect the corresponding action or use of a property to cause a state change and a second template might correspond to a second way to detect the corresponding action or use of a property to cause a state change. For instance, if a candidate trigger is defined as user: "bob" -> RDP -> server: "Finance" at least three different detection signatures might be generated. A first detection signature that operates on network traffic - a detection signature that identifies an RDP (remote desktop protocol) communication for user "bob" where the destination server is "Finance". A second detection signature that operates on authentication log data that identifies the source as "Finance" and the user is "bob". A third detection signature that is implemented at an endpoint detection and response (EDR) agent where the user context is "bob" and a TCP flow to "finance" is identified. In some embodiments, the candidate trigger corresponds to a group or sequence of actions, where multiple templates may be combined in a single detection signature or where separate processing logic may be implemented to determine whether an action is necessary to address a one or a combination of detection events from a set of deployed detection signatures (see discussion of FIG. 7).

Once the corresponding detection signature or detection signatures are found, the process proceeds to 606, where the detection signatures are duplicated and populated with the corresponding information. For example, the source and target state information are input (e.g., this might comprise a source IP address and a destination IP address, a characteristic such as group membership or another identifier). In some embodiments, the detection signature template is also processed to include one or more conditions to be met to determine whether the detection signature should be triggered. In this way, detection signatures are generated that are ready to be deployed.

A discussion of example detection signatures and templates follows according to some embodiments. Generally, a detection signature template is written by one skilled in the art to detect a potentially relevant event indicative of the corresponding transition or property begin detected. Such detection signatures templates may be maintained in a library of detection signature templates (see e.g., signature creation templates 124) which may be further cataloged and classified.

In some embodiments, each detection signature template will include an identifier ("ID"), a specification of the corresponding property or transition being used, information that directly specifies or can be used to determine a type for the detection signature template, and a pattern to be matched. In some embodiments, the "ID" value is unique to each template and can be used to log triggering events (e.g., each log entry is identified by the "ID" and the corresponding pattern match). In some embodiments, an instance identifier (e.g., Instance_ID) is be provided either, in addition to the existing ID, appended to the detection signature template (e.g., more specifically to the existing ID EXISTING_ID-APPENDED _ID), or as a replacement ID (e.g., the Instance_ID replaces the detection signature template ID). In some embodiments, the type of the detection signature template might be specified within the detection signature template (e.g., In a "Type" parameter), in a dataset associated with the detection signature template (e.g., in a relational database table entry that associates the detection signature template ID with a corresponding type identification), or determinable based on information within the detection signature template (e.g., based on a data source). In some embodiments, the type corresponds to a deployment location classification (e.g., on a network, at a source, at a destination or endpoint, at an authentication service).

As discussed herein, detection signature templates can be maintained for different transitions or properties. A non-exhaustive list of transitions/properties might comprise any of the following: "AddMember", "Admin", "AdminTo", "All", "CanRDP", "CanPSRemote", "Contains", "Delegate", "Execute", "ExecuteDCOM", "GetChanges", "GetChangesAll", "HasSession", "Link", "Member", "Owns", "RemoteControl", "ResetPassword", "SQLAdmin", or "Write". In some embodiments, detection signature templates might be divided into different types as discussed above based on at least the type of information they are used to process (e.g., network detection signatures, authentication detection signatures, source detection signatures, endpoint detection signatures). In some embodiments, a single transition or property might be associated with multiple different detection signature templates (e.g., detection signature templates of different types or detection signature templates that are of the same type but detect the transition or property in a different way). Using our example of account "bob" using RDP to access a target server, a detection signature instance might be generated from respective detection signature templates to detect the RDP activity in different ways. For instance, a first detection signature that operates on network traffic - a detection signature that identifies an RDP (remote desktop protocol) communication for user "bob" where the destination server is the "Target server". A second detection signature that operates on authentication log data that identifies the source as "Target server" and the user is "bob". A third detection signature that is implemented at an endpoint detection and response (EDR) agent where the user context is "bob" and a TCP flow to "Target server" is identified. A fourth detection signature that operates at the source using windows host eventing.

In some embodiments, a detection signature template includes a protocol field that specifies a corresponding protocol over which the access right or property can be utilized. Here, the protocols may include traditional communication protocols and other security or monitoring protocols. For example, the protocol might be any of a communication session detected from a packet on a network, a windows event, or any other any source or destination events that have a specified protocol for management (e.g., logging, notification, etc.).

In some embodiments, the detection signature template includes a pattern that provides a set of additional information that must be matched in order to cause the activation of the detection signature. For instance, the pattern might specify one or a set of protocols, one or more entities that utilize that protocol (e.g., a source or destination). In some embodiments, the pattern corresponds to specific entities (e.g., hosts or accounts) or information corresponding to those entities (e.g., IP address). In some embodiments, one or more entities might be represented by group membership or multiple entities (e.g., in a list or sequence). For example, a list or reference to a list (e.g., based on a group identifier) could be provided in a populated detection signature template and used to cause the output of a corresponding alert when corresponding preconditions are met (e.g., the type of transition or property is identified at a corresponding location). In some embodiments, a single detection signature template might include multiple different patterns, which when detected in combination or separately may be used to trigger a corresponding alert (e.g., host pattern, network pattern, authentication pattern, or EDR pattern).

For instance, a generic pattern might be defined as follows:

```
              "ID": "NUMBER",
              "Config": "TRANSITION/PROPERTY",
              "TYPE1 Pattern": " "TYPE1_PATTERN_MATCHING_RULE(S)" msg:
              "OUTPUT MESSAGE ON TYPE1 PATTERN MATCH",
              "TYPE2 Pattern": " "TYPE2_PATTERN_MATCHING_RULE(S)" msg:
              "OUTPUT MESSAGE ON TYPE2 PATTERN MATCH",
              "TYPE3 Pattern": " "TYPE3_PATTERN_MATCHING_RULE(S)" msg:
              "OUTPUT MESSAGE ON TYPE3 PATTERN MATCH",
              "TYPE4 Pattern": " "TYPE4_PATTERN_MATCHING_RULE(S)" msg:
              "OUTPUT MESSAGE ON TYPE4 PATTERN MATCH"
```

Here, the ID field contains a unique identifier for the detection signature template (e.g., "NUMBER" is replaced with a unique numerical value "1234"), "Config" specifies the transition or property being used (e.g., any of those provided herein or otherwise possible). The pattern statements each comprise a pattern to be matched and a corresponding message to be generated in the event of a pattern match. For instance, TYPE1_PATTERN_MATCHING_ RULE(S) would be replaced with a pattern (e.g., embodied in a set of one or more rules) to be matched, and the OUTPUT MESSAGE ON TYPE1 PATTERN MATCH would specify the corresponding message to be generated should that pattern be matched. Similarly, in some embodiments multiple patterns could be provided (see types 2, 3, and 4 patterns) within a single detection signature template whether of different types as illustrated here, or of the same type for detection in a different way. In some embodiments, the output message may comprise or be based on existing logging or tracking systems. For example, windows event logging and active directory logging may be used to automatically generate detection information which may be processed by filtering for the relevant information to determine if an alert should be generated at a later time.

Detection signature templates might be organized according to the following:

```
              "ID": "1000",
              "Config": "AdminTo",
              "Protocol": ["RDP","WMI","WINRM","SCM"]"isession"
              "Pattern": orig_hostname:$orig$ AND resp_hostname:$resphostname$ AND
              service:RDP
 
               "ID": "2000",
              "Config": "CanRDP",
              "Protocol": "RDP"
              "Pattern": orig _hostname:$orig$ AND resp _hostname:$resphostname$
 
              "ID": "3000",
              "Config": "ExecuteDCOM",
              "Protocol": "DCERPC"
              "Pattern": orig_hostname:$orig$ AND resp_hostname:$resphostname$ AND
              operation:RemoteActivation
 
               "ID": "4000",
              "Config": ["GetChanges","GetChangesAll"],
              "Protocol": "Kerberos",
              "Pattern": orig_hostname:$orig$ AND service:*E3514235-4B06-11D1-AB04-
              00C04FC2DCD2\/*domain$
 
              "ID": "5000",
              "Config": "All",
              "Protocol": "Kerberos",
              "Pattern": client:$account$V* AND service:*domain$ AND request_type:TGS
```

Where WMI is windows management instrumentation, WINRM is windows remote management, SCM is service control manager, and DCERPC is distributed computing environment remote procedure call. Here, a value ending in the symbol "$" is replaced with the thing or membership to be detected by the pattern. For instance, an origination host ("orig _hostname"), a response host ("resp_hostname"), an account ("client"), or domain ("service"). In some embodiments, multiple protocols may be listed where any one of which may satisfy the corresponding field.

For instance, a particular detection signature template might be defined as follows:

```
              "ID": "0003",
              "Config": "ExecuteDCOM",
              "Host Pattern": "Event | where Source == \"Microsoft-Windows-
              DistributedCOM\" | where UserName in (\"$Assigned_Variable_1$\") | where
              EventData contains \"$Assigned_Variable_2$\" |
              (msg: \"DCOM\" src=UserName, dst=Destination Host")"
```

Here, the ID field contains a unique identifier for the detection signature template ("0003"), "Config" specifies the transition or property being used ("ExecuteDCOM"). pattern is a "Host Pattern" which is to be populated with the relevant information (e.g., Assigned_Variable_1 and Assigned_Variable_2). If the patterns is matched a detection signature message is generated that indicates a DCOM event and the source username and destination host. Values within "$" symbols are dynamically generated by populating the corresponding value based on the selected candidate trigger being implemented as a detection signature instance.

A second detection signature template is provided below for detection of an SQLAdmin event.

```
              "ID": "0004",
              "Config": "SQLAdmin",
              "Network Pattern": "alert tcp \"$Assigned_Variable$\" any -> any 88
              (msg:\"SQLAdmin\"; flow:established,to_server; content:\"MSSQLSvc\";
              content:\"$Assigned_Variable $\";)"
```

Additional examples are provided below where both a host and a network pattern are provided. Here both patterns share the same message. Thus, if either pattern is matched, a corresponding message is generated.

```
              "ID": "0001",
              "Config": "CanPSRemote",
              "Host Pattern": "SecurityEvent | where EventID == \"4624\" | where
              LogonType==\"10\" | where Account == \"$Assigned_Variable_1$\" | where
              Computer == \"$Assigned_Variable_2$\"",
              "Network Pattern": "alert tcp \"$Assigned_Variable_3$\" any ->
              \"$Assigned_Variable_4$\" [5986,5985,1270]"
              (msg: \"CanPSRemote\"; flow:established,to_server; content:\"POST
              /wsman\"; depth:11; fast_pattern; content:\"Content-Type|3a
              20|application/soap+xml\"; distance:0; content:!\"Authorization|3a 20|\";)"
  
              "ID": "0002",
              "Config": "CanRDP",
              "Host Pattern": "Event | where EventID == \"1024\" | where UserName ==
              \"$Assigned_Variable_1$\" and EventData contains
              \"$Assigned_Variable_2$\"",
```

"Network Pattern": "alert tcp \"$Assigned_Variable_3$\" any-> \"$Assigned_Variable_4$\" 3389 (msg:\"CanRDP\"; flow: to_server,established; content:\"|03|\"; offset: 0; depth: 1; content:\"|E0|\"; offset: 5; depth: 1;)"

In some embodiments, a pattern corresponds to a windows event which is associated with a logging apparatus. For example, a windows event (see "ID" 0001 "Host Pattern" corresponding to windows EventID 4624) might be associate with a logging action of the occurrence of the event and potentially a transmission of that log or a corresponding log entry to a processing element that leverages existing logging processes built into windows. In another example, a message format can be provided for use by a relevant detection apparatus (e.g., the Snort intrusion detection system). Additionally, as illustrated, 5986, 5985, 1270, and 3389 all indicate TCP ports that are to be matched for the relevant pattern. Similarly, in detection signature templates 0001 and 0002, "any" indicates that the source may use any port to transit the relevant information (e.g., using TCP).

Some example STS transition detection signatures are provided below. First, for the STS transition Bob->CanPSREMOTE->ServerA, might comprise the following which includes a corresponding host and network pattern identified by "SecurityEvent" and "alert" respectively:

```
SecurityEvent | where EventID == "4624" | where LogonType=="10" | where
              Account == "Bob" | where Computer == "ServerA"
              OR
              alert tcp Bob_Machine" any -> ServerA [5986,5985,1270]
              (msg: "CanPSRemote"; flow:established,to_server; content:"POST /wsman";
              depth: 1 1; fast_pattern; content:"Content-Type|3a 20|application/soap+xml";
              distance:0; content: ! "Authorizationl3a 20|";)
```

Second, for the STS transition or Joe->ExecuteDCOM->ServerB, might comprise the following:

```
              Event | where Source == "Microsoft-Windows-DistributedCOM" | where
              UserName in ("Joe") | where EventData contains "ServerB"
```

(msg: "DCOM" src=Joe, dst=ServerB")

Third, for the STS transition or ServerC->SQLAdmin->ServerD, might comprise the following:

```
              alert tcp ServerC any -> ServerD 88
              (msg:"SQLAdmin"; flow:established,to_server; content:"MSSQLSvc";
              content: "ServerD";)"
```

As can be understood from the description and illustrations provided herein, other detection signature templates and detection signature instances may be generated using the disclosed techniques.

Fig. 7 illustrates an expanded view for processing activated detection signatures using the software representation according to some embodiments of the invention. The approach illustrated herein is only one approach that may be possible.

The process starts at 702 where a triggering event is detected (e.g., an event generated when a detection signature identifies information matching the detection signature). For example, a network packet is processed and determined to match a detection signature, which causes the generation of a notification that the detection signature was triggered. In response, a triggering identifier is determined at 704. For example, the triggering identifier might be determined based on an identifier passed from the detection signature template to the detection signature instance, and passed to the process at 702 via a triggering event. In some embodiments, the detection signature instance includes an instance identifier (which may comprise a concatenation of the identifier from the template and an additional template) which can be used to determine the specific conditions met. In some embodiments, the specific conditions that satisfied the detection signature are provided as part of the triggering event.

At 714, a log entry is generated for the triggering identifier in an aggregation data structure. For example, a log might be organized as a set of sequential data where each entry is placed at the beginning or end of the log to maintain a sequencing relationship between log entries. In some embodiments, the log entries might comprise a tabular representation for a corresponding time period. Each log entry identifies the detection signature corresponding to each triggering event, any relevant values, and a time of occurrence.

At 715, a determination is made as to whether the triggering identifier is a member of a group or pattern of triggering occurrences. For instance, a sequence of state-to-state transitions might be captured using multiple detection signatures that individually detect one state-to-state transition of a sequence of state-to-state transitions. In some embodiments, the group or pattern membership might correspond to multiple patterns in a group - e.g., where a first pattern proceeds a second pattern or where the first and second patterns are both indicative of a risk of compromise to the same resource.

At 706a-c the corresponding alert levels are determined. In some instances, no alert is generated (e.g., only the logging activity is performed). In other embodiments, one or more alerts are generated. For instance, at 706a the alert level is determined solely based on the single triggering event without consideration of aggregated events or repeated occurrences of the same or related occurrences. At 706b, the alert level is determined based on repeated activity represented by the same triggering event. For instance, three occurrences of the same activity may correspond to consistent bad behavior and thus a corresponding alert might be generated based on the number of the occurrences. At 706c, the alert level is determined based on group or pattern activity. For example, a pattern may be detected or partially detected corresponding to the triggering event e.g., the triggering event comprises a subset of a pattern or is part of a group. As illustrated here (e.g., based on a sequence of detection signature instance identifiers), each alert level is determined independently.

However, at 708 Any alerts that are determined at 706a-c are processed to determine which if any should be issued (e.g., at the determined level). In some embodiments, all alerts are issued. In some embodiments, only the highest-level alert is generated (e.g., an alert generated based on a repeated activity has a higher level than an alert generated based on a singular action, and an alert generated based on group membership or a pattern of activity has the highest alert level). In some embodiments the alerts may be combined into a single alert to be provided together. The alerts may be transmitted using any combination of email, text message, recorded audio message, or prompt on a user interface. At 710 any automated actions are performed. For instance, password resets, shutdown, or lock out of accounts or resources.

Fig. 8 illustrates an expanded view for analyzing software representation to create event responsive detection signatures according to some embodiments of the invention.

At 802 a seed corresponding to a triggering event is identified. In some embodiments this may be combined with or comprise the determination of the triggering identifier at 704. That seed then might be associated with authorization of additional detection signatures for threat detection response at 804. For instance, a number of additional detection signatures responsive to the triggering event are authorized for generation (e.g., 100). In some embodiments, an entry point or a set of global parameter values are identified for use in place of a seed.

At 806, the software representation is analyzed to generate crash reports that correspond to attack paths from a state identified by a seed using any of the approaches illustrated herein. For example, the seed might be used as an input to the fuzzer process to initiate additional exploration of the configuration as represented by the software. Alternatively or additionally, any protected entities reachable after the seed can be identified and additional candidate signatures for those resources can be generated at 806. Finally, at 808, the generation and deployment of threat responsive detection signatures generated based on candidate triggers that were identified in 806 is managed using any of the techniques disclosed herein.

Fig. 9 illustrates an expanded view for monitoring triggers for retirement according to some embodiments of the invention. Computer networks are highly dynamic environments and as a result security tools should be capable of adjusting to changing conditions, which as described herein may include retirement of detection signatures for various reasons. Generally, the approach disclosed herein creates detection signatures that represent possible actions on a network or sequences thereof. These actions while are possible due to the various policies parameters of the computing network. These actions may be leveraged by an attacker to gain access to one or more protected entities (e.g., computing resources or services on a network). As a result, indiscriminate creation of detection signatures will likely generate noise that will make it difficult to identify malicious activity. FIG. 9 provides various tools to manage detection signatures and to minimize noise in event reporting.

The process starts at 910 when a retirement processing trigger is received. This trigger might be generated in response to an identification of a change in the configuration of the network, a periodic signal, a timer, a minimum or maximum threshold number of triggering events, an occurrence of an event of identified for responsive processing, or any combination thereof. In response to receiving a retirement processing trigger, any of 911-916 may be initiated.

For example, at 911 a process is executed that determines whether any detection signature solely corresponds to a non-existing entity or triggers (e.g., no relevant resource is currently associated with the detection signature). This might be determined by processing the detection signature to verify that the detection signature corresponds to a matching STS Transition as represented by the crash reports or candidate triggers. In some embodiments, the matching STS transition is identified by processing the software representation in a source code format (e.g., to determine whether all references to a corresponding function call have been removed or commented out) or as an executable (e.g., but determining whether the STS transition can be triggered using one or more inputs). In some embodiments, a mapping structure is maintained that maps each detection signature to one or more corresponding crash reports which can be used to traverse the software representation to determine whether the corresponding functions and transitions still exist. Similarly, at 912 the same techniques can be used to identify detection signatures that no longer correspond to an entity that is identified for protection.

In some embodiments, a detection signature might age out or time out at 914. For example, a detection signature might be generated having a specified age limit. Once that age limit is reached (e.g., based on a corresponding expiration of a time period), that detection signature is automatically removed. In some embodiments, a detection signature might time out. As used here, time out occurs when a detection signature is not triggered within a given time period (e.g., as determined using a duration and by processing a log to determine whether that signature has been triggered within the given time frame).

At 915, detection signatures that corresponding to an apparently no longer active intrusion even may be identified. For example, event responsive detection signatures can be identified using a list, a plurality of database entries, or within each respective detection signature. Such signatures can be identified for removed by a user or based on one or more rules corresponding to the event responsive detection signatures. For instance, one rule might specify that if no event responsive detection signature or a particular event responsive detection signature is triggered within a given time frame, one or all of those detection signatures might be identified for recall.

At 916, signatures that are overly active are identified (e.g., signatures that are frequently triggered by presumably non-malicious behavior). It is likely that much of the traffic in a computer network corresponds to activities that have a low likelihood of being malicious. For example, most employees will regularly access company email systems, and internal communication tools (e.g., Slack). As a result, detection signatures that are frequently triggered may have little value. Such triggers may be identified for recall to conserve processing resources associated with the detection signatures. Additionally, a user might also manage the detection signatures to remove or whitelist activities that are so common as to be essentially meaningless. Such white lists may be propagated back to the candidate trigger selection processes to avoid reintroduction of corresponding signatures. Additionally, another approach to avoid deploying overly active detection signatures is to specify increasingly larger minimum sequence lengths for use in the candidate trigger selection process.

At 913, the candidate triggers corresponding to currently used detection signatures are identified and re-ranked to allow for selection of detection signatures corresponding to a number of lower ranked candidate triggers at 920. Finally, at 930, any detection signatures identified for retirement are processed and recalls are issued for those signatures.

### SYSTEM ARCHITECTURE OVERVIEW

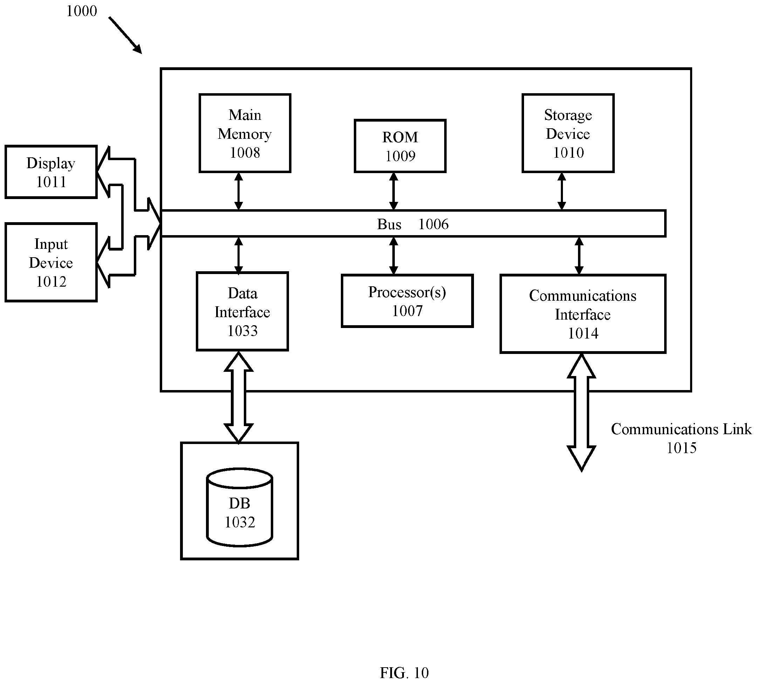

Fig. 10 is a block diagram of an illustrative computing system 1000 suitable for implementing an embodiment of the present invention. Computer system 1000 includes a bus 1006 or other communication mechanism for communicating information, which interconnects subsystems and devices, such as processor 1007, system memory 1008 (e.g., RAM), static storage device 1009 (e.g., ROM), disk drive 1010 (e.g., magnetic or optical), communication interface 1014 (e.g., modem or Ethernet card), display 1011 (e.g., CRT or LCD), input device 1012 (e.g., keyboard), and cursor control.

According to one embodiment of the invention, computer system 1000 performs specific operations by processor 1007 executing one or more sequences of one or more instructions contained in system memory 1008. Such instructions may be read into system memory 1008 from another computer readable/usable medium, such as static storage device 1009 or disk drive 1010. In alternative embodiments, hard-wired circuitry may be used in place of or in combination with software instructions to implement the invention. Thus, embodiments of the invention are not limited to any specific combination of hardware circuitry and/or software. In one embodiment, the term "logic" shall mean any combination of software or hardware that is used to implement all or part of the invention.

The term "computer readable medium" or "computer usable medium" as used herein refers to any medium that participates in providing instructions to processor 1007 for execution. Such a medium may take many forms, including but not limited to, non-volatile media and volatile media. Non-volatile media includes, for example, optical or magnetic disks, such as disk drive 1010. Volatile media includes dynamic memory, such as system memory 1008.

Common forms of computer readable media include, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer can read.

In an embodiment of the invention, execution of the sequences of instructions to practice the invention is performed by a single computer system 1000. According to other embodiments of the invention, two or more computer systems 1000 coupled by communication link 1015 (e.g., LAN, PTSN, or wireless network) may perform the sequence of instructions required to practice the invention in coordination with one another.

Computer system 1000 may transmit and receive messages, data, and instructions, including program, e.g., application code, through communication link 1015 and communication interface 1014. Received program code may be executed by processor 1007 as it is received, and/or stored in disk drive 1010, or other non-volatile storage for later execution. Computer system 1000 may communicate through a data interface 1033 to a database 1032 on an external storage device 1031.

### PROBLEM AS PROGRAM

In contrast to the normal use of a fuzzer, the approach provided herein intentionally introduces 'errors' into code, so that the fuzzers ability to find unexpected behavior can be used to solve problems. For example, if we have the problem of choosing 3 numbers (represented by variables x, y, z) such that x + y = z. Our conversion of this problem to pseudocode for purposes of fuzzing, might look as follows:

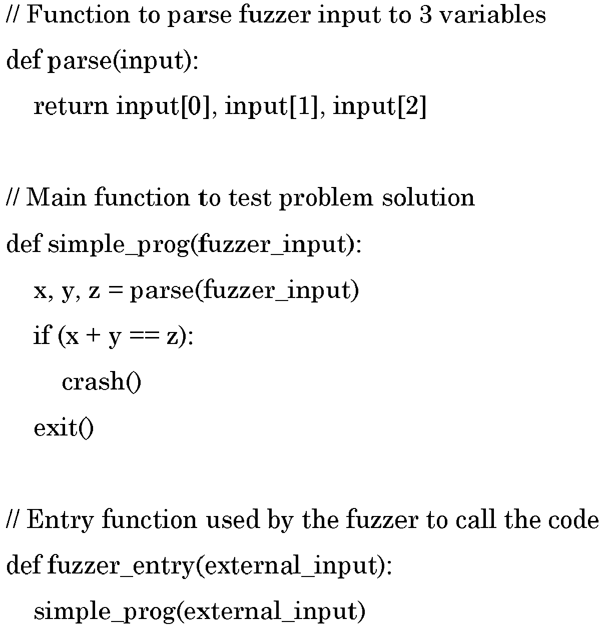

Normally, a fuzzer will repeatedly generate inputs which are used to execute the program, by way of an entry function used by the fuzzer, which in turn calls the program that represents the problem to be solved. The program then parses the first three values into variables x, y and z. Note that while the pseudocode above does not reflect it, the input can be parsed from their bit values into any format depending on the problem in question, including integers, floats, strings, arrays, etc. Next, the program tests whether or not the conditions for a solution of the problem has been met (i.e., does x + y = z), and if the conditions have been met the program will crash. In this way, the fuzzer can produce inputs to test the program indefinitely, or until one or more solutions to the problem have been found as indicated by a crash.

In some embodiments, the fuzzer will make random guesses at what the input should be, proceeding until it generates crashes. This can potentially lead to a large number of iterations. In some embodiments, the fuzzer will mutate inputs in a way that increases the chances of reaching novel parts of the code (e.g., lines of code, branch points, paths, etc.) using coverage-guided fuzzing. Generally, finding novel code paths in a software representation makes it more likely to encounter unexpected or unintended behaviors - or in the present example a result that meets the indicated condition(s). In some embodiments, the fuzzer uses a genetic or evolutionary algorithm which has an objective function that rewards finding previously undiscovered points in the code. In some embodiments, code is structured such that novel branch points are reached for ever improving solutions.

### COVERAGE GUIDED FUZZING EXAMPLE

There are a number of methods to make use of coverage guided fuzzing. In some embodiments, our process does so by structuring code such that more and more branch points (or, more generally, any code constructs that are considered as increasing coverage by the fuzzer) are reached as the inputs being tested move increasingly closer to a solution. Extending the example discussed above, one approach includes adding branch points to the programmatic representation that get counted as increasing coverage. For example, a series of conditionals testing how close the inputs are to solving the problem. For instance:

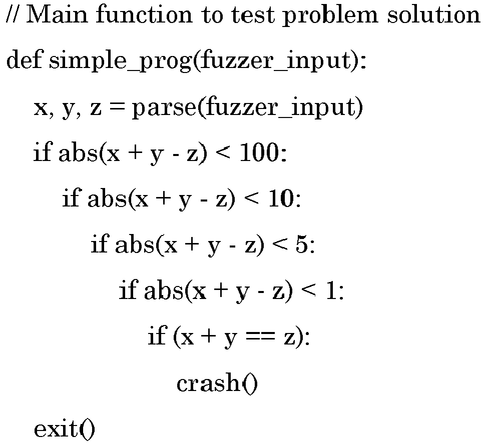

As illustrated above, the function from the previous example is restructured to introduce conditionals that test the magnitude of the difference between x+y, and z (i.e., abs(x+y - z)). Here, if the fuzzer attempts an input where x+y is more than 100 away from z, the program cannot proceed past the first if statement. In contrast, if the inputs that are less than 100 away from z, execution can proceed past the first condition, and can now test whether or not the selected inputs x+y are within 10 of z. By introducing these conditions, the fuzzer is "encouraged" to find inputs that are more likely to enable it to reach additional coverage points. Because these coverage points were designed to only be reachable when the inputs are converging to a solution, the inputs being generated by the fuzzer will be directed towards solving the problem.

### PROCEDURE FOR GENERALIZED CONSTRAINT SATISFACTION PROBLEMS:

For any given constraint satisfaction problem (CSP), the N variables under consideration may be defined as X={x1, x2, ..., xn}, where each variable can be restricted to a particular domain defined by D={d1, d2, ..., dn}, such that each variable xi can only take on values in the non-empty domain di. The M constraints under consideration are defined as C={c1, c2, ..., cm}. The CSP is solved for a given setting of variables X bound by domains D, if all constraints in C are satisfied. Furthermore, the "goodness" of a solution to a CSP can be measure by an optimization function F=f(X,D,C), which is any arbitrary function of variables, domain bounds, and constraints (X,D,C).

In some embodiments, converting a CSP problem into a computer program to be solved by a fuzzer requires a program that includes: a method by which the program can accept an input from an external source (where in this case inputs are determined by a given fuzzer); maps the parsed inputs to the variables X={x1, x2, ..., xn}; and is designed such that if (and only if) all constraints C={c1, c2, ..., cm} have been realized the program will "crash" (e.g., execute a crash statement). These two constraints on the program structure allow a fuzzer to test a variety of inputs until a solution is found.

A wide variety of considerations can make the fuzzing process more or less efficient in finding solutions to a given problem. For example, efficiency may be improved by changing how inputs are mapped to variables in the software program representation of a CSP, and how the conditions that indicate problem satisfaction are laid out in that program.

For example, the parsing strategy, and entry points to the program can greatly reduce the need for the fuzzer to search over irrelevant and arbitrary input domains. For instance, if the CSP in question requires exactly N input variables to be set in order for a solution to exist, one approach to restrict the search space is to first parse out the input bit vector into variables in X, and if there are less than or more than N variables after parsing, simply exit the process. Such an approach may allow the fuzzer to recognize that the use of fewer than N variables, or the addition of any additional variables resulting in a greater number than N, will not produce any additional coverage. Additionally, such an approach is likely to limit the search space explored by a fuzzer because a coverage guided metric will not improve for anything other than the N parsed variables. Furthermore, given domain restrictions D={d1, d2, ..., dn} on variables X={x1, x2, ..., xn}, the program can be constructed to exit if any parsed variable xi has been selected outside that variable's domain di.

As for the second consideration, dealing with how the conditions of satisfaction are structured given constraints C and the general optimization function F. For instance, when a partial solution can be measured to be closer or further from a desired solution, a number of problem-dependent solutions exist for using coverage guided fuzzing as a generic solver. As an example, consider a CSP wherein input variables must be selected for an algorithm such as a decision tree, to be used on a particular classification problem, with an optimization function F defined on how well the selected decision tree variables performs on a held-out test set of data. One possible structure of the problem might be to nest various levels of performance before crashing. For instance:

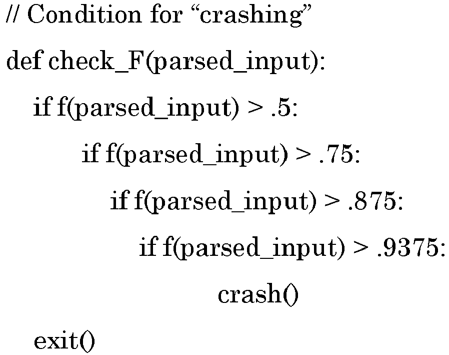

Such an arrangement could piggy-back on the coverage guided fuzzing metric used to guide input selection, such that the fuzzer would be encouraged to select inputs that get used by the decision tree, so as to provide performance improvements allowing the decision tree to achieve results at each subsequent branch point of ½ the remaining distance to a perfect classification system. Depending on the landscape of the problem type, loss function, and desired outcomes, variations on such a structure can result in the desired solution.

Some CSPs are not readily structural as a multi-level graph because some problems may not be readily solvable in a linear manner. For instance, in some CSP problems are heavily dependent on a collection of resources (representable as parameters or global parameters) such that the possible actions are highly dependent on current parameters or global parameters. Such CSP could be thought of as a start type arrangement, where edges of the stars represent connections and those connections can be conditionally used based on the current set of values (parameters or global parameters).

For example, in some cloud environments what is possible is defined largely by what credentials are available to an attacker where credentials instead of resources determine what resources are available to a particular entity. As such, each resource may be on the same logical plane, in that any resource may be reachable from any location provided the necessary credentials have been collected. For instance, an attacker might have access to credentials that allow an attacker to create, but not run, a lambda function. However, once an attacker has collected the credential(s) that allow that attacker to run that lambda function might then be able to use that lambda function to execute downstream exploits. In this example, the attacker's progression is not linear with respect to a graph of entities. Instead, the attacker essentially explores the network to collect credentials with the goal of reaching a high value target. In the context of providing the problem as a software representation, such credentials might comprise parameters or global parameters (also call global variables herein) and the environment where after one or more credentials are acquired, another path might open up which may enable the attacker to acquire more credentials or access to a high value target or otherwise protected resource. From there, exploration may continue until a high-value target is reached. In some embodiments, a directed acyclic graph (DAG) of a graph based environment, can be represented such that a visit to any node in the graph, requires having first acquired the credentials granted by first visiting a predecessor node (i.e., a node which has a directed edge to the new node in question).

### SECURITY REASONING AND INTERFACE SYSTEM

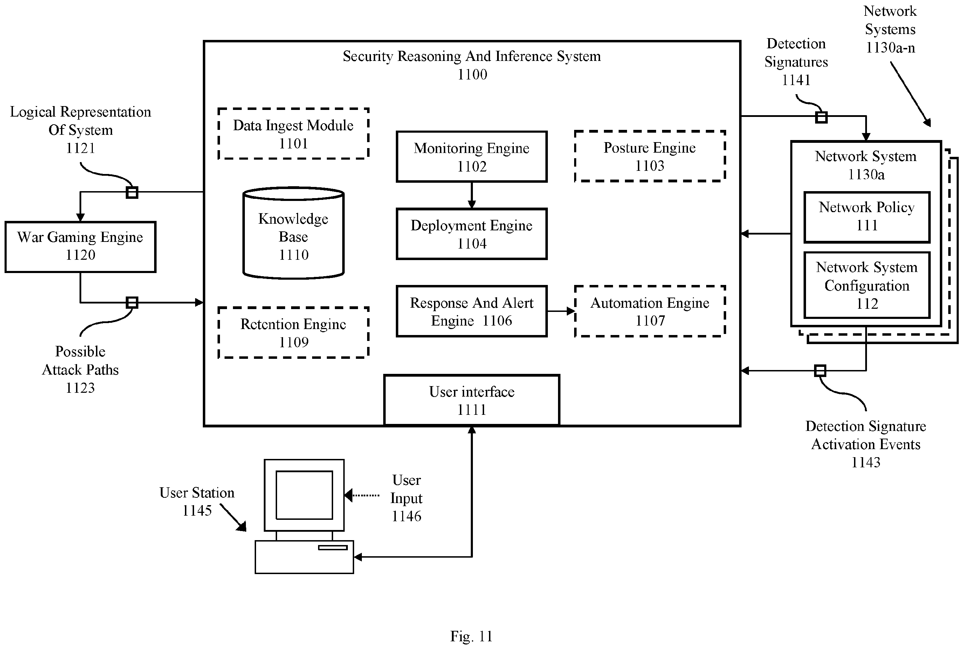

FIG. 11 illustrates an example arrangement of an architecture for a security reasoning and inference system using an embodiment of network configuration and policy data according to some embodiments of the invention. As discussed herein, FIG. 11-17B illustrate alternative approaches that leverage at least some aspects of the security management system 100 and provides alternative approaches to some of the aspects discussed above. In a preferred embodiment, the security reasoning and inference system is provided as an expert system. However, other approaches may be used to perform the indicated functions such as a collection of functions or modules. For instance, each of the different elements illustrated in the figure may be provided as modules that interact.

As used herein, FIG. 11 includes elements identified by references numbers used in other figures. Unless indicated otherwise, any description of like identified elements are also applicable to the elements illustrated in FIG. 11.

As illustrated, the security reasoning and inference system 1100 includes multiple subsets including a monitoring engine 1102, a deployment engine 1104, a response and alert engine 1106 a user interface 1111, and a knowledge base 1110. In some embodiments, the security reasoning and inference system 1100 may also include any of a data ingest module 1101, a posture engine 1103, an automation engine 1107, or retention engine 1109.

As will be discussed herein, the knowledge base 1110 includes any data utilized by the security reasoning and inference system 1100. This may include any or all of the data representing the network policy 111, the software representation of the network system 113, the crash reports 121, seeds 122, candidate trigger list 123, and signature creation templates 124. Additionally, other subsets of data will be discussed as relevant which may also be maintained in the knowledge base 1110. Generally, the knowledge base is used to collect information which can be processed to generate facts, maintain rules, and state information relevant to the functioning of the security reasoning and inference system 1100 and a network system which is being protected by the security reasoning and inference system 1100. Specific sets of data are discussed as relevant herein.

As provided herein, functions of the security management system 100 have been divided, and in some cases replaced, into different parts. For example, the data ingest module 1101 processes the network configuration 112 and the network policy 111 to generate information used by the war gaming engine 1120 (see logical representation of system 1121).

The war gaming engine 1120 processes the information from the data ingest module 1101 as discussed in regard to at least 304 in FIG. 3A and in FIGs. 3B, 4A, 4B and at least at 500 and 502 in FIG. 5A. In this way, the war gaming engine 1120 can analyze a network system to identify possible attack paths 1123 which are stored in the knowledge base in the previously discussed candidate trigger list 123.

The functions of the deployment manager 136 are replaced in regard to this discussion by the monitoring engine 1102, the deployment engine 1104, the response and alert engine 1106, and in some embodiments, the retention engine 1109, and the automation engine 1107.

The monitoring engine 1102 can process known information to determine which state-to-state transitions should be monitored for deployment (see e.g., at least 512-517 in FIG 5A, at least 522, 530, and 532 in FIG 5B1, and at least 522, 530, 532, and 535 in FIG 5B2). The deployment engine 1104 processes the determined state-to-state transitions to generate and deploy detection signatures on a monitored network (see e.g., at least 534 and 536 in FIG 5B1 and 5B2, and FIG 6. For instance, the deployed detection signatures (e.g., see detection signatures 1141) are placed on resources within the network (e.g., see network system 1130an) to enable monitoring therein of the activity to be detected by respective detection signatures. The response and alert engine 1106 provides processing in response to detection signature activation events 1143 (e.g., detection events) which correspond to the processing discussed in regard to at least 702-708 in FIG 7, at least 802 of FIG. 8. The retention engine 1109 provides processing corresponding to that disclosed in regard to FIG. 9. The automation engine 1107 may be used to implement any of the automated actions discussed herein such as in regard to FIG. 7 at block 710.

The posture engine 1103 can be used to mine the knowledge base 1110 to generate insights about a protected networking environment. Insights can include any of, which protected entities are the most at risk, remediation action that could be taken to reduce an attack surface of a network (e.g., actions that would reduce a number of entities from which a protected entity can be reached), or flag changes that increase the attack surface. In some embodiments, the posture engine can compare actions against known activity to determine whether a feature (allowed by an attribute) is actually used by the corresponding entity and recommend remediation actions based on a combination of lack of use and corresponding risk. In some embodiments, the posture engine also analyzes the knowledge base to determine and recommend where to deploy honey pots/tokens.

In some embodiments, the user station 1145 includes or provides access to the security reasoning and inference system 1100 to allow for control of the processes of security reasoning and inference system 1100 at least with regard to a portion or the whole of the subsets illustrated therein. For instance, the security reasoning and inference system 1100 might be located on the user station 1145, on a remote device accessed by the user station, or distributed across multiple devices. The user station 1145 causes the execution of one or more functions of a security reasoning and inference system 1100. The user station 1145 comprises any type of computing station that is useable to operate or interface the security reasoning and inference system 1100. Examples of such user stations include workstations, personal computers, or remote computing terminals. In some embodiments, the user station 1145 comprises a display device, such as a display monitor, for displaying a user interface 1111 to any users at the user station. The user station 1145 also comprises one or more input devices for the user to provide operational control over the user station, such as a mouse or keyboard to manipulate a pointing object in a graphical user interface from which a user input 1146 might be received.

In some embodiments, various commands are provided to allow a user or administrator to interact or query the security reasoning and inference system. For example, commands could comprise any of the following: list domain dataset, show signature template(s), show STS transition(s), show detection signature(s), show active detection(s), start fuzzer(s), show ongoing detection(s), mark detection noisy, deploy heartbeat detection, mark missing heartbeat as loss of data, load/save state. Additionally, each command could be associated with one or more filters or input parameters.

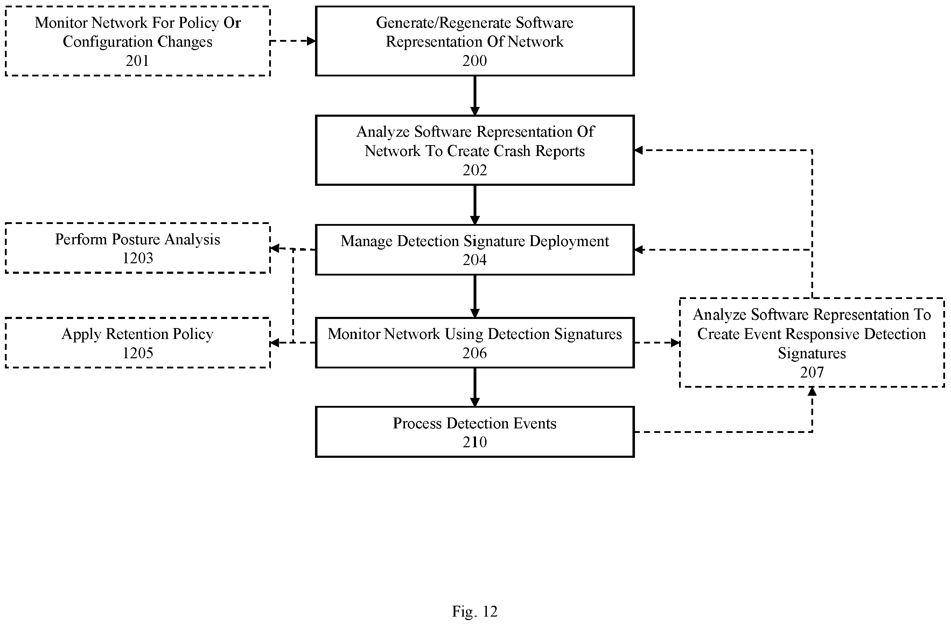

FIG. 12 illustrates a process flow according to some embodiments of the invention. Fig. 12 largely the same as figure 2 and thus the description of like identified elements from fig. 2 are applicable to FIG. 12 (see 200-210). However, Fig. 12 also includes performance of posture analysis 1203 and application of a retention policy 1205.

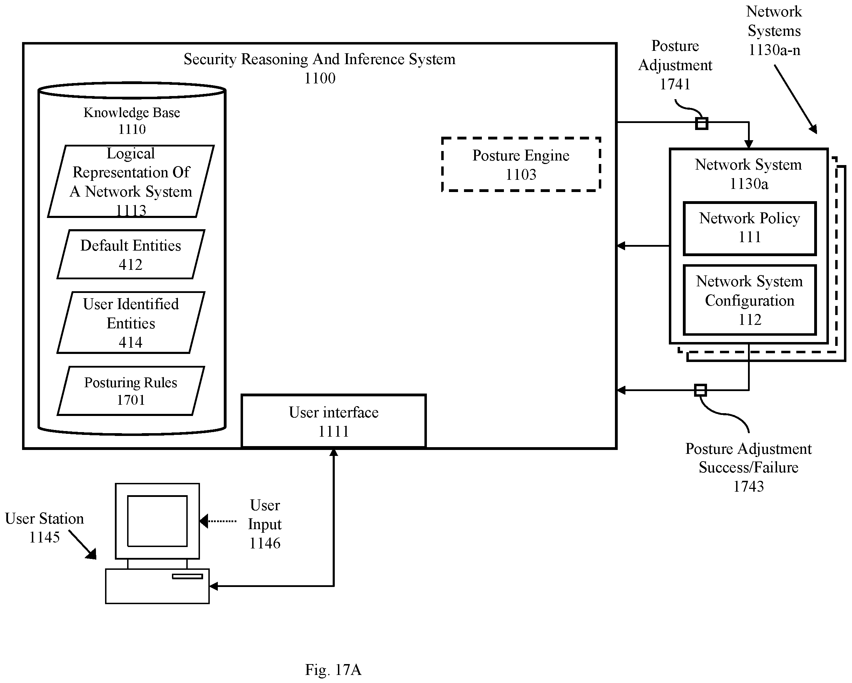

Generally, posture analysis 1203 applies rules to the current state of a monitored system to determine whether any changes should be made to one or more permissions therein in order to improve security and to comply with one or more security guidelines. Posture analysis is discussed further in regard to figures 17A-17B.

The retention policy comprises a collection of rules and or processes to remove old information from the knowledge base. This information may comprise old detections, detection signatures that have timed out or any other data that is to be removed as discussed above in regard to at least FIG. 9.

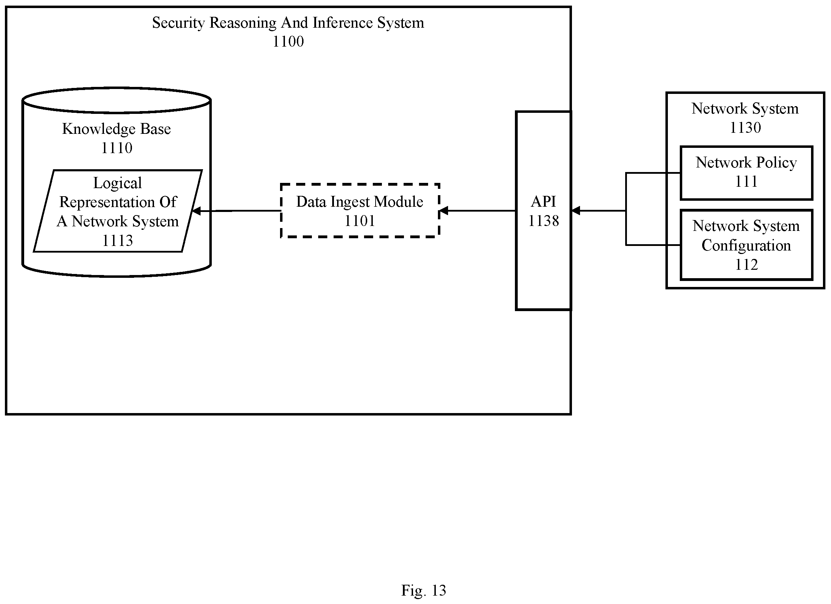

FIG. 13 illustrates an arrangement for ingesting a network system configuration and a network policy according to some embodiments. As provided herein the ingestion process is automated.

As illustrated herein, the security reasoning and inference system 1100 includes an application programming interface (API) 1138, a data ingest module 1101, and a logical representation of a network system 1113. Generally, upon configuration of the security reasoning and inference system 1100 to monitor a network system, the process will use an API to retrieve the network policy 111 and the network system configuration 112 of a network system 1130. The policy is then processed at a data ingest module 1101. Operation of the data ingest module 1101 corresponds to that discussed in regard to 300 and 302 in FIG. 3A. This processing generates a logical representation of what is allowed (and therefore possible) on the network which is then stored at 1113.

In some embodiments an expert system might perform the functions of the data ingest module 1101. As illustrated here, the expert system is manually defined by a set of logic. For instance, the logic that the expert system is to apply is manually created. The application of the manually created representation to knowledge/facts in the expert system is then automated by the manually created logic. In this way, pieces of knowledge can be applied separately or together to process a known world of knowledge and make determinations as to any actions that may be appropriate. In some embodiments, the data ingest module (see e.g., 1101) retrieves or processes data retrieved from a system to be monitored. For instance, the data is converted into a representation as a set of facts. In order to maintain or generate the list in a format that usable by the expert system, one approach represents each entity as an object which may be a source or destination depending on the circumstances, each state-to-state transition by its source, destination, and action, and each attack path (candidate trigger) as a set of state-to-state transitions.

To illustrate, each known entity is represented using a populated instance of a template of a corresponding type (e.g., active directory object template) by any combination of one or more of the following: a slot ID, an object ID, an object type, name, domain, value (e.g., high/low/default entity value), a status (e.g., enabled or disabled), password status (e.g., required or not required), a last logon. Among the set of entities, each entity might be usable to reach any number of other entities.

For example, each action or sequence of actions might allow various connections or acquisitions of credentials, and each connection or acquisition of credentials might make it possible to reach new entities where the process may be repeated. Such sequences represent possible attack paths of which there may be any number of permutations identified as discussed herein. In some embodiments, each state-to-state transition may comprise or be part of an attack path. To provide for the construction of relevant knowledge thereof a template (attack path template) may be provided for creation of the attack path instances comprising any combination of one or more of the following: a slot ID, a coverage status (e.g., allowed-symbols, available, unavailable, selected, deployed). Similarly, while each attack path may comprise one or more STS transitions with corresponding parameters, each STS transition may be represented using an associated instance of an STS transition template (e.g., entity action template) which may comprise any combination of one or more the following: a slot ID, a coverage status (e.g., allowed-symbols, available, unavailable, deployed), an action type (e.g., AddKeyCredentialLink, AddMember, Admin, AdminTo, All, AllExtendedRights, AZContains, AZContributor, AZGlobalAdmin, AZOwns, AZUserAccessAdministrator, AZVMContributor, CanPSRemote, CanRDP, Contains, Delegate, Execute, ExecuteDCOM, ForceChangePassword, GenericAll, GenericWrite, GetChanges, GetChangesAll, GpLink, HasSession, HasSIDHistory, Kerberoastable, Link, Member, MemberOf, Owns, RemoteControl, ResetPassword, SQLAdmin, TrustedBy, Write, WriteDacl, WriteOwner), a slot source, a slot destination (which may be the same as a source in some embodiments), or any combination of one or more credential acquisitions.

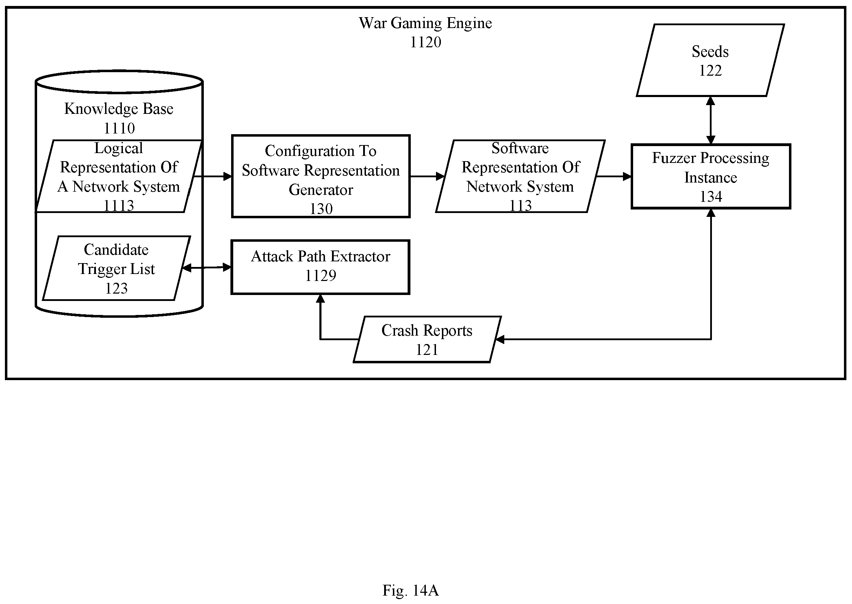

FIGs. 14A-14B illustrate an example arrangement of an architecture for a war gaming engine associated with the security reasoning and inference system according to some embodiments of the invention. In some embodiments, the war gaming engine is included within the security management system. In other embodiments, the war gaming system is accessed via one or more API calls to exchange data and control operation thereof.

FIG. 14A illustrates an example arrangement of at least a portion of the war gaming engine according to some embodiments of the invention. As illustrated here, the war gaming engine may execute a process to convert a logical representation of a system into a software representation which, in one embodiment, is then stimulated using a fuzzer to generate crash reports which can be subsequently analyzed to generate a set of candidate triggers. In some embodiments, the war gaming engine may convert the logic representation of the system into a graph or other embodiments as may be known which may be analyzed to generate a set of candidate triggers. While the approaches illustrated herein are preferably implemented using one or more fuzzers, other approaches are possible as are known though the fuzzer may provide a more detailed representation of a system.

The war gaming engine 1120 as illustrated includes or has access to the knowledge base and storage for seeds, a software representation of a respective network system, and corresponding crash reports. The war gaming engine 1120 includes a configuration to software representation generator 130, a software representation of a network system 113, a fuzzer processing instance 134, seeds 122, crash reports 121, and an attack path extractor. In some embodiments, an attack path may be represented as a number of steps, as a step with a specific collection of attributes (e.g., which may correspond to rights acquired in a previous action known or unknown). For example, a singular step where an actor has or acquires a given set of rights may be represented as an attack path.

As an initial matter, the operation of the configuration to software representation generator 130 and the fuzzer processing instance 134 is describe at least in regard to FIG. 1B. Additionally, the contents of the software representation of a network system 113, the seeds 122, and the crash reports 121 are also described elsewhere herein. The description of 502 in regard to FIG. 5A applies to the operations of the attack path extractor 1129.

When a crash occurs, debug tools (see attack path extractor 129) can be used to capture the path that was taken to reach the protected resource by processing a memory dump in a corresponding crash report. This path information can be captured in a candidate trigger list (see 123) which may also include summary data such as the number of times each crash statement is executed and the number of unique paths identified that triggered the respective crash statements. In some embodiments, the process identifies a portion of a stimulus applied to the software representation that resulted in a crash as a seed (e.g., a vector) for future fuzzing. For instance, if a new region not previously encountered is discovered, the path to that new region might be captured as a seed. This allows the fuzzer to focus the exploration on that region. Operation of fuzzers with regard to the software representation will be discussed further below.

The attack path extractor 1129 processes the crash reports to identify one or more state transitions which may be represented in a set of candidate triggers (e.g., a list). Generally, each crash report generated as a result of a crash might be analyzed to identify one or more state-transition-state tuples representing state-to-state transitions where a first state is a state the attacker could be in, the second state is the state the attacker can transition to, and where the transition is represented by an action or property that can be used by an attacker to transition from the first to the second state (e.g., a specific user uses remote desktop protocol access rights to connect to a specific server). In some embodiments, each unique state-to-state transition is identified by a corresponding unique identifier. In some embodiments, a state-to-state transition corresponds to the acquisition of rights such that the starting state has a first set of rights and the ending state has a second set of rights that differs from the first set of rights.

In some embodiments, as illustrated here, the crash reports may be maintained outside of the knowledge base, with the knowledge base instead capturing the candidate trigger list 123 but not the crash reports 121.

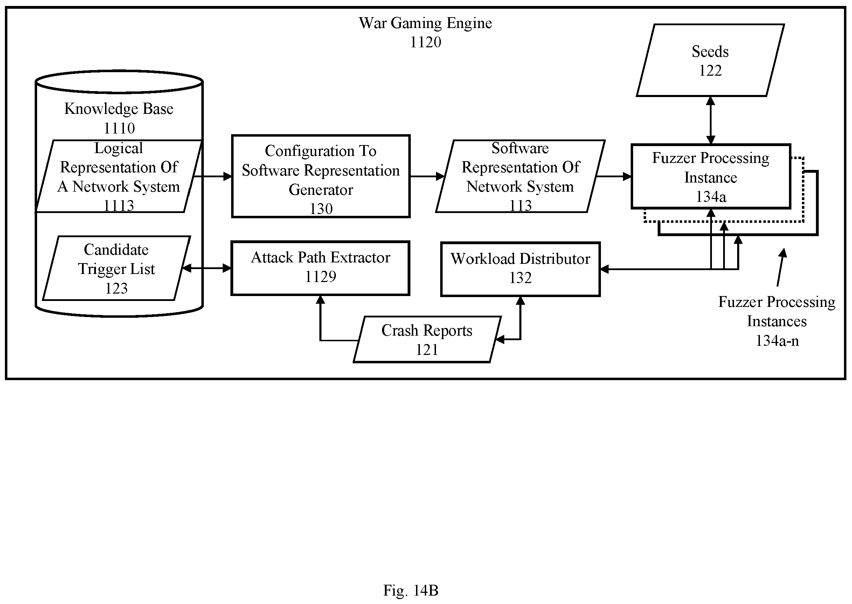

FIG. 14B illustrates an example arrangement corresponding to FIG. 14A but with the parallel processing from FIG. 1C added. Here, the operation of the workload distributor 132 and the plurality of fuzzer processing instances 134a-n are described in regard to the corresponding references and FIG 1C.

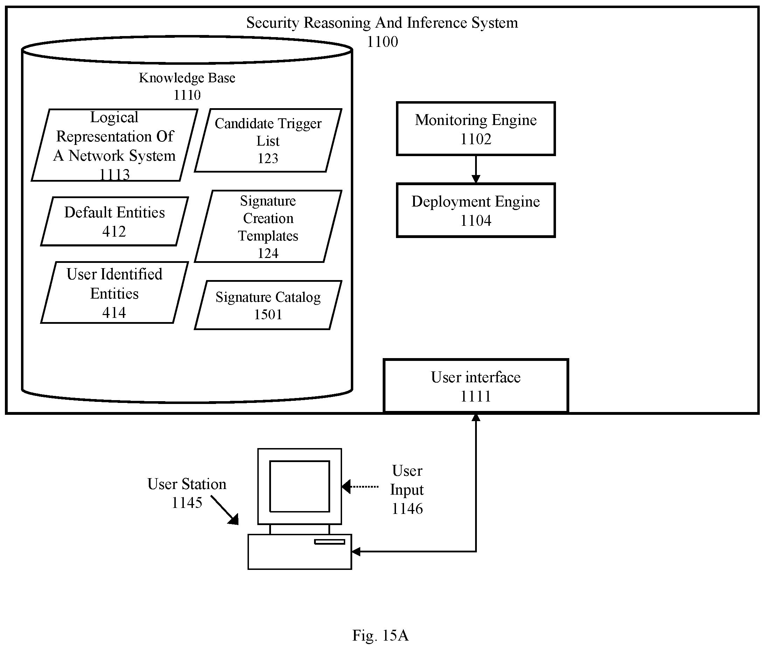

FIG. 15A illustrates an example arrangement for the security and reasoning inference system with a focus on the monitoring engine and the deployment engine and the associated information according to some embodiments.

In some embodiments, the monitoring and deployment engines may operate as illustrated in regard to the previous paragraphs (see e.g., for monitoring engine paragraphs corresponding to items 202, 502-532, 802, 804, 808, 913 for deployment engine see paragraphs corresponding to items 204, 534-536, 600-606, 808).

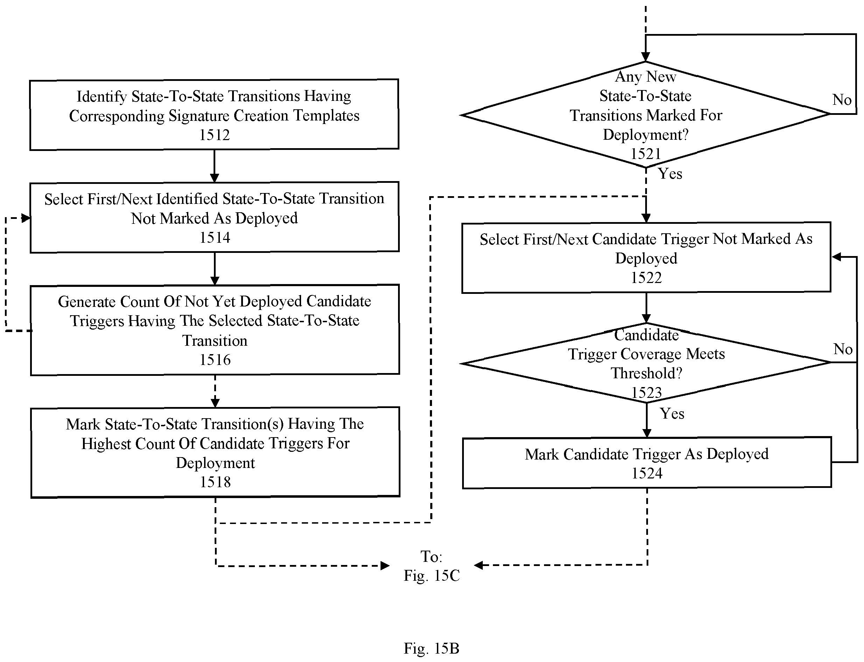

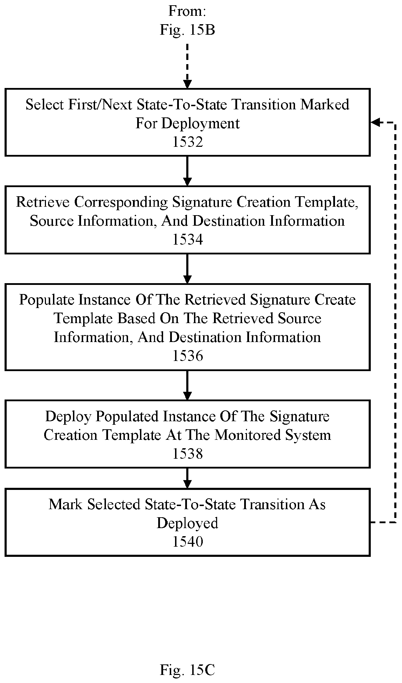

In some embodiments, the monitoring and deployment engines 1102 and 1104 access data maintained in the knowledge base 110 such as the candidate trigger list 123, the signature creations templates 124, the signature catalog 1501, the logical representation of a network system 1113 the default entities 412 and the user identified entities 414. Additionally, as previously discussed the security reasoning and inference system 1100 may be accessed via a user state 145 by user using a user input 146 on a user interface 111 provided by the security reasoning and inference system 1100. Generally, the monitoring engine accesses the candidate trigger list 123, and the signature creation templates 124 to identify state-to-state transitions that can be found in the candidate trigger list and selects a subset that are detectable by a detection signatures - e.g., signatures with creation templates at 124). Once a state-to-state transition has been selected for deployment, the deployment engine 1104 retrieves and processes needed information to generate an instance of the signature creation template which may be stored in the signature catalog 1501 and deployed on a system under test. Example embodiments to the operation of the monitoring engine 1102 and the deployment engine 1104 are discuss below in regard to FIG. 15B and FIG. 15C respectively.

FIG. 15B illustrates an example flow for the monitoring engine according to some embodiments. Generally, the monitoring engine determines which state-to-state transitions will be associated with detection signatures deployed on a monitored system and determining when there is sufficient coverage of an attack space.

The flow starts at 1512 where each state-to-state transition is processed to determine if a corresponding detection signature can be deployed as discussed herein in regard to FIG. 5A. At 1514, a first or next state-to-state transition of the identified state-to-state transitions is selected. Subsequently, at 1516 a count of candidate triggers that include the selected state-to-state transition is generated and associated with the selected state-to-state transition.

In some embodiments, at 1518 one or more state-to-state transitions having the highest count (e.g., 3 highest) are marked for deployment. In some embodiments, a field is provided in the state-to-state transitions to indicated a processing status such as having, or not having, a corresponding signature creation template, being selected for deployment, or being deployed. In some embodiments, a separate data structure (e.g., table or list) is maintained to associate a state-to-state transition (e.g., via an identifier) with a state value.

In some embodiments, an evaluation is performed to determine whether there are any new state-to-state transitions marked for deployment at 1521. In the event that there are no new state-to-state transitions marked for deployment the process will return to 1521, possibly after a wait period to repeat the evaluation. In the event that the determination is yes, the process may select a first/next candidate trigger that is not already marked as deployed. In some embodiments, a field is provided in the candidate trigger to indicated a processing status such as having, or not having, any corresponding detection signatures marked as deployed or being deployed. In some embodiments, a separate data structure (e.g., table or list) is maintained to associate a candidate trigger (e.g., via an identifier) with a state value.

At 1523, a determination is made as to whether the candidate trigger should be considered deployed. For example, a candidate trigger may be marked as deployed when a threshold number (e.g., 3) of unique actions are monitored by detection signatures, when all state-to-state transitions in the candidate trigger are monitored, or when it is not possible to create any new detection signatures for monitoring the possible attack path represented by the candidate trigger. If the candidate trigger coverage does not meet the threshold, the process returns to 1522. However, the if the candidate trigger coverage meets the threshold, the process marks the candidate trigger as deployed at 1524 and then returns to 1522 until there are no more candidate triggers to process. As there is likely a one to many relationship between respective state-to-state transitions and candidate triggers, this process may be initiated repeatedly.

In some embodiments, after the 1518 or 1524 the process may proceed to 1532 in FIG. 15C as illustrated.

Returning to the expert system example, each state-to-state transition may or may not correspond to a signature creation template. Generally, the signature creation templates are provided by experts with knowledge of the technology space and can be used to deploy a detection signature as discussed herein on a monitored system. With regard to the expert system, each STS transition may or may not correspond to one or more signature creation templates which can be used to generate a deployable signature. The expert system can apply the then known set of signature creation templates to identify which STS transitions can be detected in a deployed network environment. Thus, one type of knowledge might comprise a coverage status for each STS transition which indicates whether a corresponding signature can be deployed. The expert system can process each STS transition against a collection of knowledge (e.g., the signature templates) to determine if a detection signature can be deployed. For instance, the action type of each the STS transitions is compared to an action type of the known signature detection instances and if a match is identified the corresponding STS transition is updated to reflect the knowledge learned by the process (e.g., a coverage status is changes to "available"). In this way each STS transition is processed to add knowledge for the expert system. Similarly, another process may process the attach paths and update corresponding attack paths to reflect the knowledge learned by the process based on the underlying STS transitions (e.g., a coverage status is changes to "available"). In addition to the action, the signature creation template might identify a detection engine (e.g., snort, sentinel, clips, recall), a rule, a source, and a destination.)

In some embodiments, after STS transitions and attack paths that can be deployed are identified, the expert system can analyze the attack paths to determine which detection signatures to deployed. There are various approaches that could be used to determine for which attack paths to deploy detection signatures. For instance, in the case of a networking system that is largely attacked by hopping from computing to computer while gathering access rights, the detection may be optimally focused on detection of sequences of actions. In contrast in systems where the access rights and systems are not strictly linked such as in some cloud based network systems it may be more efficient to detect actions that bring an attacker logically closer (e.g., in the number of steps needed to acquire access rights to a protected resource). In some embodiments, both approaches may be applied.

In both approaches, each STS transition corresponds to different sources and destinations, different access rights (e.g., the acquisition of credentials), or a combination of both. In one embodiment, an expert system might apply logic to determine commonality of each STS transition (e.g., in how many unique attack paths is a given STS transition found) by processing each STS transition that is known to have coverage available. In one embodiments, each STS transition is processed to determine how close it is to a protected target. For instance, each STS transition with coverage available is analyzed against each attack path and assigned a count value representing the smallest number representing the smallest difference identified. Alternatively, in some embodiments and value is used such that a threshold difference is required and the nearer to the target the higher the value where the highest value is retained (e.g., STS transitions greater than a threshold distance away, X transitions, are ignored and such that the value increases with the nearness, then if a transition is Y STS transitions away the max value Z = X - (Y-1) when Y is greater than X). In some embodiments, each identified STS transition is added to a list of STS transitions (e.g., by appending an ID to a vector in the STS transition).

In some embodiments, the count discussed above can be used to identify a particular state-to-state transition to mark for deployment. For example, for each state-to-state transition with coverage available we look for the state-to-state transition with a count of or equal to the highest attack count, and mark that state-to-state transition for deployment.

In some embodiments, logic can be applied to determine whether coverage has been deployed for a respective attack path. For example, logic might be applied to the known attack paths to determine whether sufficient coverage has been identified for respective attack paths - e.g., by applying a threshold or some other conditions to determine sufficient coverage as discussed herein. For instance, in each attack path might be required to have a minimum number of STS transitions covered, a minimum distance of coverage (e.g., all STS transitions possible that are 1, 2, and 3 steps away). Once sufficient coverage has been provided for an attack path, that path is marked to indicate that fact (e.g., coverage deployed).

In some embodiments, a state-to-state transition might be removed from use or white listed. In such cases this might result in attack paths lacking coverage where they previously had that coverage. One approach to implementing a white list is to specifically identify STS transitions to be white listed, or to provide one or more rules for processing STS transitions to determine which should be white listed and marking corresponding STS transitions as white listed.

FIG. 15C illustrates an example flow for the deployment engine according to some embodiments. Generally, the deployment engine selects respective state-to-state transitions marked for deployments, generates a corresponding detection signature, and deploys that detection signature on a corresponding monitored network.

In some embodiments, the process starts at 1532 where a first or next state-to-state transition marked for deployment is selected for processing. Subsequently the source and destination information is retrieved at 1534. This may also include retrieval of one or more corresponding signature create templates. At 1536 the signature creation templates, source information, and destination information, are used to populate one or more instances of detections signatures as discussed elsewhere herein. That populated instance of the detection signature, or multiple detection signatures are then deployed on the monitored system at 1538 (see discussion included elsewhere herein). Finally, the selected state-to-state transition is marked as deployed at 1540.

Returning to the expert system, for each STS transition marked for deployment the process generates one or more detection signatures to be placed on the network system. Processing for detection signature generation largely comprises a collection of fetching, matching, and replacing operations. For example, one approach starts by identifying and retrieving a state-to-state transition with the corresponding status - e.g., "coverage deployed". Subsequently, based on the retrieved state-to-state transition, the process will identify a matching signature template (e.g., based on the corresponding action) the corresponding source and destination entity information, and perform a search and replace operation to populate the values identified in a signature template. The process may apply a set of ruled to perform applicable binding operations by identify strings to be replaced with corresponding values from the STS transition.

In some embodiments, a state-to-state transition may correspond to multiple matching signature templates. In some embodiments, a particular state-to-state transition might be detected in multiple different ways. In order to address this, a count may be used to determine a maximum number of signatures for detecting the same action - e.g., such as a count used to determine the number of signatures templates generated and used as an offset to select a next signature template for generating a deployable signature that detects the same action in a different way. In some embodiments, each such signature returns an event having the same eventid even though they are detected using different detection signatures. In some embodiments, each signature template might corresponds to a different event to be detected and thus may correspond to a different detection signature template. For instance, detection events from a windows operating system may differ from detection events for packet processing on a network as is known. In some embodiments each populated instance of a detection signature template is marked as or for deployment on the network.

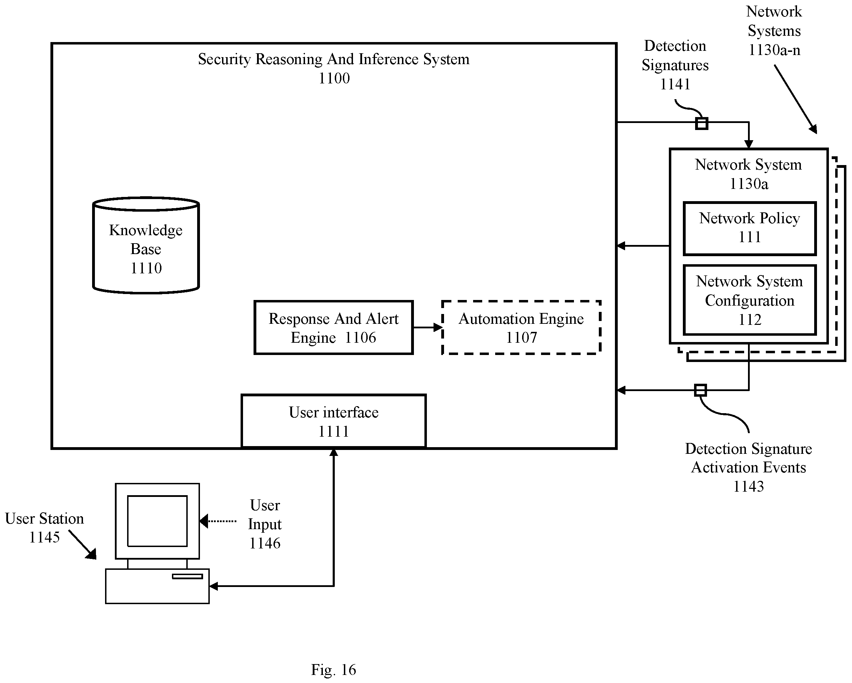

FIG. 16 illustrates an example arrangement for the security and reasoning inference system with a focus on the response and alert engine, the automation engine, and associated information according to some embodiments.

In some embodiments, the response and alert engine 1106 and the automation engine 1107 are provided as discussed in regard to FIG. 7 (see discussion regarding items 702-708 and 714-715 for response and alert engine and see discussion regarding 710 for the automation engine).

Returning to the expert system example, detections of activity meeting detection signature definitions may be monitored by the expert system. For example, each attack path could be represented by the STS transitions that are being monitored either alone as a single STS transitions (possibly including one or more parameters representing information such as the necessary credentials) or as a sequence of STS transitions. Such a dataset can improve the speed in which detection signature triggering events are processed by reducing the known universe of STS transitions to only those that are being monitored. Additionally, where relevant the sequence of transitions can be used to compare detection events to determine whether the indicated sequence occurred. For instance, ongoing detections events can be represented by a vector or list (e.g., a list of entries of the detection signature event IDs that have occurred in a given time period). In some embodiments, detection events may decay and be removed from the list of ongoing detections. For example, a process may use a threshold amount of time to identify old detection events that should be decayed. Additionally or alternatively, the oldest detection events may be removed when the number of detection events is greater than a maximum number of detection events (e.g., based on a number of entities in a system).

In some embodiments, an expert system has different responses based on a number of monitored state-to-state transitions in a sequence that occur or a distance from a protected entity. For example, a detection might be deemed critical when a threshold number of state-to-state transitions in a monitored attack path are detected or when the distance to a protected target is less than or equal to a threshold. Similarly different detection severity might be associated with different lengths of detected attack paths or different distances to a protected target. In some embodiments, the detections could be dependent on an order of appearance or time of detection where the first detection must occur before the next, and so forth.

FIG. 17A illustrates an example arrangement for the security and reasoning inference system with a focus on the posture engine and associated information according to some embodiments. Generally, the posture engine processes a set of posturing rules against a logical representation of a network system in order to determine whether a posturing adjustment should be made, and attempts to implement any identified changes.

As illustrated herein, the knowledge base 1110 include a collection of posturing rules 1701 which defined recommended posture, when posture should be changed, and in what way posture should be changed. The posture engine 1103 will apply the posturing rules provided at 1701 to the logical representation of the network system 1113 to determine if a posture adjustment is advisable. In some embodiments, a posture adjustment is provided as a recommendation to a user or administrator. However, some or all posture adjustments may be implemented automatically. For example, a posture adjustment might indicate that a particular user account should be disabled because it has been unused for a threshold period of time. In such an event the posture engine 1103 may issue a configuration command as a posture adjustment (e.g., 1741) to the network system (e.g., see 1130a) to disable the indicated account. Subsequently, a posture adjustment success or failure message (e.g., see 1743) might be received from the network system. If such a message indicates failure a recommendation and report might be provided to a user/administrator. However, if the message indicates success, the posture engine may modify the logical representation of the network system 1113 or provide a notification or trigger to a managing module (e.g., the data ingest module 1101) to update the corresponding logical representation of the network system 1113. In some embodiments, the posturing rules may depend on which entities are protected (see e.g., 412 or 414).

Returning to the expert system example, the posturing rules might be applied to cause automatic posture adjustments or recommendations for a network system. Such an arrangement can be used to mitigate risk. Additionally, because of the arrangement of the expert system, such changes can cascade through the various logic provided therein and create an automatic response to those changes as reflected in the monitoring of the network system.

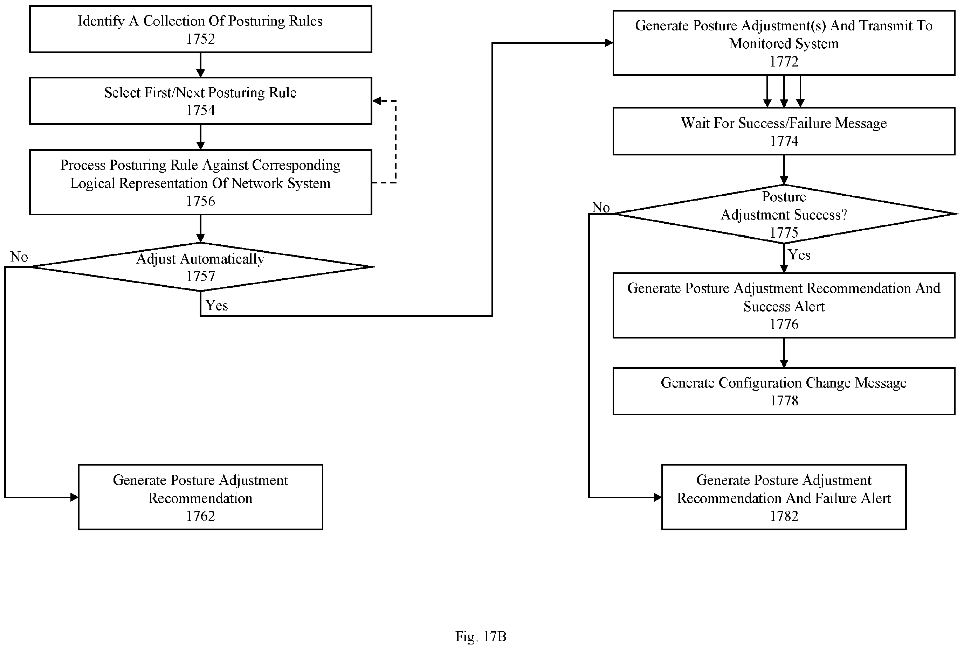

FIG. 17B illustrates an example flow for the posture engine according to some embodiments.

In some embodiments, the process starts at 1752 where a collection of posturing rules are identified. For example, a collection of posturing rules are identified that corresponds to the monitored system. Such rule may be provided by the security reasoning and inference system 1100, by the network system 1130a-n, users or administrators corresponding to either system, or some combination thereof.

At 1754 a first/next posturing rule is selected. For example, a reference and an ordered list is used to individually selected a first or next rule. The selected posturing rule is then processed against the corresponding logical representation of the network system at 1756. Information regarding any set of conditions that satisfy the rule are then output to 1757. In some embodiments, each individual instance of satisfaction of the posturing rule is output. In some embodiments, each individual instance is bundled into a collection of individual instances that satisfy the posturing rule and a single determination is made at 1757 as to whether the posturing rule corresponds to an adjustment to be made automatically (see yes output of 1757 connected to 1772) or whether no automatic adjustment is to be made (see no output of 1757 connected to 1762). Once the posturing rule has been processed against the logical representation of the network system at 1756, the process returns to 1754 which selects a next posturing rule while there are posturing rules that have not yet been processed against the corresponding logical representation of the network system. If no automatic policy adjustment is to be made, the process proceeds to 1762 where a posture adjustment recommendation is generated for a user or administrator.

An illustrative example might comprise the following: a rule that specifies that any user account that has not been used in 90 days should be disabled is processed against the logical representation of the network system to identify each user account in turn, and process each account by querying an authorization system (e.g., Microsoft Active Directory, or a Kubernetes installation at the monitored system) to determine a time of the last login which is then compared to the corresponding threshold (here 90 days). Any such accounts that have not been access within the indicated time frame are then identified for automatic posture adjustment (e.g., selected to be disabled).

At 1772 one or more commands are generated to effectuate any changes in posture and transmitted to the monitored system. Continuing the illustration above, this might comprise generate one or more commands to individually, or as a group, disable one or more accounts at the monitored system. Such messages may not always be successful. Thus, at 1774 the process may wait for a success or failure message. In the event that the posture adjustment fails, the process proceeds to 1782 where a posture adjustment recommendation and failure message is generated (e.g., a message that indicates the recommended posture change, the corresponding entities - e.g., user account(s), and an indication that an automatic posture adjustment failed). In the event that a posture adjustment is successful, the process will proceed to 1776 where a configuration change message is generated that indicates the recommended posture change, the corresponding entities - e.g., user account(s), and that automatic posture adjustment was successful.

In some embodiments, after any successful automatic posture adjustment is made to a corresponding element, the logical representation of the corresponding monitored system (see e.g., data ingest module 1101) is updated to reflect that change such as in response to a configuration change message that specifies the details of the change.

Generally, expert systems are designed to emulate the ability of people to solve complex problems. Expert systems comprise a collection of logic (e.g., if-then rules) to a knowledge base to determine new facts where those rules can independently be applied to facts represented in the knowledge base with relative independence from other logic that makes up at least part of the expert system. Commonly, some of the rules can be used to determine new facts, and those new facts might be relevant to other rules. In this way, an expert system can process relevant information to determine relevant facts.

As one or ordinary skill in the art would understand, expert systems are highly modifiable. Simply adding new rules allows the knowledge system to be used for different functions. Thus, new or modified state-to-state transitions, templates, posturing rules, responses, alerts, automatic actions, retentions policies, commands, and monitoring activities can be included in the system. While the appropriate terminology and syntax is required this expert system approach does not require complex and time consuming database management activities.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

In some embodiments, the approaches illustrated herein may be extended to solving other issues. In particular, if an issue can be turned into a sequence of actions or properties that can be used traverse a set of interrelated states (event if a particular state is only reachable when a condition is satisfied) to reach a designated state then that issue may be solvable using the disclosed techniques.

### EXAMPLE EMBODIMENTS

Further examples of embodiments of the present invention are defined, without limitation, by the following Example Enumerated Embodiments (EEEs):
EEE 1. A method comprising:
   identifying data corresponding a constraint satisfaction problem associated a system;
   generating a software representation of the system based on the data; and
   analyzing the software representation to identify possible solutions to the constraint satisfaction problem associated with the system using a fuzzer to generate inputs to the software representation.
EEE 2. The method of EEE 1, wherein the software representation comprises a source code representation or an executable compiled from the source code representation and represents a plurality of states and transitions between states.
EEE 3. The method of EEE 1 or EEE 2, wherein the software representation comprises a source code representation or an executable compiled from the source code representation and encapsulates a bitmap representing a plurality of states and transitions between states.
EEE 4. The method of any of EEE 1-3, wherein the software representation represents a plurality of parameters or global parameters and access to a plurality of resources is depending upon respective sets of one or more parameters.
EEE 5. The method of any of EEE 1-4, wherein the system is comprises information pertaining to interrelationships between entities.
EEE 6. The method of any of EEE 1-5, wherein the inputs to one or more instances of the software representation are generated by a respective fuzzers.
EEE 7. The method of EEE 6, wherein a plurality of fuzzers operate in parallel to generate input to respective instances of the software representation.
EEE 8. A non-transitory computer readable medium having stored thereon a set of instructions, the set of instructions, when executed by a processor, causing a set of acts comprising:
   identifying data corresponding a constraint satisfaction problem associated a system;
   generating a software representation of the system based on the data; and
   analyzing the software representation to identify possible solutions to the constraint satisfaction problem associated with the system using a fuzzer to generate inputs to the software representation.
EEE 9. The non-transitory computer readable medium of EEE 8, wherein the software representation comprises a source code representation or an executable compiled from the source code representation and represents a plurality of states and transitions between states.
EEE 10. The non-transitory computer readable medium of EEE 8 or EEE 9, wherein the software representation comprises a source code representation or an executable compiled from the source code representation and encapsulates a bitmap representing a plurality of states and transitions between states.
EEE 11. The non-transitory computer readable medium of any of EEE 8-10, wherein the software representation represents a plurality of parameters or global parameters and access to a plurality of resources is depending upon respective sets of one or more parameters.
EEE 12. The non-transitory computer readable medium of any of EEE 8-11, wherein the system is comprises information pertaining to interrelationships between entities.
EEE 13. The non-transitory computer readable medium of any of EEE 8-12, wherein the inputs to one or more instances of the software representation are generated by a respective fuzzers.
EEE 14. The non-transitory computer readable medium of EEE 13, wherein a plurality of fuzzers operate in parallel to generate input to respective instances of the software representation.
EEE 15. A computing system comprising:
   a memory storing a set of instructions; and
   a processor to execute the set of instructions to perform a set of acts comprising:
      identifying data corresponding a constraint satisfaction problem associated a system;
      generating a software representation of the system based on the data; and
      analyzing the software representation to identify possible solutions to the constraint satisfaction problem associated with the system using a fuzzer to generate inputs to the software representation.
EEE 16. The computing system of EEE 15, wherein the software representation comprises a source code representation or an executable compiled from the source code representation and represents a plurality of states and transitions between states.
EEE 17. The computing system of EEE 15 or EEE 16, wherein the software representation comprises a source code representation or an executable compiled from the source code representation and encapsulates a bitmap representing a plurality of states and transitions between states.
EEE 18. The computing system of any of EEE 15-17, wherein the software representation represents a plurality of parameters or global parameters and access to a plurality of resources is depending upon respective sets of one or more parameters.
EEE 19. The computing system of any of EEE 15-18, wherein the system is comprises information pertaining to interrelationships between entities.
EEE 20. The computing system of any of EEE 15-19, wherein the inputs to one or more instances of the software representation are generated by a respective fuzzers.
EEE 21. A method for providing security management for a system using an expert system, the method comprising:
   receiving, at the expert system, a representation of the system; and
   providing security management at the expert system by:
      analyzing the representation to identify actions that could be taken by an attacker;
      processing the actions to identify actions to be monitored at the system;
      monitoring the actions using detections signatures generated by the expert system; and
      wherein the expert system adds facts learned from processing the representation, processing the actions, and monitoring the system to a knowledgebase.
EEE 22. The method of EEE 21, wherein the representation of the system comprises network configuration data and network policy data for a computer network.
EEE 23. The method of EEE 22, wherein the network configuration data specifies access rights allocated to respective groups and the network policy data specifies comprises a set of access rights for group members to access network resources.
EEE 24. The method of any of EEE 21-23, wherein the representation of the system comprises a software representation of a computer network generated based on at least network configuration data and network policy data for the computer network.
EEE 25. The method of EEE 24, wherein the software representation comprises a source code representation or an executable compiled from the source code representation and represents a plurality of states and transitions between states.
EEE 26. The method of any of EEE 21-25, wherein analyzing the analyzing the representation to identify actions that could be taken by an attacker comprises stimulating the representation using a plurality of inputs to identify sets of one or more state changes that reach a target state from a starting state.
EEE 27. The method of any of EEE 21-26, wherein the actions comprise one or more state-to-state transitions representing traversal of the system, modification of the system, or acquisition of access rights in the system.
EEE 28. The method of any of EEE 21-27, wherein monitoring the actions using detection signatures generated by the expert system comprises processing a triggering event received in response to a detection signature detecting an occurrence that satisfies one or more atomic rules by applying a second set of rules to the triggering event to determine whether to generate an alert.
EEE 29. A non-transitory computer readable medium having stored thereon a set of instructions, the set of instructions, when executed by a processor, causing a set of acts for providing security management for a system using an expert system, the set of acts comprising:
   receiving, at the expert system, a representation of the system; and
   providing security management at the expert system by:
      analyzing the representation to identify actions that could be taken by an attacker;
      processing the actions to identify actions to be monitored at the system;
      monitoring the actions using detections signatures generated by the expert system; and
      wherein the expert system adds facts learned from processing the representation, processing the actions, and monitoring the system to a knowledgebase.
EEE 30. The computer readable medium of EEE 29, wherein the representation of the system comprises network configuration data and network policy data for a computer network.
EEE 31. The computer readable medium of EEE 30, wherein the network configuration data specifies access rights allocated to respective groups and the network policy data specifies comprises a set of access rights for group members to access network resources.
EEE 32. The computer readable medium of EEE 30 or EEE 31, wherein the representation of the system comprises a software representation of a computer network generated based on at least network configuration data and network policy data for the computer network.
EEE 33. The computer readable medium of EEE 32, wherein the software representation comprises a source code representation or an executable compiled from the source code representation and represents a plurality of states and transitions between states.
EEE 34. The computer readable medium of any of EEE 29-33, wherein analyzing the analyzing the representation to identify actions that could be taken by an attacker comprises stimulating the representation using a plurality of inputs to identify sets of one or more state changes that reach a target state from a starting state.
EEE 35. The computer readable medium of any of EEE 29-34, wherein the actions comprise one or more state-to-state transitions representing traversal of the system, modification of the system, or acquisition of access rights in the system.
EEE 36. The computer readable medium of any of EEE 29-35, wherein monitoring the actions using detection signatures generated by the expert system comprises processing a triggering event received in response to a detection signature detecting an occurrence that satisfies one or more atomic rules by applying a second set of rules to the triggering event to determine whether to generate an alert.
EEE 37. An expert system for providing security management for a system, the expert system comprising:
   a memory storing a set of instructions; and
   a processor to execute the set of instructions to perform a set of acts comprising:
      receiving, at the expert system, a representation of the system; and
      providing security management at the expert system by:
         analyzing the representation to identify actions that could be taken by an attacker;
         processing the actions to identify actions to be monitored at the system;
         monitoring the actions using detections signatures generated by the expert system; and
         wherein the expert system adds facts learned from processing the representation, processing the actions, and monitoring the system to a knowledgebase.
EEE 38. The expert system of EEE 37, wherein the representation of the system comprises network configuration data and network policy data for a computer network.
EEE 39. The expert system of EEE 38, wherein the network configuration data specifies access rights allocated to respective groups and the network policy data specifies comprises a set of access rights for group members to access network resources.
EEE 40. The expert system of any of EEE 37-39, wherein the representation of the system comprises a software representation of a computer network generated based on at least network configuration data and network policy data for the computer network.

## Claims

1. A method for security reasoning and inference on a network system, the method comprising:
providing an expert system having multiple subsets of a set of logic including at least a monitoring engine, a deployment engine, and a response and alert engine, wherein the expert system further includes a knowledge base; and
using the expert system for security reasoning and inference on the network system at least by:
applying a subset of logic of the monitoring engine to candidate triggers in the knowledge base to determine which state-to-state transitions in the candidate triggers should be monitored and updating the knowledge base to reflect the determination of which state-to-state transitions should be monitored;
applying a subset of logic of the deployment engine to the state-to-state transitions identified for monitoring in the knowledge base to generate detection signatures for the state-to-state transitions and updating the knowledge base to reflect the generated detection signature; and
applying a subset of logic of the response and alert engine to monitor the network system at least by processing detection events and updating the knowledge base to reflect occurrences of corresponding detections.

2. The method of claim 1, wherein the network system is managed using network configuration data and network policy data for a computer network.

3. The method of claim 2, wherein the network configuration data specifies access rights allocated to respective groups and the network policy data specifies a set of access rights for group members to access network resources.

4. The method of claim 2 or claim 3, wherein the candidate triggers are generated using a software representation of the computer network generated based on at least the network configuration data and the network policy data for the computer network.

5. The method of claim 4, wherein the software representation comprises a source code representation or an executable compiled from the source code representation and represents a plurality of states and transitions between states.

6. The method of claim 4 or claim 5, wherein the candidate triggers are generated using the software representation of the computer network but generating inputs to the software representation using a fuzzer to identify one or more action that could be taken by an attacker to reach a target state identified by a crash statement.

7. The method of claim 6, wherein the actions comprise one or more state-to-state transitions representing traversal of the network system, modification of the network system, or acquisition of access rights in the network system.

8. The method of any of claims 1-7, wherein the knowledge base is used to collect information which can be processed to generate facts, maintain rules, or state information relevant to functioning of the security reasoning and inference system and the network system which is being protected by the security reasoning and inference system.

9. The method of any of claims 1-8, wherein the candidate triggers comprise one or more state-to-state transitions that are determined to be possible to monitor in the network system based on network configuration data and network policy data for a computer network.

10. The method of claim 9, wherein updating the knowledge base to reflect the determination of which state-to-state transitions should be monitored comprises updating coverage status values of corresponding state-to-state transitions.

11. The method of any of claims 1-10, wherein generation of detection signatures is performed accessing signature creation templates, and retrieving and processing information to generate populated instances of corresponding signature creation templates comprising detection signatures.

12. The method of claim 11, wherein updating the knowledge base to reflect the generated detection signatures comprises storing generated detection signatures in a signature catalog.

13. The method of claim 12, wherein the generated detection signatures are deployed on the network system.

14. A computer program product embodied on a computer readable medium, the computer readable medium having stored thereon a sequence of instructions which, when executed by a processor causes the processor to execute the method of any of claims 1-13.

15. A system comprising:
a computer processor to execute a set of instructions; and
a memory to hold the set of instructions, in which the set of instructions comprises instructions to perform the method of any of claims 1-13.
